(19) Europäisches Patentamt
European Patent Office
Office européen des brevets

(11) EP 4 235 720 B1

(12) # EUROPEAN PATENT SPECIFICATION

(45) Date of publication and mention of the grant of the patent:
**20.05.2026 Bulletin 2026/21**

(21) Application number: **21882835.8**

(22) Date of filing: **19.10.2021**

(51) International Patent Classification (IPC):
***H01G 11/06*** *(2013.01)* ***H01G 11/30*** *(2013.01)*
***H01G 11/36*** *(2013.01)* ***H01G 11/42*** *(2013.01)*
***H01G 11/62*** *(2013.01)* ***H01G 11/64*** *(2013.01)*
***H01M 8/00*** *(2016.01)* ***H01M 8/04*** *(2016.01)*
***H01M 4/36*** *(2006.01)* ***H01M 4/587*** *(2010.01)*
***H01M 4/62*** *(2006.01)* ***H01M 10/0525*** *(2010.01)*
***H01M 4/02*** *(2006.01)* ***H01G 11/32*** *(2013.01)*
***H01G 11/38*** *(2013.01)* ***H01G 11/50*** *(2013.01)*
***H01M 4/133*** *(2010.01)*

(52) Cooperative Patent Classification (CPC):
**H01G 11/36; H01G 11/06; H01G 11/38; H01G 11/50; H01G 11/64; H01M 4/133; H01M 4/366; H01M 4/587; H01M 4/625; H01M 10/0525;** H01G 11/32; H01G 11/62; H01M 2004/021; Y02B 90/10; Y02E 60/10; (Cont.)

(86) International application number:
**PCT/JP2021/038655**

(87) International publication number:
**WO 2022/085694 (28.04.2022 Gazette 2022/17)**

(54) **NONAQUEOUS ALKALI METAL POWER STORAGE ELEMENT AND POSITIVE ELECTRODE COATING LIQUID**

WASSERFREIES ALKALIMETALL-STROMSPEICHERELEMENT UND POSITIVELEKTRODENBESCHICHTUNGSFLÜSSIGKEIT

ÉLÉMENT DE STOCKAGE D’ÉNERGIE EN MÉTAL ALCALIN NON AQUEUX ET LIQUIDE DE REVÊTEMENT D’ÉLECTRODE POSITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 JP 2020176683**
**21.10.2020 JP 2020176800**
**18.11.2020 JP 2020191422**

(43) Date of publication of application:
**30.08.2023 Bulletin 2023/35**

(73) Proprietor: **Asahi Kasei Kabushiki Kaisha**
**Tokyo 1000006 (JP)**

(72) Inventors:
- **NAKAMURA, Fumiya**
  **Tokyo 100-0006 (JP)**
- **UMETSU, Kazuteru**
  **Tokyo 100-0006 (JP)**
- **TAKADA, Kazuaki**
  **Tokyo 100-0006 (JP)**

(74) Representative: **dompatent Partnerschaft von Patentanwälten und Rechtsanwälten mbB**
**Deichmannhaus am Dom**
**Bahnhofsvorplatz 1**
**50667 Köln (DE)**

(56) References cited:
**EP-A1- 1 330 566** **EP-A1- 3 333 946**
**EP-A1- 3 712 916** **EP-B1- 1 330 566**
**WO-A1-2017/199884** **CN-A- 105 489 843**
**CN-A- 111 081 479** **JP-A- 2007 200 979**
**JP-A- 2008 007 387** **JP-A- 2011 213 556**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**JP-A- 2014 019 619**
**JP-A- 2014 099 597**
**JP-A- 2015 156 293**
**JP-A- 2017 016 883**
**JP-A- 2018 522 803**
**JP-A- 2019 029 420**
**JP-A- 2020 155 335**
**KR-A- 20160 069 458**
**US-A1- 2016 172 122**

- **LANDI BRIAN J. ET AL: "Lithium Ion Capacity of Single Wall Carbon Nanotube Paper Electrodes", THE JOURNAL OF PHYSICAL CHEMISTRY C, vol. 112, no. 19, 23 April 2008 (2008-04-23), US, pages 7509 - 7515, XP093044518, ISSN: 1932-7447, DOI: 10.1021/jp710921k**

(52) Cooperative Patent Classification (CPC): (Cont.)
Y02E 60/13; Y02E 60/50; Y02T 90/167; Y04S 30/12

**Description**

FIELD

The present disclosure relates to a nonaqueous alkali metal power storage element and a positive electrode coating liquid.

BACKGROUND

In recent years, from the viewpoint of effective use of energy aiming at conservation of the global environment and resource saving, power smoothing systems for wind power generation or late-night power storage systems, household distributed power storage systems based on photovoltaic power generation technology, and power storage systems for electric vehicles are attracting attention. High energy density is a primary requirement for batteries used in these power storage systems. As a leading candidate for high energy density batteries which can meet such demands, the development of lithium-ion batteries is being actively advanced. A second requirement is high output characteristics. For example, in a combination of a high-efficiency engine and a power storage system (e.g., a hybrid electric vehicle) or a combination of a fuel cell and a power storage system (e.g., a fuel cell electric vehicle), there is a demand for a power storage system which exhibits high output discharge characteristics during acceleration. Currently, electric double layer capacitors and nickel-metal hydride batteries are being developed as high-power storage devices.

Among electric double layer capacitors, those using activated carbon in the electrodes have an output characteristic of 0.5 to 1 kW/L. These electric double layer capacitors have not only high output characteristics, but also have high durability (cycle characteristics and high temperature storage characteristics), and have been considered optimal devices in the fields described above, where high output is required. However, since the energy density thereof is only 1 to 5 Wh/L, it is necessary to further improve the energy density thereof.

Nickel-metal hydride batteries, which are currently commonly used in hybrid electric vehicles, have a high output equivalent to that of electric double layer capacitors and an energy density of approximately 160 Wh/L. However, research is being actively pursued to further increase the energy density and output characteristics thereof, as well as their durability (in particular, stability at high temperatures).

In lithium-ion batteries, research is being carried out toward higher output. For example, there has been developed a lithium-ion battery which provides a high output exceeding 3 kW/L at a depth of discharge (i.e., the ratio (%) of the amount of discharge to the discharge capacity of the storage element) of 50%. However, the energy density thereof is 100 Wh/L or less, and the design deliberately suppresses high energy density, which is the greatest feature of lithium-ion batteries. Since the durability thereof (cycle characteristics and high-temperature storage characteristics) is inferior to electric double layer capacitors, such lithium-ion batteries are used with a depth of discharge narrower than the range of 0 to 100% in order to have practical durability. Since the capacity of lithium-ion batteries which can actually be utilized is even smaller, research to further improve the durability thereof is being vigorously pursued.

As described above, there is a strong demand for practical use of an electric storage device having high energy density, high output characteristics, and high durability. However, since the existing electric storage elements described above each have advantages and disadvantages, there is a demand for new electric storage elements which satisfy these technical requirements. As a promising candidate, electric storage elements referred to as "lithium-ion capacitors" have attracted attention and are being actively developed. Lithium-ion capacitors are a type of power storage element using a nonaqueous electrolyte containing lithium salt (hereinafter also referred to as a "nonaqueous alkali metal power storage element"), in which charging and discharging are carried out by means of, in the positive electrode, a non-Faraday reaction due to adsorption and desorption of anions at 3 V or more, similar to electric double layer capacitors, and in the negative electrode, a Faraday reaction due to the absorption and release of lithium-ions, similar to lithium-ion batteries.

Summarizing the electrode materials commonly used in the storage devices described above and their characteristics, in general, when a material such as activated carbon is used in the electrodes and charge and discharge are performed by the adsorption and desorption of ions on the activated carbon surface (a non-Faraday reaction), high output and high durability can be obtained, but the energy density is low (for example, one-fold). Conversely, when an oxide or a carbon material is used in the electrodes and charge and discharge are performed by a Faraday reaction, the energy density is high (for example, 10-fold higher than a non-Faraday reaction using activated carbon), but there are problems regarding durability and output characteristics.

As a combination of these electrode materials, electric double layer capacitors are characterized by the use of activated carbon (one-fold energy density) for both the positive electrode and negative electrode, and charging and discharging is carried out by a non-Faraday reaction for both the positive and negative electrodes, and thus, they have a feature of high output and high durability, but low energy density (one-fold positive electrode × one-fold negative electrode = 1).

Lithium-ion secondary batteries are characterized by the use of a lithium transition metal oxide (10-fold energy

density) for the positive electrode and a carbon material (10-fold energy density) for the negative electrode, and thus, though they have a high energy density (10-fold positive electrode × 10-fold negative electrode = 100), there are problems regarding output characteristics and durability. Furthermore, in order to satisfy the high durability required for hybrid electric vehicles, the depth of discharge must be limited, and lithium-ion secondary batteries can only utilize 10 to 50% of that energy.

Titanium-ion capacitors are characterized by the use of activated carbon (one-fold energy density) for the positive electrode and a carbon material (10-fold energy density) for the negative electrode, and charging and discharging are carried out by a non-Faraday reaction for the positive electrode and a Faraday reaction for the negative electrode, and thus, they are asymmetric capacitors having the characteristics of an electric double layer capacitor and a lithium-ion secondary battery. While lithium-ion capacitors have high output and high durability, they high energy density (one-fold positive electrode × 10-fold negative electrode = 10), and they have a feature in that there is no need to limit the depth of discharge, unlike lithium-ion secondary batteries.

Regarding further enhancement of the output and durability of lithium-ion capacitors, for example, Patent Literature 1 describes that in order to increase the output of lithium-ion capacitors, a film consisting of carbon nanotubes and carboxymethyl cellulose is formed on the surface of a negative electrode active material, and the blending amount thereof, as a weight ratio, is carboxymethyl cellulose/carbon nanotubes = 1.5 to 7.0. Patent Literature 2 describes a lithium-ion capacitor comprising a positive electrode and a negative electrode which are composed of graphene and carbon nanotubes to improve energy density. Patent Literature 3 describes a high-capacity and high-output positive electrode precursor, in which the decomposition of alkali metal compounds contained in the positive electrode precursor is promoted. Patent Literature 4 describes a technology of including a phosphate ester amide in a nonaqueous electrolyte in order to suppress the decomposition of $LiPF_6$ at high temperatures. Patent Literature 5 describes a lithium-ion capacitor having a positive electrode and a negative electrode which are composed of graphene and carbon nanotubes to improve energy density. Patent Literature 6 describes a high-capacity and high-output positive electrode precursor, in which the decomposition of alkali metal compounds contained in the positive electrode precursor is promoted. Patent Literature 7 describes an electrode for electrical storage devices which comprises at least one active material selected from the group consisting of carbon nanotubes, activated carbon, hard carbon, graphite, graphene, and carbon nanohorns, an ionic liquid, and a three-dimensional mesh-like porous body. Patent Literature 8 describes an electrolytic solution containing a lithium fluorophosphate-based additive, a sulfone ester-based additive, and a copper compound, and an electric storage element. Patent Literature 9 describes a high-capacity, high-output positive electrode in which the decomposition of alkali metal compounds contained in the positive electrode is promoted.

Regarding a coating liquid for forming a positive electrode active material layer of a lithium-ion capacitor (hereinafter also referred to as a "positive electrode coating liquid"), for example, Patent Literature 10 proposes a positive electrode coating liquid containing a carbon material, an alkali metal compound, and polyacrylic acid as a binder, in which the thixotropic index changes within a certain range over time. Patent Literature 11 proposes a carbon nanotube dispersion containing a dispersion material, a solvent, and carbon nanotubes having specific physical properties, and a nonaqueous electrolyte secondary battery in which at least one of the positive/negative electrodes contains the dispersion. Patent Literature 12 discloses a carbon nanotube dispersion containing a polymer dispersion material, an organic solvent, and carbon nanotubes, which has specific viscosity characteristics.

[CITATION LIST]

[PATENT LITERATURE]

[PTL 1] Japanese Unexamined Patent Publication (Kokai) No. 2015-156293
[PTL 2] WO 2018/147080
[PTL 3] WO 2017/126687
[PTL 4] WO 2013/187073
[PTL 5] WO 2018/147080
[PTL 6] WO 2017/126687
[PTL 7] WO 2013/73526
[PTL 8] WO 2017/038406
[PTL 9] WO 2017/126687
[PTL 10] WO 2019/156090
[PTL 11] WO 2021/080006
[PTL 12] WO 2020/129872

[NONPATENT LITERATURE]

[NPL 1] E.P. Barrett, L.G. Joyner and P. Halenda, "The Determination of Pore Volume and Area Distributions in Porous Substances. I. Computations from Nitrogen Isotherms", J. Am. Chem. Soc., (1951), 73 (1), pp. 373-380
[NPL 2] B.C. Lippens and J.H. de Boer, "Studies on Pore Systems in Catalysts", J. Catalysis, (1965), 4, pp. 319-323
[NPL 3] R.S. Mikhail, S. Brunauer and E.E. Bodor, "Investigations of a Complete Pore Structure Analysis", J. Colloid Interface Sci., (1968), 26, pp. 45-53

SUMMARY

[TECHNICAL PROBLEM]

However, none of these prior art documents describe how to reduce ion diffusion resistance and suppress an increase in electron transfer resistance at high temperatures in nonaqueous alkali metal power storage elements containing carbon nanotubes in the active material layer.

Furthermore, none of these prior art documents describe a positive electrode coating liquid containing carbon nanotubes which achieves both improved energy density and improved output characteristics.

In light of the above circumstances, one aspect of the present disclosure aims to provide a nonaqueous alkali metal power storage element having reduced ion diffusion resistance and suppressed increase in electron transfer resistance at high temperatures.

Another aspect of the present disclosure aims to provide a positive electrode coating liquid containing carbon nanotubes, which leads to the provision of a nonaqueous alkali metal power storage element having high energy density and high output characteristics.

[SOLUTION TO PROBLEM]

The present invention provides a non-aqueous alkali metal power storage element according to claim 1, a power storage module according to claim 5, an use of the power storage module according to claim 6 and an use of positive electrode coating liquid in the production of a non-aqueous alkali power storage element according to claim 7. Embodiments of the invention are set forth with the appended dependent claims.

[ADVANTAGEOUS EFFECTS OF INVENTION]

According to the present disclosure, one aspect provides a nonaqueous alkali metal power storage element of claim 1 with reduced ion diffusion resistance and suppressed increase in electron transfer resistance at high temperatures. In another aspect, according to the present disclosure, there is provided a positive electrode coating liquid containing carbon nanotubes, which leads to the provision of nonaqueous alkali metal power storage elements with high energy density and high output characteristics. A positive electrode coating liquid which contains single-wall carbon nanotubes and has both dispersibility and viscosity stability can be produced, and as a result, it is possible to reduce the ion diffusion resistance, increase the bulk density of the electrode, and improve the conductivity of the electrode after application of the coating liquid. Further, there can be provided a nonaqueous alkali metal power storage element in which an increase in electron transfer resistance in an environment of 80 °C or higher and 4.1 V or higher is suppressed by controlling the content of the single-wall carbon nanotubes in the positive and negative electrode, and which has high input/output characteristics and high pre-doping amount, and low capacity deterioration and resistance increase at high temperature and high voltage.

BRIEF DESCRIPTION OF DRAWINGS

FIG. 1 is an SEM image of negative electrode 1-5 of Example 1 captured at a magnification of 20,000.
FIG. 2 is an SEM image of positive electrode precursor 1-9 of the Examples captured at a magnification of 20,000.
FIG. 3 is a viscosity curve of positive electrode coating liquid 4-1.
FIG. 4 is a viscosity curve of positive electrode coating liquid 4-4.
FIG. 5 is a viscosity curve of positive electrode coating liquid 4-7.
FIG. 6 is a viscosity curve of positive electrode coating liquid 4-10.

DESCRIPTION

The embodiments of the present disclosure will be described in detail below, but the present disclosure is not limited to the present embodiment but by the appended claims. The upper limit value and lower limit value of each numerical value range of the present disclosure can arbitrarily be combined to construct arbitrary numerical value ranges.

<<Nonaqueous Alkali Metal Power Storage Element>>

The nonaqueous alkali metal power storage element of the present disclosure comprises, as primary components, a positive electrode, a negative electrode, a separator, and a nonaqueous electrolyte. As the nonaqueous electrolyte, a solution of alkaline metal ions dissolved in an organic solvent is used.

<Positive Electrode>

The positive electrode comprises a positive electrode current collector, and a positive electrode active material layer provided on one surface or both surfaces of the positive electrode current collector. The positive electrode active material layer contains: a positive electrode active material comprising activated carbon as a main component; and carbon nanotubes.

As will be described later, it is preferable to pre-dope the negative electrode with alkaline metal ions during the assembly process of the power storage element, and as a method for such pre-doping, it is preferable that after a power storage element is assembled using a positive electrode precursor containing an alkali metal compound, a negative electrode, a separator, an exterior body, and a nonaqueous electrolyte, a voltage be imparted between the positive electrode precursor and the negative electrode. In this case, the alkali metal compound may be contained in the positive electrode precursor in any form. For example, the alkali metal compound may be present between the positive electrode current collector and the positive electrode active material layer, may be present on the surface of the positive electrode active material layer, and may be present in the positive electrode active material layer. The alkali metal compound is preferably contained in the positive electrode active material layer formed on the positive electrode current collector of the positive electrode precursor. In such an embodiment, pre-doping of the negative electrode with alkali metal ions is accompanied by the formation of cavities in the positive electrode active material layer, increasing the effective area of the positive electrode active material layer. In the present description, the positive electrode prior to the alkali metal doping process is defined as the "positive electrode precursor", and the positive electrode after the alkali metal doping process is defined as the "positive electrode."

[Positive Electrode Active Material Layer]

The positive electrode active material layer comprises a positive electrode active material comprising activated carbon as a main component and carbon nanotubes. The positive electrode active material layer preferably further comprises an alkali metal compound. In addition to these, the positive electrode active material layer may further contain the optional components described below, if needed.

(Positive Electrode Active Material)

The positive electrode active material contains activated carbon as a main component. The term "active material containing...as a main component" means the component having the highest wt% among materials capable of intercalating and de-intercalating alkali metal ions (positive electrode active material). The positive electrode active material may further contain graphene, a conductive polymer, and a lithium transition metal oxide in addition to activated carbon.

Though the type of the activated carbon and the raw materials thereof are not particularly limited, it is preferable to optimally control the pores of the activated carbon in order to achieve both high input/output characteristics and high energy density. Specifically, when the mesopore volume derived from pores having a diameter of 20 angstrom or more and 500 angstrom or less as calculated by the BJH method is defined as $V_1$ (cc/g), and the micropore volume derived from pores having a diameter of less than 20 angstrom as calculated by the MP method is defined as $V_2$ (cc/g):

(1) for high input/output characteristics, an activated carbon (hereinafter referred to as activated carbon 1) which satisfies $0.3 < V_1 \leq 0.8$ and $0.5 \leq V_2 \leq 1.0$ and which has a specific surface area of 1,500 $m^2/g$ or more and 3,000 $m^2/g$ or less as measured by the BET method is preferable, and
(2) in order to obtain high energy density, an activated carbon (hereinafter referred to as activated carbon 2) which satisfies $0.8 < V_1 \leq 2.5$ and $0.8 < V_2 \leq 3.0$ and which has a specific surface area of 2,300 $m^2/g$ or more and 4,000 $m^2/g$ or less as measured by the BET method is preferable.

The BET specific surface area, mesopore volume, micropore volume, and average pore diameter of the active material are values obtained by the following methods. A sample is vacuum-dried at 200 °C for a day and a night, and the adsorption and desorption isotherms are measured using nitrogen as the adsorbate. Using the adsorption-side isotherm obtained here, the BET specific surface area is calculated by the BET multi-point method or the BET single-point method, the mesopore content is calculated by the BJH method, and the micropore content is calculated by the MP method. The BJH method is a calculation method generally used for analyzing mesopores, and was proposed by Barrett, Joyner, Halenda et al. (Non-Patent Literature 1). The MP method means a method for determining the micropore volume, micropore area, and micropore distribution using the "t-plot method" (Non-Patent Literature 2), which is a method devised by R.S. Mikhail, Brunauer, and Bodor (Non-Patent Literature 3). The average pore diameter refers to the value obtained by measuring each equilibrium adsorption amount of nitrogen gas under each relative pressure at liquid nitrogen temperature, and dividing the total pore volume per weight of the sample by the BET specific surface area.

(Activated Carbon 1)

The mesopore volume $V_1$ of the activated carbon 1 is preferably greater than 0.3 cc/g in order to increase the input/output characteristics when the positive electrode material is incorporated into a power storage element. $V_1$ is preferably 0.8 cc/g or less from the viewpoint of suppressing a decrease in the bulk density of the positive electrode. $V_1$ is more preferably 0.35 cc/g or more and 0.7 cc/g or less, and further preferably 0.4 cc/g or more and 0.6 cc/g or less. The micropore volume $V_2$ of the activated carbon 1 is preferably 0.5 cc/g or more in order to increase the specific surface area of the activated carbon and increase the capacity. $V_2$ is preferably 1.0 cc/g or less from the viewpoint of suppressing the volume of the activated carbon, increasing density as an electrode, and increasing the capacity per unit volume. $V_2$ is more preferably 0.6 cc/g or more and 1.0 cc/g or less, and further preferably 0.8 cc/g or more and 1.0 cc/g or less. The ratio ($V_1/V_2$) of the mesopore volume $V_1$ to the micropore volume $V_2$ is preferably in the range of $0.3 \leq V_1/V_2 \leq 0.9$. Specifically, $V_1/V_2$ is preferably 0.3 or more from the viewpoint of increasing the ratio of the mesopore volume to the micropore volume to such an extent that deterioration of the output characteristics can be suppressed while maintaining a high capacity. Conversely, $V_1/V_2$ is preferably 0.9 or less from the viewpoint of increasing the ratio of the micropore volume to the mesopore volume to the extent that a decrease in capacity can be suppressed while maintaining high output characteristics. A more preferable range of $V_1/V_2$ is $0.4 \leq V_1/V_2 \leq 0.7$, and a further preferable range of $V_1/V_2$ is $0.55 \leq V_1/V_2 \leq 0.7$.

The average pore diameter of the activated carbon 1 is preferably 17 angstrom or more, more preferably 18 angstrom or more, and most preferably 20 angstrom or more, from the viewpoint of maximizing the output of the obtained power storage element. From the viewpoint of maximizing capacity, the average pore diameter of the activated carbon 1 is preferably 25 angstrom or less. The BET specific surface area of the activated carbon 1 is preferably 1,500 $m^2$/g or more and 3,000 $m^2$/g or less, more preferably 1,500 $m^2$/g or more and 2,500 $m^2$/g or less. When the BET specific surface area is 1,500 $m^2$/g or more, suitable energy density can easily be obtained, and conversely, when the BET specific surface area is 3,000 $m^2$/g or less, since it is not necessary to add a large amount of binder to maintain the strength of the electrode, the performance per volume of the electrode increases.

The activated carbon 1 having the characteristics described above can be obtained, for example, using the raw materials and processing methods described below. The carbon source used as a raw material for the activated carbon 1 is not particularly limited. Examples thereof include plant-based raw materials such as wood, wood flour, coconut shell, pulp production byproducts, bagasse, and blackstrap molasses; fossil-based raw materials such as peat, lignite, brown coal, bituminous coal, anthracite, petroleum distillation residue components, petroleum pitch, coke, and coal tar; various synthetic resins such as phenol resin, vinyl chloride resin, vinyl acetate resin, melamine resin, urea resin, resorcinol resin, celluloid, epoxy resin, polyurethane resin, polyester resin, and polyamide resin; synthetic rubbers such as polybutylene, polybutadiene, polychloroprene; and other synthetic woods and synthetic pulps and carbonized products of these. Among these raw materials, plant-based raw materials such as coconut shell and wood flour, and carbonized products thereof are preferable, and coconut shell carbonized products are particularly preferable from the viewpoint of mass production and cost.

As a method of carbonization and activation for turning these raw materials into the activated carbon 1, known methods such as a fixed bed method, a moving bed method, a fluidized bed method, a slurry method, and a rotary kiln method can be adopted. Examples of the method of carbonizing these raw materials includes a method of firing at 400 to 700 °C (preferably 450 to 600 °C) for 30 minutes to 10 hours using an inert gas such as nitrogen, carbon dioxide, helium, argon, xenon, neon, carbon monoxide, flue gas, or mixtures of these inert gases with other gases as main components. As the method for activating the carbonized product obtained by the carbonization method described above, a gas activation method of firing using an activation gas such as water vapor, carbon dioxide, or oxygen is preferably used. Among these, a method using water vapor or carbon dioxide as the activating gas is preferable. In this activation method, the obtained carbonized product is preferably activated by raising the temperature to 800 to 1,000 °C over 3 to 12 hours (preferably 5 to 11 hours, and more preferably 6 to 10 hours) while supplying the activation gas at a rate of 0.5 to 3.0 kg/h (preferably 0.7 to 2.0 kg/h). The carbonized product may be preliminarily subjected to primary activation prior to the activation treatment of

the carbonized product described above. In this primary activation, a method of calcining the carbon material at a temperature of less than 900 °C using an activation gas such as water vapor, carbon dioxide, or oxygen for gas activation is preferably employed. Activated carbon 1 can be produced by appropriately combining the firing temperature and firing time in the carbonization method described above with the activation gas supply rate, temperature increase rate and maximum activation temperature in the activation method.

The average particle size of the activated carbon 1 is preferably 2 to 20 μm. When the average particle size is 2 μm or more, the density of the active material layer is high, whereby the capacity per electrode volume tends to be high. When the average particle size is small, in some cases, the drawback of low durability is caused, but if the average particle size is 2 μm or more, such a drawback is unlikely to occur. Conversely, when the average particle size is 20 μm or less, there is a tendency toward suitability for high-speed charging and discharging. The average particle size of the activated carbon 1 is more preferably 2 to 15 μm, and further preferably 3 to 10 μm.

(Activated Carbon 2)

The mesopore volume $V_1$ of the activated carbon 2 is preferably greater than 0.8 cc/g from the viewpoint of increasing the output characteristics when the positive electrode material is incorporated into a power storage element. $V_1$ is preferably 2.5 cc/g or less from the viewpoint of suppressing a decrease in the capacity of the power storage element. V1 is more preferably 1.00 cc/g or more and 2.0 cc/g or less, and further preferably 1.2 cc/g or more and 1.8 cc/g or less. The micropore volume $V_2$ of the activated carbon 2 is preferably greater than 0.8 cc/g in order to increase the specific surface area of the activated carbon and increase capacity. From the viewpoint of increasing the density of activated carbon as an electrode and increasing the capacity per unit volume, $V_2$ is preferably 3.0 cc/g or less. $V_2$ is more preferably greater than 1.0 cc/g and less than or equal to 2.5 cc/g, and further preferably greater than or equal to 1.5 cc/g and less than or equal to 2.5 cc/g. The activated carbon 2 having the mesopore volume and micropore volume described above has a higher BET specific surface area than the activated carbon used for conventional electric double layer capacitors or lithium-ion capacitors. The specific value of the BET specific surface area of the activated carbon 2 is preferably 2,300 $m^2$/g or more and 4,000 $m^2$/g or less, more preferably 3,000 $m^2$/g or more and 4,000 $m^2$/g or less, and further preferably 3,200 $m^2$/g or more and 3,800 $m^2$/g or less. When the BET specific surface area is 2,300 $m^2$/g or more, suitable energy density can easily be obtained, and when the BET specific surface area is 4,000 $m^2$/g or less, since it is not necessary to add a large amount of binder to maintain the strength of the electrode, the performance per electrode volume is high.

The activated carbon 2 can be obtained, for example, using the raw materials and processing methods as described below. The carbon material used as a raw material for activated carbon 2 is not particularly limited as long as it is a carbon source which is conventionally used as a raw material for activated carbon, and examples thereof include plant-based raw materials such as wood, wood flour, and coconut shell; fossil-based raw materials such as petroleum pitch and coke; and various synthetic resins such as phenol resin, furan resin, vinyl chloride resin, vinyl acetate resin, melamine resin, urea resin, and resorcinol resin. Among these raw materials, phenolic resin and furan resin are particularly preferable because they are suitable for producing activated carbon having a high specific surface area.

The method for carbonizing these raw materials or method for heating during activation include known methods such as a fixed bed method, a moving bed method, a fluidized bed method, a slurry method, and a rotary kiln method. As the atmosphere during heating, an inert gas such as nitrogen, carbon dioxide, helium, or argon, or a gas containing these inert gases as a main component and mixed with other gases can be used. Generally, the carbonization temperature is about 400 to 700 °C and firing is performed for about 0.5 to 10 hours. Activation methods for the carbonized product include a gas activation method in which activating gases such as water vapor, carbon dioxide, and oxygen are used for calcination, and an alkali metal activation method in which heat treatment is performed after mixing with an alkali metal compound, and alkali metal activation is preferable for producing an activated carbon having a high specific surface area. In this activation method, after mixing the carbonized product and the alkali metal compound such as KOH or NaOH so that the weight ratio is 1:1 or more (the amount of the alkali metal compound is the same as or greater than the amount of the carbonized product), heating is carried out for 0.5 to 5 hours in the range of 600 to 900 °C in an inert gas atmosphere, and thereafter, the alkali metal compound may be washed off with acid and water, and dried. In order to increase the amount of micropores without an increase in the amount of mesopores, it is recommended to mix a large amount of the carbonized product with KOH during activation. To increase both the micropore volume and the mesopore volume, it is recommended to use a larger amount of KOH. In order to mainly increase the mesopore volume, it is preferable to perform steam activation after performing alkali activation treatment. The average particle size of the activated carbon 2 is preferably 2 μm or more and 20 μm or less. More preferably, it is 3 μm or more and 10 μm or less.

(Activated Carbon Utilization)

Each of the activated carbons 1 and 2 may be one type of activated carbon or may be a mixture of two or more types of activated carbon, and the mixture as a whole may exhibit the respective characteristic values described above.

Either of the activated carbons 1 and 2 may be selected and used, or a mixture of the two may be used. The positive electrode active material may contain materials other than the activated carbons 1 and 2 (for example, an activated carbon lacking the specific $V_1$ and/or $V_2$ described above, or a material other than activated carbon (e.g., a conductive polymer)). In an exemplary embodiment, the total content of the activated carbons 1 and 2 is preferably 40.0 wt% or more and 70.0 wt% or less, and more preferably 45.0 wt% or more and 65.0 wt% or less. When this value is 40.0 wt% or more, the energy density can be increased. When this value is 70.0 wt% or less, high temperature durability and high voltage durability can be improved.

(Carbon Nanotubes)

The positive electrode active material layer contains carbon nanotubes. The carbon nanotubes contained in the positive electrode active material layer may be the same as or different from the carbon nanotubes contained in the negative electrode active material layer. Various properties can be improved by including carbon nanotubes in the positive electrode active material layer. Examples of properties which can be improved include increased durability by improving decomposition reaction efficiency of alkali metal compound, which is different from positive electrode active material, suppressing deactivation of alkali metal ions, suppressing binder deterioration at high temperatures, an increase in output by lowering the internal resistance of nonaqueous lithium power storage elements, improved processability by improving the peeling strength of electrodes, suppressing deterioration due to electrode peeling during durability tests, and suppressing the amount of gas generated during high-temperature durability tests.

As the carbon nanotubes, single-wall carbon nanotubes and multilayer carbon nanotubes are preferably used, and single-wall carbon nanotubes are particularly preferably used. The average fiber diameter of the carbon nanotubes is preferably 1 nm or more and less than 20 nm, more preferably 1.5 nm or more and 15 nm or less. When the average fiber diameter is 1 nm or more, the dispersibility of the carbon nanotubes is improved. When the average fiber diameter is less than 20 nm, a nonaqueous alkali metal power storage element having better input/output characteristics can be provided.

The carbon nanotubes have a bundle structure in which single-wall carbon nanotubes are bundled (hereinafter also referred to as "bundled single-wall carbon nanotubes"). Though the fiber length of one single-wall carbon nanotube is several microns, the bundled single-wall carbon nanotubes are estimated to have a fiber length of several microns to several tens of microns due to connecting or twisting of a plurality of single-wall carbon nanotubes. The average fiber diameter of the bundled single-wall carbon nanotubes is 5 nm or more and 20 nm or less, preferably 6 nm or more and 17 nm or less, and more preferably 7 nm or more and 14 nm or less. Bundled single-wall carbon nanotubes tend to form agglomerates like balls of thread, and when the average fiber diameter of the bundled single-wall carbon nanotubes is 5 nm or more, dispersibility is improved, which tends to suppress the formation of aggregates such as balls of thread, and when it is 20 nm or less, it is possible to improve the binding property and electronic conductivity between the active material particles. The carbon nanotubes can be synthesized by an appropriate method such as a chemical vapor deposition method, an arc discharge method, or a laser vaporization method.

The carbon nanotubes preferably cover the surface of the positive electrode active material in a mesh-like pattern, and it is also preferable that the carbon nanotubes crosslink the positive electrode active materials. The term "mesh-like" means that a plurality of carbon nanotubes and/or bundled single-wall carbon nanotubes intersect each other in various directions on the surface of the active material to form a mesh-like structure in which a portion is covered with the carbon nanotubes and a portion where the active material is exposed.

When the content of the carbon nanotubes in the positive electrode active material layer is defined as A (wt%) and the total weight of the positive electrode active material layer is 100 wt%, it is preferable that $0.010 \leq A \leq 0.200$, more preferably $0.015 \leq A \leq 0.170$, and further preferably $0.020 \leq A \leq 0.150$. When A is 0.010 or more, adhesion between particles of the positive electrode active material and electronic conductivity are improved, an increase in resistance at 80 °C or higher can be suppressed, and by promoting the decomposition of the alkali metal compound contained in the positive electrode active material layer, the decomposition of the electrolyte can be suppressed and the pre-doping amount of alkali metal ions to the negative electrode can be increased. When A is 0.200 or less, the carbon nanotubes do not excessively cover the positive electrode active material particles, and since the amount of SEI (solid electrolyte interface) generated on the carbon nanotubes in the entirety of the positive electrode active material layer is reduced, ion diffusion resistance can be reduced.

The content A of the carbon nanotubes in the positive electrode active material layer may be the same as the content B of the carbon nanotubes in the negative electrode active material layer ($A = B$), may be less than B ($A < B$) or may be more than B, and is preferably more than B ($A > B$). The positive electrode of the nonaqueous alkali metal power storage element is charged and discharged primarily by electrostatic adsorption and desorption of ions, while the negative electrode is charged and discharged by a faradaic reaction of alkali metal ions. As a result, the negative electrode, due to the presence of charge transfer resistance to alkali metal ions, has higher resistance than the positive electrode. Thus, by reducing the resistance of the negative electrode, the resistance of the nonaqueous alkali metal power storage element can be further reduced. As described above, excessive coating of carbon nanotubes on the active material particles

increases resistance. Thus, presumably, by setting the content B of carbon nanotubes in the negative electrode active material layer to less than the content A of carbon nanotubes in the positive electrode active material layer, the resistance balance of the positive electrode and negative electrode can be optimized and the resistance of the nonaqueous alkali metal power storage element can be reduced.

The carbon nanotubes are preferably uniformly distributed on the surface and between the particles of the positive electrode active material. By uniformly dispersing the carbon nanotubes on the surface and between the particles of the positive electrode active material, the electronic conductivity and adhesion between the particles of the positive electrode active material can be increased, and the binder content can be reduced. Since the binder gradually decomposes under in high temperature environments of 80 °C or higher or high voltage environments of 4.1 V or higher, by reducing the content of the binder, high temperature durability of 80 °C or higher and high voltage durability of 4.1 V or higher can be imparted.

A method for uniformly dispersing carbon nanotubes on the surface of the positive electrode active material, there is a method of adding a compound containing a small amount of copper atoms when preparing a carbon nanotube dispersion or when preparing a slurry-like positive electrode coating liquid. By adding a compound containing copper atoms, copper coordinates with the coordinating functional groups such as carboxyl groups and amino groups of the carbon nanotubes to form a complex, which can help the solvation of the coating liquid in the dispersion solvent by de-aggregating the carbon nanotubes. This operation allows the carbon nanotubes to be uniformly dispersed on the surface of the positive electrode active material. By uniformly dispersing the carbon nanotubes, the electron conductivity and adhesion between the positive electrode active material particles can be improved, the output of the obtained power storage element can be increased, the amount of the binder to be mixed can be reduced, and the decomposition reaction of the alkaline metal compound other than the positive electrode active material can be promoted.

(Lithium Transition Metal Oxide)

The positive electrode active material layer preferably further contains a lithium transition metal compound. By including a lithium transition metal oxide, the capacity of the nonaqueous alkali metal power storage element can be increased. Lithium transition metal oxides include transition metal oxides which can store and release lithium. The transition metal oxide used as the positive electrode active material is not particularly limited. Examples of transition metal oxides include oxides containing at least one element selected from the group consisting of cobalt, nickel, manganese, iron, vanadium, and chromium. Specific examples of transition metal oxides include compounds represented by the following formulas:

$Li_xCoO_2$ (where x satisfies $0 \leq x \leq 1$),
$Li_xNiO_2$ (where x satisfies $0 \leq x \leq 1$),
$Li_xNi_yM_{(1-y)}O_2$ (where M is at least one element selected from the group consisting of Co, Mn, Al, Fe, Mg, and Ti, x satisfies $0 \leq x \leq 1$, and y satisfies $0.05 < y < 0.97$),
$Li_xNi_{1/3}Co_{1/3}Mn_{1/3}O_2$ (where x satisfies $0 \leq x \leq 1$),
$Li_xMnO_2$ (where x satisfies $0 \leq x \leq 1$),
$\alpha$-$Li_xFeO_2$ (where x satisfies $0 \leq x \leq 1$),
$Li_xVO_2$ (where x satisfies $0 \leq x \leq 1$),
$Li_xCrO_2$ (where x satisfies $0 \leq x \leq 1$),
$Li_xFePO_4$ (where x satisfies $0 \leq x \leq 1$),
$Li_xMnPO_4$ (where x satisfies $0 \leq x \leq 1$),
$Li_zV_2(PO_4)_3$ (where z satisfies $0 \leq z \leq 3$),
$Li_xMn_2O_4$ (where x satisfies $0 \leq x \leq 1$),
$Li_xM_yMn_{(2-y)}O_4$ (where M is at least one element selected from the group consisting of Co, Mn, Al, Fe, Mg, and Ti, x satisfies $0 \leq x \leq 1$, and y satisfies $0.05 < y < 0.97$),
$Li_xNi_aCo_bAl_{(1-a-b)}O_2$ (where x satisfies $0 \leq x \leq 1$ and a and b satisfy $0.02 < a < 0.97$ and $0.02 < b < 0.97$), and
$Li_xNi_cCo_dMn_{(1-c-d)}O_2$ (where x satisfies $0 \leq x \leq 1$, and c and d satisfy $0.02 < c < 0.97$ and $0.02 < d < 0.97$). Among these, from the viewpoint of high capacity, low resistance, cycle characteristics, decomposition of the alkali metal compound, and suppression of a lack of positive electrode active material during pre-doping, the compounds represented by the above formulas $Li_xNiaCobAl_{(1-a-b)}O_2$, $Li_xNi_cCo_dMn_{(1-c-d)}O_2$, $Li_xCoO_2$, $Li_xMn_2O_4$, or $Li_xFePO_4$, $Li_xMnPO_4$, and $Li_zV_2(PO_4)_3$ are preferable.

If the positive electrode precursor contains an alkali metal compound different from the positive electrode active material, since the alkali metal compound becomes a dopant source for the alkali metal during pre-doping, and the negative electrode can be pre-doped, even if the transition metal compound does not contain lithium ions in advance (i.e., even if x = 0 or z = 0), it can be electrochemically charged and discharged as a nonaqueous alkali metal power storage

element. The content of the lithium transition metal oxide in the positive electrode active material layer of the positive electrode precursor is preferably 8.0 wt% or more and 30.0 wt% or less. When the lithium transition metal oxide content is 8.0 wt% or more, the capacity of the nonaqueous alkali metal power storage element can be increased. When the content of the lithium transition metal oxide is 30.0 wt% or less, the resistance of the nonaqueous alkali metal power storage element can be reduced.

(Alkali Metal Compound)

The positive electrode active material layer of the positive electrode precursor may contain an alkali metal compound other than the positive electrode active material. The alkali metal compound is decomposed in the positive electrode precursor to release cations and reduced by the negative electrode, thereby pre-doping the negative electrode. As a result of the positive electrode active material layer of the positive electrode precursor containing an alkali metal compound, the positive electrode active material layer of the positive electrode obtained after pre-doping also preferably contains an alkali metal compound.

Examples of such alkali metal compounds include oxides such as MO2, where M is one or more selected from Li, Na, K, Rb, and Cs; hydroxides such as MOH; halides such as MF and MCl; and carboxylates such as RCOOM (where R is H, an alkyl group, or an aryl group), and one or more of these may be used. Specific examples of alkali metal compounds include lithium carbonate, sodium carbonate, potassium carbonate, rubidium carbonate, cesium carbonate, lithium oxide, and lithium hydroxide. As the alkali metal compound, one or more alkali metal carbonates selected from lithium carbonate, sodium carbonate, potassium carbonate, rubidium carbonate, and cesium carbonate are preferably used, lithium carbonate, sodium carbonate, or potassium carbonate is more preferably used, and lithium carbonate is particularly preferably used from the viewpoint of high capacity per unit weight.

It is sufficient for the positive electrode precursor to contain at least one alkali metal compound. The positive electrode precursor may contain one or more selected from carbonates, oxides, hydroxides, halides, and carboxylates of alkaline earth metals selected from the group consisting of Be, Mg, Ca, Sr, and Ba in place of or together with the alkali metal compound.

The alkali metal compound and if used the alkaline earth metal compound are preferably fine particulates. The average particle size of the alkali metal compound is preferably 0.1 μm or more and 10 μm or less. When the average particle size is 0.1 μm or more, the dispersibility in the positive electrode precursor is excellent. When the average particle size is 10 μm or less, the decomposition reaction proceeds efficiently because the surface area of the alkali metal compound increases. The average particle size of the alkali metal compound is preferably less than the average particle size of the activated carbon described above. When the average particle size of the alkali metal compound is less than the average particle size of the activated carbon, the electron conduction of the positive electrode active material layer is enhanced, thereby contributing to the reduction of the resistance of the electrode body or power storage element. The method for measuring the average particle size of the alkali metal compound in the positive electrode precursor is not particularly limited, and it can be calculated from an SEM image of the cross section of the positive electrode and an SEM-EDX image. Regarding the method for forming the cross section of the positive electrode, BIB processing in which an Ar beam is emitted from above the positive electrode to form a smooth cross section along the edge of a shielding plate placed directly above the sample can be used. Various methods can be used for fine-particulation of the alkali metal compound. For example, pulverizers such as ball mills, bead mills, ring mills, jet mills and rod mills can be used.

The content of the alkali metal compound contained in the positive electrode active material layer of the positive electrode precursor is preferably 15.0 wt% or more and 45.0 wt% or less when the total weight of the positive electrode active material layer is 100 wt%. When this value is 15.0 wt% or more, the negative electrode can be pre-doped with a sufficient amount of alkali metal ions, increasing the capacity of the nonaqueous alkali metal power storage element. When this value is 45.0 wt% or less, conduction of electrons in the positive electrode precursor can be enhanced, whereby decomposition of the alkali metal compound can be efficiently carried out. When the positive electrode precursor contains, in addition to an alkali metal compound, the two or more of metal compounds and alkaline earth metal compounds, the total amount of the alkali metal and alkaline earth metal compounds is preferably within the range described above. The content of the alkali metal compound in the positive electrode after pre-doping is preferably 0.1 wt% or more and 5.0 wt% or less. When the content of the alkali metal compound in the positive electrode after pre-doping is 0.1 wt% or more, decomposition of the electrolytic solution in the positive electrode can be suppressed. When the content is 5.0 wt% or less, electron conduction of the positive electrode can be enhanced, whereby output characteristics can be improved. The alkali metal elements and alkaline earth metal elements described above can be quantified by ICP-AES, atomic absorption spectrometry, fluorescent X-ray spectrometry, neutron activation spectrometry, or ICP-MS.

(Copper Atom-Containing Compounds)

The positive electrode active material layer preferably contains a compound containing copper atoms. The

content concentration of the compound containing copper atoms in the positive electrode active material, based on the total weight of the positive electrode active material layer, in terms of elemental copper, is preferably 1 ppm or more and 500 ppm or less, more preferably 2 ppm or more and 450 ppm or less, and further preferably 10 ppm or more and 450 ppm or less. When the concentration of the copper atom-containing compound is 1 ppm or more in terms of elemental copper, the dispersibility of the carbon nanotubes can be enhanced when the positive electrode coating liquid is prepared. The mechanism for enhancing dispersibility will be described later. Conversely, when the concentration of the copper atom-containing compound is 500 ppm or less in terms of elemental copper, decomposition of the solvent can be suppressed, thereby increasing the voltage of the nonaqueous lithium power storage element.

Quantification of the copper atoms can be calculated, in terms of elemental copper, by ICP-AES, atomic absorption spectrometry, fluorescent X-ray spectrometry, neutron activation spectrometry, or ICP-MS (inductively-coupled plasma mass spectrometry). For example, regarding ICP-MS, copper atoms can be quantified by the following method.

The positive electrode after washing with an organic solvent such as DMC is subjected to acid decomposition using a strong acid such as concentrated nitric acid, concentrated sulfuric acid, or aqua regia, and the resulting solution is diluted with pure water to an acid concentration of 2% to 3%. In the acid decomposition, decomposition can be carried out by appropriately heating and/or pressurizing. The resulting dilutions are analyzed by ICP-MS. It is preferable to add a known amount of the element as an internal standard at the time of analysis. The copper atoms can be quantified based on the obtained measurement results based on a calibration curve prepared in advance using a standard solution for chemical analysis.

(Other Components of Positive Electrode Active Material Layer)

In addition to the positive electrode active material and the carbon nanotubes, the positive electrode active material layer of the positive electrode precursor of the present disclosure may contain other components such as the alkali metal compound described above, a dispersant, a conductive filler, a binder, and a pH adjuster as needed. The dispersant, conductive filler, and binder in the positive electrode active material layer may be appropriately selected from those exemplified above as the dispersant, conductive filler, and binder of the negative electrode active material layer. The contents of the dispersant and the binder in the positive electrode active material layer may be within the ranges described above as the contents of the dispersant and the binder in the negative electrode active material, respectively. The content of the conductive filler in the positive electrode active material layer of the positive electrode precursor is preferably 0 to 20 wt%, more preferably 1 to 15 wt%, relative to 100 wt% of the positive electrode active material. From the viewpoint of high input, the conductive filler is preferably blended to the greatest extent possible. However, if the blending amount is more than 20 wt%, the content of the positive electrode active material in the positive electrode active material layer will decrease, whereby the energy density per volume of the positive electrode active material layer will decrease, which is not preferable.

When water is used as the solvent for a coating liquid for forming the positive electrode active material layer, the addition of an alkali metal compound may make the coating liquid alkaline. Thus, if necessary, a pH adjuster may be added to the coating liquid for forming the positive electrode active material layer. The pH adjuster is not particularly limited, and for example, hydrogen halides such as hydrogen fluoride, hydrogen chloride, and hydrogen bromide; halogen oxoacids such as hypochlorous acid, chlorous acid, and chloric acid; carboxylic acids such as formic acid, acetic acid, citric acid, oxalic acid, lactic acid, maleic acid, and fumaric acid; sulfonic acids such as methanesulfonic acid, benzenesulfonic acid, and p-toluenesulfonic acid; and acids such as nitric acid, sulfuric acid, phosphoric acid, boric acid, and carbon dioxide can be used.

[Positive Electrode Current Collector]

The material constituting the positive electrode current collector is not particularly limited as long as it has high electron conductivity and does not deteriorate due to elution into the electrolytic solution or reaction with the electrolyte or ions, and a metal foil is preferable. As the positive electrode current collector of the nonaqueous alkali metal power storage element of the present disclosure, aluminum foil is more preferable. The metal foil may be a normal metal foil without unevenness or through-holes, or it may be a metal foil having unevenness subjected to embossing, chemical etching, electrolytic deposition, or blasting, or a metal foil having through holes such as expanded metal, punching metal, or etched foil. From the viewpoint of the alkali metal doping process, which is described later, a non-porous aluminum foil is more preferable, and it is particularly preferable that the surface of the aluminum foil be roughened. The thickness of the positive electrode current collector is not particularly limited, as long as it can sufficiently retain the shape and strength of the positive electrode, and it is, for example, preferably 1 to 100 μm. It is preferable that an anchor layer containing a conductive material such as graphite, flake graphite, carbon nanotubes, graphene, Ketjen black, acetylene black, or vapor grown carbon fiber be provided on the surface of the metal foil. By providing an anchor layer, the electrical conductivity

between the positive electrode current collector and the positive electrode active material layer can be improved and resistance can be reduced. The thickness of the anchor layer is preferably 0.1 μm or more and 5 μm or less per side of the positive electrode current collector.

The thickness of the positive electrode active material layer is preferably 10 μm or more and 200 μm or less per side of the positive electrode current collector. The thickness of the positive electrode active material layer is more preferably 20 μm or more and 150 μm or less, and further preferably 30 μm or more and 100 μm or less per side. When this thickness is 10 μm or more, sufficient charge/discharge capacity can be exhibited. Conversely, when the thickness is 200 μm or less, ion diffusion resistance in the electrode can be maintained at a low level. Thus, sufficient output characteristics can be obtained, and the cell volume can be reduced, whereby energy density can be increased. The thickness of the positive electrode active material layer when the positive electrode current collector has through-holes or unevenness refers to the average thickness per side of the positive electrode current collector which does not have through-holes or unevenness.

<Negative Electrode>

The negative electrode comprises a negative electrode current collector and a negative electrode active material layer provided on one or both sides thereof.

[Negative Electrode Active Material Layer]

The negative electrode active material layer contains a negative electrode active material and carbon nanotubes, and may optionally contain other optional components such as a dispersant, a conductive filler, and a binder.

(Negative Electrode Active Material)

As the negative electrode active material, a material which is capable of absorbing and releasing alkaline metal ions can be used. Specific examples include carbon materials, titanium oxides, silicon, silicon oxides, silicon alloys, silicon compounds, tin, and tin compounds. The content of the negative electrode active material in the negative electrode active material layer of the negative electrode precursor, based on the total weight of the negative electrode active material layer, is preferably 70 wt% or more, and more preferably 80 wt% or more. The negative electrode active material is preferably a fine particulate.

The negative electrode active material preferably contains a carbon material. The content of the carbon material, relative to the total amount of the negative electrode active material, is preferably 50 wt% or more, and more preferably 70 wt% or more. Though the content of the carbon material can be 100 wt%, from the viewpoint of obtaining the effect of combined use with other materials, it is, for example, preferably 95 wt% or less, and may be 90 wt% or less. The upper limit and lower limit of the carbon material content can be arbitrarily combined.

Examples of the carbon material include non-graphitizable carbon materials; easily graphitizable carbon materials; carbon black; carbon nanoparticles; activated carbon; artificial graphite; natural graphite; graphitized mesophase carbon microspheres; graphite whiskers; amorphous carbon materials such as polyacene-based materials; carbon materials obtained by heat-treating carbon precursors such as petroleum-based pitch, coal-based pitch, mesocarbon microbeads, coke, and synthetic resins (for example, phenolic resins); thermal decomposition products of furfuryl alcohol resins or novolak resins; fullerenes; carbon nanofibers; and composite carbon materials thereof.

Among these, from the viewpoint of reducing the resistance of the negative electrode, a composite carbon material in which a graphite material and a carbon material derived from the carbon material precursor are combined by performing heat treatment of one or more graphite materials selected from artificial graphite, natural graphite, graphitized mesophase carbon spherules, graphite whiskers, and high specific surface area graphite; in the presence one or more carbon material precursors selected from petroleum-based pitches, coal-based pitches, mesocarbon microbeads, coke, and synthetic resins such as phenolic resins is preferable. The carbon material precursor is not particularly limited as long as it can be converted into a carbon material by heat treatment, and petroleum-based pitch or coal-based pitch is particularly preferable. Prior to heat treatment, the graphite material and the carbon material precursor may be mixed at a temperature higher than the melting point of the carbon material precursor. The heat treatment temperature may be a temperature at which components generated by volatilization or thermal decomposition of the carbon material precursor used become the carbon material, and the temperature is preferably 400 °C or higher and 2,500 °C or lower, more preferably 500 °C or higher and 2,000 °C or lower, and further preferably 550 °C or higher and 1,500 °C or lower. The atmosphere for the heat treatment is not particularly limited, but a non-oxidizing atmosphere is preferred.

The BET specific surface area of the composite carbon material is preferably 1 $m^2/g$ or more and 50 $m^2/g$ or less, more preferably 1.5 $m^2/g$ or more and 40 $m^2/g$ or less, and further preferably 2 $m^2/g$ or more and 25 $m^2/g$ or less. When the BET specific surface area of the composite carbon material is 1 $m^2/g$ or more, a sufficiently large number of reaction sites

with lithium ions in the nonaqueous electrolyte can be secured, whereby high input/output characteristics can be exhibited. When the BET specific surface area of the composite carbon material is 50 $m^2/g$ or less, the charge/discharge efficiency of lithium ions is improved, and the reductive decomposition of the nonaqueous electrolyte during charge/discharge is suppressed, whereby high load charge/discharge cycle characteristics can be exhibited.

The average pore diameter of the composite carbon material is preferably 1.5 nm or more and 25 nm or less, more preferably 2 nm or more and 22 nm or less, further preferably 3 nm or more and 20 nm or less, and particularly preferably 3.5 nm or more and 18 nm or less. When the average pore diameter of the composite carbon material is 1.5 nm or more, since there are many pores larger than the size of solvated lithium ions in the nonaqueous electrolyte (about 0.9 nm to 1.2 nm), the diffusion of solvated lithium ions in the composite carbon material is improved, whereby a nonaqueous alkali metal power storage element using this material can exhibit high input/output characteristics. Conversely, when the average pore diameter of the composite carbon material is 25 nm or less, the bulk density of the negative electrode active material layer using this can be sufficiently improved, whereby high energy density can be exhibited.

The composite carbon material may be a particulate, and the average particle size thereof is preferably 1 μm or more and 10 μm or less, more preferably 2 μm or more and 8 μm or less, and further preferably 3 μm or more and 6 μm or less. When the average particle size of the composite carbon material is 1 μm or more, the charging/discharging efficiency of lithium ions can be improved, whereby high high-load charging/discharging cycle characteristics can be exhibited. When the composite carbon material has an average particle size of 10 μm or less, the number of reaction sites with lithium ions in the nonaqueous electrolyte increases, whereby high input/output characteristics can be exhibited.

The weight ratio of the carbonaceous material to the graphite material in the composite carbon material is preferably 1 wt% or more and 20 wt% or less, more preferably 1.2 wt% or more and 15 wt% or less, further preferably 1.5 wt% or more and 10 wt% or less, and yet further preferably 2 wt% or more and 5 wt% or less. When the weight ratio of the carbonaceous material is 1 wt% or more, the carbonaceous material can sufficiently increase the reaction sites with lithium ions in the nonaqueous electrolyte, and since desolvation of lithium ions is facilitated thereby, high input/output characteristics can be exhibited. When the weight ratio of the carbonaceous material is 20 wt% or less, the solid diffusion of lithium ions between the carbonaceous material and the graphite material can be favorably maintained, whereby high input/output characteristics can be exhibited. Since the charging/discharging efficiency of lithium ions can be improved, high high-load charging/discharging cycle characteristics can be exhibited.

The doping amount of lithium ions per unit weight of the composite carbon material is preferably 50 mAh/g or more and 700 mAh/g or less, more preferably 70 mAh/g or more and 650 mAh/g or less, further preferably 90 mAh/g or more and 600 mAh/g or less, and yet further preferably 100 mAh/g or more and 550 mAh/g or less. Doping with lithium ions reduces the negative electrode potential. Thus, when a negative electrode containing a composite carbon material doped with lithium ions is combined with a positive electrode, the voltage of the nonaqueous alkali metal power storage element increases and the usable capacity of the positive electrode increases. Thus, the capacity and energy density of the obtained nonaqueous alkali metal power storage element are increased. When the doping amount of lithium ions per unit weight of the composite carbon material is 50 mAh/g or more, since the irreversible sites in the composite carbon material, which cannot be desorbed once lithium ions are inserted, are well doped with lithium ions, a high energy density can be obtained. The higher the doping amount, the lower the negative electrode potential, and the higher the input/output characteristics, energy density, and durability. When the doping amount of lithium ions per unit weight of the composite carbon material is 700 mAh/g or less, side effects such as precipitation of lithium metal are less likely to occur.

The BET specific surface area of the graphite material used in the composite carbon material is preferably 0.5 $m^2/g$ or more and 80 $m^2/g$ or less, more preferably 1 $m^2/g$ or more and 70 $m^2/g$ or less, and further preferably 1.5 $m^2/g$ or more and 60 $m^2/g$ or less. When the BET specific surface area of the graphite material used in the composite carbon material is within the above range, the BET specific surface area of the composite carbon material can be adjusted within the range described above.

The graphite material used in the composite carbon material may be a particulate, and the average particle size is preferably 1 μm or more and 10 μm or less, and more preferably 2 μm or more and 8 μm or less. When the average particle size of the graphite material used in the composite carbon material is within the range of 1 μm or more and 10 μm or less, the average particle size of the composite carbon material can be adjusted within the range described above.

The carbonaceous material precursor used as a raw material of the composite carbon material is a solid, liquid, or solvent-soluble organic material with which a carbonaceous material can be combined with a graphite material by heat treatment. Examples of the carbonaceous material precursor include pitch, mesocarbon microbeads, coke, and synthetic resins such as phenolic resins. Among these carbonaceous material precursors, it is preferable to use pitch, which is inexpensive, in terms of production cost. Pitch is roughly divided into petroleum-based pitch and coal-based pitch. Examples of petroleum pitches include crude oil distillation residues, fluid catalytic cracking residues (decant oil), bottom oils derived from thermal cracking, and ethylene tar obtained during naphtha cracking.

(Carbon Nanotubes)

The negative electrode active material layer contains carbon nanotubes. The carbon nanotubes contained in the negative electrode active material layer may be the same as or different from the carbon nanotubes contained in the positive electrode active material layer. Various properties can be improved by including carbon nanotubes in the negative electrode active material layer. Examples of the properties which can be improved are include high durability by suppressing deactivation of the alkali metal ions and suppressing deterioration of the binder at high temperatures, high output by reducing the internal resistance value of the nonaqueous lithium power storage element, improved processability by improving the peeling strength of the electrodes, suppressing deterioration due to electrode peeling during durability tests, and suppressing the amount of gas generated during high-temperature durability tests.

As the carbon nanotubes, single-wall carbon nanotubes and multilayer carbon nanotubes are preferably used, and single-wall carbon nanotubes are particularly preferably used. The average fiber diameter of the carbon nanotubes is preferably 1 nm or more and less than 20 nm, and more preferably 1.5 nm or more and 15 nm or less. When the average fiber diameter is 1 nm or more, the dispersibility of carbon nanotubes is improved. When the average fiber diameter is less than 20 nm, a nonaqueous alkali metal power storage element having higher input/output characteristics can be provided.

The carbon nanotubes have a bundle structure in which single-wall carbon nanotubes are bundled (hereinafter also referred to as "bundled single-wall carbon nanotubes"). Though the fiber length of one single-wall carbon nanotube is several microns, the bundled single-wall carbon nanotubes are estimated to have a fiber length of several microns to several tens of microns due to connecting or twisting of a plurality of single-wall carbon nanotubes. The average fiber diameter of the bundled single-wall carbon nanotubes is 5 nm or more and 20 nm or less, preferably 6 nm or more and 17 nm or less, and more preferably 7 nm or more and 14 nm or less. Bundled single-wall carbon nanotubes tend to form agglomerates like balls of thread, and when the average fiber diameter of the bundled single-wall carbon nanotubes is 5 nm or more, dispersibility is improved, which tends to suppress the formation of aggregates such as balls of thread, and when it is 20 nm or less, it is possible to improve the binding property and electronic conductivity between the active material particles. The carbon nanotubes can be synthesized by an appropriate method such as a chemical vapor deposition method, an arc discharge method, or a laser vaporization method.

The carbon nanotubes preferably cover the surface of the negative electrode active material in a mesh-like pattern, and it is also preferable that the carbon nanotubes crosslink the negative electrode active materials. The term "mesh-like" means that a plurality of carbon nanotubes and/or bundled single-wall carbon nanotubes intersect each other in various directions on the surface of the active material to form a mesh-like structure in which a portion is covered with the carbon nanotubes and a portion where the active material is exposed.

When the content of the carbon nanotubes in the negative electrode active material layer is defined as B (wt%) and the total weight of the negative electrode active material layer is 100 wt%, it is preferable that $0.003 \leq B \leq 0.120$, more preferably $0.005 \leq B \leq 0.100$, and further preferably $0.007 \leq B \leq 0.090$. When B is 0.003 or more, adhesion between particles of the negative electrode active material and electronic conductivity are improved, and an increase in resistance at 80 °C or higher can be suppressed. When B is 0.120 or less, the carbon nanotubes do not excessively cover the negative electrode active material particles, and since the amount of SEI (solid electrolyte interface) generated on the carbon nanotubes in the entirety of the negative electrode active material layer is reduced, ion diffusion resistance can be reduced, and by reducing the irreversible capacity derived from carbon nanotubes, the pre-doping amount of alkali metal ions to the negative electrode can be increased.

The carbon nanotubes are preferably uniformly distributed on the surface and between the particles of the negative electrode active material. By uniformly dispersing the carbon nanotubes on the surface and between the particles of the negative electrode active material, the electronic conductivity and adhesion between the particles of the negative electrode active material can be increased, and the binder content can be reduced. Since the binder gradually decomposes under in high temperature environments of 80 °C or higher or high voltage environments of 4.1 V or higher, by reducing the content of the binder, high temperature durability of 80 °C or higher and high voltage durability of 4.1 V or higher can be imparted.

(Other Components of Negative Electrode Active Material Layer)

In addition to the negative electrode active material and carbon nanotubes, the negative electrode active material layer may contain optional components such as a dispersant, a binder, and a conductive filler, if necessary.

The dispersant is not particularly limited, and for example, one or two selected from carboxymethyl cellulose, polycarboxylic acid, polycarboxylate, polyvinylpyrrolidone, polyvinyl alcohol, and a surfactant can be suitably used. In particular, by using two or more of the dispersants described above, both dispersibility of the carbon nanotubes and stability of the coating liquid can be achieved. It is particularly preferable that the dispersant contain, for example, carboxymethyl cellulose and one or more selected from polyvinylpyrrolidone and polyvinyl alcohol. The content of the dispersant is preferably 0.1 wt% or more and 7.0 wt% or less relative to 100 wt% of the solid content of the negative

electrode active material layer. When the amount of the dispersion stabilizer is 7.0 wt% or less, high input/output characteristics are exhibited without hindering the entry/exit and diffusion of ions into the negative electrode active material.

As the binder, for example, polyvinylidene fluoride (PVdF), polytetrafluoroethylene (PTFE), a fluororubber, polyimide, latex, styrene-butadiene copolymer, or acrylic copolymer can be used. The content of the binder in the negative electrode active material layer is preferably 0 to 20 wt%, and more preferably 0.1 to 15 wt%, relative to 100 wt% of the negative electrode active material.

The content of the binder in the negative electrode active material layer is preferably 0 wt% in order to cover the surface of the negative electrode active material with the carbon nanotubes and to crosslink the particles of the negative electrode active material. As a result, the diffusibility of ions in the negative electrode active material layer is improved, whereby the output power of the power storage element can be increased. When the amount of the binder is 0.1 wt% or more in a state in which the carbon nanotubes are aggregated without being crushed in the negative electrode active material layer, adhesion between the negative electrode current collector and the negative electrode active material layer becomes sufficiently high, and interfacial resistance between the current collector and the active material layer can be reduced. Conversely, when the amount of binder is 20 wt% or less, the binder does not excessively cover the surface of the negative electrode active material, promoting the diffusion of ions in the pores of the active material.

The conductive filler is preferably composed of a conductive carbonaceous material that is more conductive than the negative electrode active material. As such a conductive filler, for example, one or more selected from carbon black, graphite, graphene, etc., and mixtures thereof are preferable. Examples of carbon black include Ketjen black and acetylene black. Examples of graphite include flake graphite. It is particularly preferably that carbon black be used as the conductive filler. The content of the conductive filler in the negative electrode active material layer is preferably 25 wt% or less, and more preferably 5 wt% or more and 20 wt% or less, relative to 100 wt% of the negative electrode active material. It is preferable to mix the conductive filler in the negative electrode active material layer from the viewpoint of increasing the power input, but it is preferable to limit the content to 25 wt% or less from the viewpoint of maintaining the energy density per volume of the power storage element.

[Negative Electrode Current Collector]

As the material constituting the negative electrode current collector, it is preferable to use a material which has high electronic conductivity and is not deteriorated by elution into the electrolytic solution or reaction with the electrolyte or ions, and it may be, for example, a metal foil. Such a metal foil is not particularly limited, and examples thereof include aluminum foil, copper foil, nickel foil, and stainless-steel foil. As the negative electrode current collector of the nonaqueous alkali metal power storage element of the present disclosure, copper foil is preferable when the nonaqueous electrolyte contains lithium ions, and aluminum foil is preferable when a sodium- or potassium-ion electrolyte is used in the nonaqueous electrolyte. The metal foil as the negative electrode current collector may be a normal metal foil without unevenness or through-holes, a metal foil having unevenness which has been subjected to embossing, chemical etching, electrolytic deposition, or blasting, or a metal foil having through-holes such as an expanded metal, punching metal, or etched foil. The thickness of the negative electrode current collector is not particularly limited as long as the shape and strength of the negative electrode can be sufficiently maintained, and is, for example, 1 to 100 μm.

The thickness of the negative electrode active material layer is preferably 10 μm or more and 70 μm or less, more preferably 15 μm or more and 60 μm or less per side. When this thickness is 10 μm or more, suitable charge/discharge capacity can be exhibited. Conversely, when the thickness is 70 μm or less, the cell volume can be reduced and the energy density can be increased. The thickness of the negative electrode active material layer when the negative electrode current collector has holes refers to the average value of the thickness per side of the negative electrode current collector which has no holes.

<Separator>

The positive electrode precursor and negative electrode are laminated or laminated and wound via a separator to form an electrode laminate or electrode roll comprising a positive electrode precursor, a negative electrode, and a separator. As the separator, a polyethylene microporous membrane or polypropylene microporous membrane used in lithium-ion secondary batteries, or a cellulose nonwoven paper used in electric double layer capacitors can be used. A membrane composed of organic or inorganic fine particles may be laminated on one or both sides of these separators. Organic or inorganic fine particles may be contained inside the separator. The thickness of the separator is preferably 5 μm or more and 35 μm or less. A thickness of 5 μm or more is preferable because self-discharge due to an internal micro-short tends to be reduced thereby. Conversely, a thickness of 35 μm or less is preferable because the output characteristics of the power storage element tend to be increased thereby. The thickness of the membrane composed of organic or inorganic fine particles is preferably 1 μm or more and 10 μm or less. A thickness of 1 μm or more is preferable because self-discharge due to internal micro-shorts tends to be reduced thereby. Conversely, a thickness of 10 μm or less is preferable because the output characteristics of the power storage element tend to be increased thereby.

<Exterior Body>

A metal can or laminate film can be used as the exterior body. As the metal can, a can composed of aluminum is preferable. The metal can may be, for example, rectangular, round, or cylindrical. As the laminate film, a film obtained by laminating a metal foil and a resin film is preferable, and a three-layer structure composed of an outer layer resin film/metal foil/inner resin film is exemplified. The outer layer resin film is for preventing the metal foil from becoming damaged by contact, and a resin such as nylon or polyester can be suitably used. The metal foil is for preventing the permeation of moisture and gas, and foils of copper, aluminum, or stainless steel can suitably be used. The interior resin film protects the metal foil from the electrolyte to be stored in the interior thereof, and also serves to melt for sealing the exterior body when heat-sealed, and a polyolefin or acid-modified polyolefin can be suitably used.

<Electrolyte>

The electrolyte is a nonaqueous electrolyte. Specifically, this electrolyte contains a nonaqueous solvent. The nonaqueous electrolyte contains 0.5 mol/L or more of an alkali metal salt relative to the total amount of the nonaqueous electrolyte. Specifically, the nonaqueous electrolyte contains an alkali metal salt as an electrolyte. Examples of the nonaqueous solvent contained in the nonaqueous electrolyte include cyclic carbonates such as ethylene carbonate and propylene carbonate, and chain carbonates such as dimethyl carbonate, diethyl carbonate, and ethylmethyl carbonate.

As the electrolyte salt containing alkali metal ions which dissolve in a nonaqueous solvent such as those described above, for example, MFSI, $MBF_4$, $MPF_6$, $MClO_4$, $LiB(C_2O_4)_2$, $LiBF_2(C_2O_4)$, where M is Li, Na, K, Rb or Cs, can be used. The nonaqueous electrolyte may contain at least one type of alkali metal ions, may contain two or more alkali metal salts, and may contain alkali metal salts and alkaline earth metal salts selected from beryllium salts, magnesium salts, calcium salts, strontium salts and barium salts. When two or more alkali metal salts are contained in the nonaqueous electrolyte, the presence of cations having different Stokes radii in the nonaqueous electrolyte can suppress increases in viscosity at low temperatures, whereby the low temperature characteristics of the nonaqueous alkali metal power storage element are improved. When the nonaqueous electrolyte contains alkaline earth metal ions other than the alkali metal ions, the capacity of the nonaqueous alkali metal power storage element can be increased.

The method for containing two or more types of alkali metal salts in the nonaqueous electrolyte or the method for containing the alkali metal salt and the alkaline earth metal salt in the nonaqueous electrolyte is not particularly limited, and examples thereof include a method of preliminarily dissolving an alkali metal salt composed of two or more types of alkaline metal ions in a nonaqueous electrolyte, and a method of preliminarily dissolving an alkali metal salt and an alkaline earth metal salt in a nonaqueous electrolyte. Furthermore, the positive electrode precursor can contain one or more selected from, where M is one or more selected from Na, K, Rb, and Cs:

carbonates such as $M_2CO_3$;
oxides such as $M_2O$;
hydroxides such as MOH;
halides such as MF and MCl;
carboxylates such as RCOOM (where R is H, an alkyl group, or an aryl group); and
alkaline earth metal carbonates selected from $BeCO_3$, $MgCO_3$, $CaCO_3$, $SrCO_3$, or $BaCO_3$, and alkaline earth metal oxides, alkaline earth metal hydroxides, alkaline earth metal halides, and alkaline earth metal carboxylates.

The electrolyte salt concentration in the electrolytic solution is preferably in the range of 0.5 to 2.0 mol/L. At an electrolyte salt concentration of 0.5 mol/L or more, there are sufficient anions to maintain the capacity of the nonaqueous alkali metal power storage element. Conversely, at an electrolyte salt concentration of 2.0 mol/L or less, the salt is sufficiently dissolved in the electrolyte, whereby proper viscosity and conductivity of the electrolyte is maintained. When the nonaqueous electrolyte contains two or more alkali metal salts or when it contains an alkali metal salt and an alkaline earth metal salt, the total value of the salt concentrations thereof is preferably 0.5 mol/L or more, more preferably in the range of 0.5 to 2.0 mol/L.

The amount of water contained in the nonaqueous electrolyte is preferably 0 ppm or more and 500 ppm or less. When the water content is 0 ppm or more, the alkaline metal compound in the positive electrode precursor can be slightly dissolved, whereby pre-doping can be carried out under mild conditions, resulting in high capacity and low resistance. When the water content is 500 ppm or less, decomposition of the electrolyte is suppressed, whereby the high-temperature storage characteristics are improved. The water content in the electrolytic solution can be measured by the Karl Fischer method described above.

The nonaqueous electrolyte preferably contains a phosphate ester amide represented by the following general formula (1).

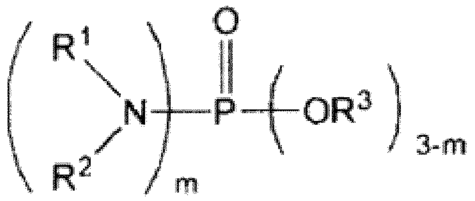

(1)

where m represents an integer of 1 or 2, and $R^1$ and $R^2$ each independently represent a branched or linear $C_{1-6}$ alkyl group or a branched or linear hydrocarbon group having an unsaturated bond. However, $R^1$ and $R^2$ may each independently have a substituent selected from the group consisting of an alkylthio group and a saturated heterocyclic group, and $R^1$ and $R^2$ may combine with each other to form a 5- to 8-membered ring structure. $R^3$ represents a branched or linear $C_{1-6}$ alkyl group or a branched or linear fluorine-containing $C_{1-6}$ alkyl group.

$R^1$ and $R^2$ are each independently a branched or linear alkyl group having preferably 2 to 5 carbon atoms, more preferably 2 to 4 carbon atoms, or a branched or linear hydrocarbon group having an unsaturated bond. $R^1$ and $R^2$ include, for example, methyl, ethyl, n-propyl, isopropyl, n-butyl, isobutyl, sec-butyl, and tert-butyl groups, as well as combinations thereof. $R^3$ is preferably a branched or linear alkyl group or a branched or linear fluorine-containing alkyl group having 1 to 5 carbon atoms, more preferably 1 to 4 carbon atoms, and further preferably 1 to 3 carbon atoms. Examples of $R^3$ include a methyl group, ethyl group, n-propyl group, isopropyl group, n-butyl group, isobutyl group, sec-butyl group, and tert-butyl group, and groups in which one or a plurality of hydrogen atoms of these groups are substituted with fluorine, and combinations thereof. $R^3$ is more preferably, for example, a fluorine-containing methyl group, a fluorine-containing ethyl group, a fluorine-containing n-propyl group, a fluorine-containing isopropyl group, or a combination thereof, and further preferably difluoroethyl, trifluoroethyl, and tetrafluoropropyl groups, and combinations thereof.

By mixing the phosphoric acid ester amide represented by general formula (1) in the nonaqueous electrolyte, decomposition of the electrolyte represented by $MPF_6$ (where M is Li, Na, K, Rb, or Cs) in a high temperature environment of 80 °C or higher can be suppressed, whereby gas generation can be suppressed. By suppressing the reaction between the alkali metal compound and the $MPF_6$ in the alkali metal doping process, the negative electrode can be efficiently doped with the alkali metal.

The content of the phosphate ester amide in the nonaqueous electrolyte is preferably 0.1 wt% or more and 5.0 wt% or less relative to the total weight of the nonaqueous electrolyte. It is particularly preferably 0.3 wt% or more and 3.0 wt% or less. When the content of phosphate ester amide is 0.1 wt% or more, gas generation in a high temperature environment of 80 °C or higher can be suppressed, whereby alkali metal doping can be efficiently carried out. When the phosphate ester amide content is 5.0 wt% or less, the electrical conductivity of the nonaqueous electrolyte can be increased and the resistance can be reduced.

As the phosphate ester amide, it is preferable that bis(2,2-difluoroethyl) phosphate N,N-dimethylamide, bis(2,2-difluoroethyl) phosphate N,N-diethylamide, bis(2,2-difluoroethyl) phosphate N,N-di-n-propylamide, bis(2,2-difluoroethyl) phosphate N,N-diisopropylamide, bis(2,2,2-trifluoroethyl) phosphate N,N-dimethylamide, bis(2,2,2-tri fluoroethyl)N,N-diethylamide, bis(2,2,2-trifluoroethyl) phosphate N,N-di-n-propylamide, bis(2,2,2-trifluoroethyl) phosphate N,N-diisopropylamide, bis(2,2,3,3-tetrafluoropropyl) N,N-dimethylamide phosphate, bis(2,2,3,3-tetrafluoropropyl) N,N-diethylamide phosphate, bis(2,2,3,3-tetrafluoropropyl) N,N-din-propylamide phosphate, or bis(2,2,3,3-tetrafluoropropyl) N,N-diisopropylamide phosphate be used.

<<Nonaqueous Alkali Metal Power Storage Element Production Method>>

[Production of Positive Electrode Precursor]

The positive electrode precursor comprises a positive electrode active material layer on one or both sides of a positive electrode current collector. In a typical embodiment, the positive electrode active material layer is attached to the positive electrode current collector. The positive electrode precursor can be produced by known techniques for producing electrodes in lithium-ion batteries and electric double layer capacitors. For example, the positive electrode precursor can be obtained by dispersing or dissolving the positive electrode active material, an alkali metal compound, and other optional components used as necessary in water or an organic solvent to prepare a slurry-like coating liquid, and applying this coating liquid to one side or both sides of a positive electrode current collector to form a coating film and drying. The obtained positive electrode precursor may be pressed to adjust the film thickness or bulk density of the positive electrode active material layer. The preparation of the coating liquid for forming the positive electrode active material layer,

application of the coating liquid on the positive electrode current collector, drying of the coating film, and pressing can be carried out according to the methods described below.

As described above, it is preferable to distribute the single-wall carbon nanotubes uniformly over the surface and between the particles of the positive electrode active material. As the method for uniformly dispersing the single-wall carbon nanotubes over the surface and between the particles of the positive electrode active material, for example, a method in which a dispersion of single-wall carbon nanotubes is prepared in advance, and other components such as a positive electrode active material are added to this dispersion and mixed, and a specific amount of copper atoms is included in the coating liquid can be exemplified. The dispersion preferably contains a dispersant along with the single-wall carbon nanotubes and solvent. Examples of the solvent include water and NMP. The dispersant can be appropriately selected from those described above as dispersants which can be contained in the positive electrode active material layer, and one or two or more selected from carboxymethyl cellulose, polycarboxylic acid, polycarboxylate, polyvinylpyrrolidone, polyvinyl alcohol, a surfactant are preferably used. A dispersant containing carboxymethyl cellulose and one or more selected from polyvinylpyrrolidone and polyvinyl alcohol is particularly preferably used.

A dispersion of the single-wall carbon nanotubes may be prepared by an arbitrary method. Examples thereof include a method of dissolving a dispersant in a solvent, mixing the single-wall carbon nanotubes with the obtained solution, and dispersing the single-wall carbon nanotubes with a suitable dispersing means. Examples of dispersing means include ultrasonic treatment, a ball mill, bead mill, jet mill, or thin-film rotating high-speed mixer. The coating liquid for forming the positive electrode active material layer (hereinafter simply referred to as "coating liquid") can be prepared by adding other components such as the positive electrode active material to the single-wall carbon nanotube dispersion described above, if necessary.

In the positive electrode active material layer formed using such a coating liquid, the single-wall carbon nanotubes are uniformly distributed over the surface of the positive electrode active material and between the particles of the positive electrode active material, thereby uniformly covering them. This makes it possible to increase the electronic conductivity and adhesion between the particles of the positive electrode active material, whereby the binder content in the positive electrode active material layer can be reduced. Since the binder gradually decomposes in a high temperature environments of 80 °C or higher, by reducing the binder content, it is possible to impart high temperature durability of 80 °C or higher.

The method for preparing the coating liquid is not particularly limited, and preparation can preferably be carried out using a disperser such as a Homo Disper, a multi-axis disperser, a planetary mixer, or a thin-film rotating high-speed mixer. In order to obtain a coating liquid in a suitably dispersed state, it is preferable to disperse the coating liquid at a peripheral speed of 1 m/s or more and 50 m/s or less. A peripheral speed of 1 m/s or more is preferable because the various materials are suitably dissolved or dispersed. A peripheral speed of 50 m/s or less is preferable because reaggregation is suppressed without destroying the various materials due to heat or shear force as a result of dispersion.

The weight ratio $W_T$ (wt%) of all solid components excluding the solvent in the positive electrode coating liquid is 35 wt% or more and 50 wt% or less relative to the total weight of the positive electrode coating liquid. The upper limit of $W_T$ is preferably 50 wt% or less, and more preferably 45 wt% or less. When $W_T$ is 50 wt% or less, the coating film thickness can be controlled to a desired value or less when forming the positive electrode precursor, whereby the resistance of the electrode mixture layer is reduced, suppressing unevenness in the coating film surface. At the time of nonaqueous hybrid capacitor incorporation, decomposition uniformity of the alkaline metal compound is maintained and excellent high-temperature storage characteristics are maintained. Conversely, the lower limit of $W_T$ is preferably 35 wt% or more, and more preferably 36 wt% or more. When $W_T$ is 35 wt% or more, an electrode having a high bulk density can be produced. The upper and lower limits of $W_T$ can be arbitrarily combined. The amount of single-wall carbon nanotubes contained in the positive electrode coating liquid, relative to the total weight of solids contained in the positive electrode coating liquid, is preferably 0.010 wt% or more and 0.200 wt% or less, more preferably 0.030 wt% or more and 0.180 wt%, and further preferably 0.050 wt% or more and 0.160 wt%. Within this range, the single-wall carbon nanotubes are suitably dispersed on the surface of the positive electrode active material, whereby a bundle structure having an average fiber diameter of 5 nm or more and 20 nm or less, a mesh-like structure, and a crosslinking between the positive electrode active materials can easily be formed.

The degree of dispersion of the coating liquid is preferably such that the particle size measured with a particle gauge is 0.1 μm or more and 100 μm or less. The upper limit of the degree of dispersion is more preferably 80 μm or less, and further preferably 50 μm or less, as a particle size measured with a particle gauge. When the particle size is within this range, the material is not crushed during preparation of the coating liquid, whereby clogging of the nozzle during coating and streaking of the coating film are suppressed, and a stable coating can be achieved.

The viscosity (ηb) of the coating liquid is preferably 100 mPa·s or more and 10,000 mPa·s or less, more preferably 300 mPa·s or more and 5,000 mPa·s or less, and further preferably 500 mPa·s or more and 3,000 mPa·s or less. If the viscosity (ηb) is 100 mPa·s or more, dripping during coating film formation is suppressed, and the coating film width and thickness can be well controlled. Further, if the viscosity is 10,000 mPa·s or less, the pressure loss in the flow path of the coating liquid when using a coating machine is small, the coating can be stably performed, and the coating thickness can be easily controlled.

The positive electrode coating liquid preferably satisfies either or both of the following (a) and (b).

(a) The viscosity thereof decreases monotonically with increasing shear rate in the range of shear rate from 10 $s^{-1}$ to 1000 $s^{-1}$.

(b) The ratio X/Y of the maximum viscosity value X (mPa·s) to the minimum viscosity value Y (mPa·s) at a shear rate in the range of 100 $s^{-1}$ to 1000 $s^{-1}$ is 1.0 or more and 4.0 or less.

The phrase "decreases monotonically" means that the viscosity at 1000 $s^{-1}$ is lower than the viscosity at a shear rate of 10 $s^{-1}$, and there is no region where the viscosity increases when the shear rate is increased from 10 $s^{-1}$ to 1000 $s^{-1}$.

When either of (a) and (b) above is satisfied, the generation of aggregates due to deterioration of the dispersibility of the coating liquid can be prevented, and clogging of filters and pipes is less likely to occur. Even when the solid content ratio of the coating liquid is increased, the viscosity characteristics of the coating liquid can be stably maintained, whereby the occurrence of streaking during coating and uneven film thickness of the completed electrode can be suppressed. The internal resistance of the nonaqueous alkali metal power storage element can be reduced by improving the dispersibility of the coating liquid. The viscosity curve is measured at 25 °C using a rheometer MCR102 manufactured by Anton Paar. The gap between the rotor of the rheometer and the coating liquid is set to 0.5 (mm) for measurement.

The TI value (thixotropic index value) of the coating liquid is preferably 1.1 or more, more preferably 1.2 or more, and further preferably 1.5 or more. When the TI value is 1.1 or more, the coating film width and thickness can be suitably controlled.

The formation of the coating film of the positive electrode active material layer is not particularly limited, and a coating machine such as a die coater, comma coater, knife coater, or gravure coater can preferably be used. The coating film may be formed by single-layer coating, or may be formed by multi-layer coating. In the case of multi-layer coating, the composition of the coating liquid may be adjusted so that the contents of the components in each layer of the coating film are different. When the coating film is applied to the positive electrode current collector, it may be applied in a plurality of lines, intermittently, or in a plurality of lines and intermittently. When forming the positive electrode active material layer on both sides of the positive electrode current collector, one side of the positive electrode current collector may be coated and dried, then the other side may be coated and dried sequentially, or both sides of the positive electrode current collector may be coated and dried simultaneously. In this case, the difference in thickness between the positive electrode active material layer on the front side and the back side of the positive electrode current collector is preferably 10% or less of the average thickness of both layers. The closer the weight ratio and film thickness ratio of the positive electrode active material layer on the front and back surfaces to 1.0, the less the charge/discharge load is concentrated on one side, resulting in improved high-load charge/discharge cycle characteristics.

After forming a coating film of the positive electrode active material layer on the positive electrode current collector, the coating film is dried. Drying of the coating film of the positive electrode precursor is preferably carried out by an appropriate drying method such as hot air drying or infrared (IR) drying, preferably with far infrared rays, near infrared rays, or hot air. The coating film may be dried at a single temperature, or may be dried by changing the temperature in a plurality of stages. A plurality of drying methods may be combined for drying. The drying temperature is preferably 25 °C or higher and 200 °C or lower, more preferably 40 °C or higher and 180 °C or lower, and further preferably 50 °C or higher and 160 °C or lower. When the drying temperature is 25 °C or higher, the solvent in the coating film can be sufficiently volatilized. Conversely, when the temperature is 200 °C or lower, cracking of the coating film due to rapid volatilization of the solvent, uneven distribution of the binder due to migration, and oxidation of the positive electrode current collector or positive electrode active material layer can be suppressed.

The amount of water contained in the dried positive electrode active material layer is preferably 0.1 wt% or more and 10 wt% or less when the total weight of the positive electrode active material layer is 100 wt%. When the water content is 0.1 wt% or more, deterioration of the binder due to excessive drying can be suppressed, and the resistance can be reduced. When the water content is 10 wt% or less, deactivation of alkali metal ions can be suppressed and capacity can be increased. When using N-methyl-2-pyrrolidone (NMP) to adjust the coating liquid, the content of NMP in the positive electrode active material layer after drying is preferably 0.1 wt% or more and 10 wt% or less when the total weight of the positive electrode active material layer is 100%. The amount of water contained in the positive electrode active material layer can be measured, for example, by Karl Fischer titration (JIS 0068 (2001) "Method for measuring water content of chemical products"). The amount of NMP contained in the positive electrode active material layer can be measured and quantified by impregnating the positive electrode active material layer with ethanol having a weight 50 to 100 times the weight of the positive electrode active material layer for 24 hours in a 25 °C environment to extract NMP, and thereafter measuring the GC/MS based on a previously created calibration curve.

For pressing the positive electrode active material layer, an appropriate press such as a hydraulic press, a vacuum press, or a roll press can be preferably used. The film thickness, bulk density, and electrode strength of the positive electrode active material layer can be adjusted by the press pressure, the gap between press rolls, and the surface

temperature of the pressing parts, which will be described later. The pressing pressure is preferably 0.5 kN/cm or more and 20 kN/cm or less, more preferably 1 kN/cm or more and 10 kN/cm or less, and further preferably 2 kN/cm or more and 7 kN/cm or less. When the pressing pressure is 0.5 kN/cm or more, the electrode strength can be sufficiently increased. Conversely, when the pressing pressure is 20 kN/cm or less, the positive electrode active material layer can be adjusted to a desired film thickness or bulk density without bending or wrinkling of the positive electrode. When a roll press machine is used for pressing, an appropriate value can be set for the gap between the press rolls so that the positive electrode active material layer has a desired thickness and bulk density. The pressing speed can be set to an appropriate speed at which the positive electrode does not bend or wrinkle.

The surface temperature of the pressing parts may be room temperature, or the pressing parts may be heated if necessary. The lower limit of the surface temperature of the pressing parts when heated is preferably the melting point of the binder to be used minus 60 °C or higher, more preferably the melting point of the binder minus 45 °C or higher, and further preferably the melting point of the binder minus 30 °C or higher. Conversely, the upper limit of the surface temperature of the pressing parts when heated is preferably the melting point of the binder used plus 50 °C or lower, more preferably the melting point of the binder plus 30 °C or lower, and further preferably the melting point of the binder plus 20 °C or lower. For example, when polyvinylidene fluoride (melting point: 150 °C) is used as the binder, it is preferable to heat the pressing parts to 90 °C or higher and 200 °C or lower, more preferably 105 °C or higher and 180 °C or lower, and further preferably 120 °C or higher and 170 °C or lower. When a styrene-butadiene copolymer (melting point: 100 °C) is used as the binder, the pressing parts are preferably heated to 40 °C or higher and 150 °C or lower, more preferably 55 °C or higher and 130 °C or lower, and further preferably 70 °C or higher and 120 °C or lower. The melting point of the binder can be obtained from the endothermic peak position of DSC (Differential Scanning Calorimetry). For example, using a differential scanning calorimeter "DSC7" manufactured by PerkinElmer, 10 mg of sample resin is set in a measurement cell, and the temperature is increased from 30 °C to 250 °C at a rate of 10 °C/min in a nitrogen gas atmosphere. The melting point is set as the endothermic peak temperature in the temperature increase process.

Pressing may be performed multiple times while changing the conditions of the pressing pressure, gap, speed, and surface temperature of the pressing parts. If a plurality of positive electrode active material layers are to be applied, it is preferable to slit them prior to pressing. If the positive electrode is pressed without slitting the multi-layer coated positive electrode active material layer, excessive stress may be applied to the positive electrode current collector where the positive electrode active material layer is not applied, causing wrinkles. After pressing, the positive electrode active material layer may be slit again.

The electrode mixture layer volume resistivity of the positive electrode precursor is preferably 4.0 Ω·cm or less, more preferably 3.9 Ω·cm or less, and further preferably 3.8 Ω·cm or less. When the volume resistivity of the electrode mixture layer is 4.0 Ω·cm or less, the conductivity between the active materials is increased, whereby the internal resistance of the nonaqueous lithium power storage element can be reduced. The lower limit of the electrode mixture layer volume resistivity of the positive electrode precursor is not particularly limited, and may be 1.0 Ω·cm or more.

The interfacial resistance of the positive electrode precursor is preferably $1.5 \times 10^{-1}$ $\Omega\cdot cm^2$ or less, more preferably $1.4 \times 10^{-1}$ $\Omega\cdot cm^2$ or less, and further preferably $1.3 \times 10^{-1}$ $\Omega\cdot cm^2$ or less. When the interfacial resistance is $1.5 \times 10^{-1}$ $\Omega\cdot cm^2$ or less, the conductivity at the interface between the active material and the current collector increases, whereby the internal resistance of the nonaqueous lithium power storage element can be reduced. The lower limit of the interfacial resistance of the positive electrode precursor is not particularly limited, and may be $1.0 \times 10^{-2}$ $\Omega\cdot cm^2$ or more. The mixture layer volume resistivity resistance and interfacial resistance of the positive electrode precursor are measured using an electrode resistance measurement system RM2611 manufactured by Hioki Electric Corporation.

[Production of Negative Electrode]

The negative electrode of the nonaqueous alkali metal power storage element can be produced by a known electrode manufacturing technique for lithium-ion batteries and electric double layer capacitors. For example, a negative electrode can be obtained by dispersing or dissolving the negative electrode active material and other optional components used as needed in water or an organic solvent to prepare a slurry coating liquid, applying this coating liquid to one side or both sides of the negative electrode current collector to form a coating film, and drying. The obtained negative electrode may be pressed to adjust the film thickness or bulk density of the negative electrode active material layer. Preparation of the coating liquid for forming the negative electrode active material layer, application of the coating liquid onto the negative electrode current collector, drying of the coating film, and pressing can be carried out according to the methods described above for producing the positive electrode precursor.

The electrode mixture layer volume resistivity of the negative electrode is preferably $3.0 \times 10^{-2}$ Ω·cm or less, more preferably $2.7\times10^{-2}$ Ω·cm or less, and further preferably $2.4 \times 10^{-2}$ Ω·cm or less. When the volume resistivity of the electrode mixture layer is 4.0 Ω·cm or less, the conductivity between the active materials is increased, whereby the internal resistance of the nonaqueous lithium power storage element can be reduced. The lower limit of the electrode mixture layer volume resistivity of the negative electrode is not particularly limited, and may be $1.0 \times 10^{-3}$ Ω·cm or more.

The interface resistance of the negative electrode is preferably $1.5 \times 10^{-1}\ \Omega\cdot cm^2$ or less, more preferably $1.4 \times 10^{-1}\ \Omega\cdot cm^2$ or less, and further preferably $1.3 \times 10^{-1}\ \Omega\cdot cm^2$ or less. When the interfacial resistance is $1.5 \times 10^{-1}\ \Omega\cdot cm^2$ or less, the conductivity at the interface between the active material and the current collector increases, whereby the internal resistance of the nonaqueous lithium power storage element can be reduced. The lower limit of the interface resistance of the negative electrode is not particularly limited, and may be $1.0 \times 10^{-4}\ \Omega\cdot cm^2$ or more. The mixture layer volume resistivity resistance and interfacial resistance of the negative electrode are measured using an electrode resistance measurement system RM2611 manufactured by Hioki Electric Corporation.

[Assembly Process]

In the assembly process, for example, the positive electrode precursor and the negative electrode, which has been cut into a sheet-like shape, are laminated via a separator, and a positive electrode terminal and a negative electrode terminal are connected to the laminate to prepare an electrode laminate. Alternatively, the positive electrode precursor and the negative electrode may be laminated and wound via a separator, and a positive electrode terminal and a negative electrode terminal may be connected to the wound body to produce an electrode wound body. The shape of the electrode-wound body may be cylindrical or flat. The method for connecting the positive electrode terminal and the negative electrode terminal is not particularly limited, and methods such as resistance welding and ultrasonic welding can be used. It is preferable to dry the electrode assembly (electrode laminate or electrode wound body) to which the terminals are connected to remove residual solvent. The drying method is not limited, and drying can be performed by vacuum drying. The residual solvent is preferably 1.5 wt% or less per total weight of the positive electrode active material layer or the negative electrode active material layer. When the residual solvent is more than 1.5 wt%, the solvent remains in the system and deteriorates the self-discharge characteristics, which is not preferable. The dried electrode body is preferably stored in a dry environment having a dew point of -40 °C or lower in an exterior body exemplified by a metal can or laminated film, and it is preferable to leave only one opening for injecting the nonaqueous electrolyte, which is then sealed. When the dew point is higher than -40 °C, moisture adheres to the electrode body, remaining in the system, deteriorating the self-discharge characteristics, which is not preferable. The method of sealing the exterior body is not particularly limited, and methods such as heat sealing and impulse sealing can be used.

[Injection, Impregnation, and Sealing Processes]

After the assembly process, a nonaqueous electrolyte is injected into the electrode body housed in the exterior body. After injection, it is desirable to further impregnate the positive electrode, negative electrode, and separator with the nonaqueous electrolyte. In a state in which at least part of the positive electrode, negative electrode, and separator are not immersed in electrolyte, since the alkali metal doping proceeds non-uniformly in the alkali metal doping process, which will be described later, the resulting nonaqueous alkali metal power storage element has increased resistance and reduced durability. Though the impregnation method is not particularly limited, for example, a method such as arranging the electrode body after liquid injection in a decompression chamber with the exterior body open, reducing the pressure in the chamber using a vacuum pump, and again returning the pressure to atmospheric pressure can be used. After impregnation, the electrode body in a state in which the exterior body is open can be closed by sealing while reducing the pressure.

[Alkali Metal Doping Process]

In the alkali metal doping process, it is preferable to pre-dope the negative electrode active material layer with alkali metal ions by applying a voltage between the positive electrode precursor and the negative electrode, decomposing the alkali metal compound preferably contained in the positive electrode precursor to release alkali metal ions, and reducing the alkali metal ions with the negative electrode. In the alkali metal doping process, gases such as $CO_2$ are generated in association with oxidative decomposition of the alkali metal compound in the positive electrode precursor. Thus, when applying a voltage, it is preferable to provide means for discharging the generated gas to the outside of the exterior body. Examples of such means include a method of applying voltage in a state in which a part of the exterior body is open and a method in which a voltage is applied using an appropriate gas release means such as a gas vent valve or a gas permeable film installed in advance on a part of the exterior body.

[Aging Process]

After the alkali metal doping process, the electrode body is preferably aged. In the aging process, the solvent in the electrolytic solution is decomposed on the negative electrode, forming a solid polymer film permeable to alkali metal ions on the negative electrode surface. The aging method is not particularly limited, and for example, a method of reacting the solvent in the electrolytic solution under a high temperature environment can be used.

[Degassing Process]

After the aging step, it is preferable to perform gas venting to ensure that the gas remaining in the electrolyte, positive electrode, and negative electrode is removed. Since ion conduction is inhibited when gas remains in at least part of the electrolyte, positive electrode, and negative electrode, the resistance of the obtained nonaqueous alkali metal power storage element increases. The method of degassing is not particularly limited, and for example, a method of arranging the electrode body in a reduced pressure chamber in a state in which the exterior body is open and using a vacuum pump to reduce the pressure in the chamber can be used. After degassing, the exterior body can be closed by sealing the exterior body to produce a nonaqueous alkali metal power storage element.

<<Applications of Nonaqueous Alkali Metal Power Storage Element>>

A power storage module can be produced by connecting a plurality of nonaqueous alkali metal power storage elements of the present disclosure in series or in parallel. A power storage module including the nonaqueous alkali metal power storage element of the present disclosure can achieve both high input/output characteristics and high-temperature safety. Thus, it can be applied to power regeneration assist systems, power load leveling systems, uninterruptible power supply systems, contactless power supply systems, energy harvesting systems, power storage systems, solar power storage systems, electric power steering systems, emergency power supply systems, in-wheel motor systems, idling stop systems, quick charging systems, and smart grid systems. The power storage system can suitably be used for natural power generation such as solar power generation or wind power generation, the power load leveling system can suitably be used for microgrids, and the uninterruptible power supply system can suitably be used for factory production equipment. In contactless power supply systems, the nonaqueous alkali metal power storage element can suitable be used for leveling voltage fluctuations in microwave power transmission or electric field resonance and storing energy; and in energy harvesting systems, the nonaqueous alkali metal power storage element can suitably be used for utilizing the power generated by vibration power generation.

In power storage systems, a plurality of nonaqueous alkali metal power storage elements are connected in series or in parallel as a cell stack, or the nonaqueous alkali metal power storage element and a lead battery, nickel metal hydride battery, lithium-ion secondary battery, or fuel cell are connected in series or parallel. Since the nonaqueous alkali metal power storage element of the present disclosure can achieve both high input/output characteristics and high-temperature safety, for example, it can be mounted on vehicles such as electric vehicles, plug-in hybrid vehicles, hybrid vehicles, and electric motorcycles. The power regeneration assist system, the electric power steering system, the emergency power supply system, the in-wheel motor system, the idling stop system, or a combination thereof described above can suitably be installed in a vehicle.

EXAMPLES

The embodiments of the present disclosure will be specifically described below by way of Examples and Comparative Examples. However, the present disclosure is not limited at all by the following Examples and Comparative Examples.

<<Examples 1>>

<Negative Electrode, Positive Electrode Precursor, and Electrolyte Production Examples>

[Preparation of Carbon Nanotube Dispersion]

A carbon nanotube dispersion was prepared mixing 0.400 wt% of commercially available single-wall carbon nanotubes, 0.600 wt% of carboxymethyl cellulose (CMC1) as a dispersant, and 99.000 wt% of distilled water, and dispersing at a peripheral speed of 17 m/s using a thin-film rotating high-speed mixer Filmix manufactured by PRIMIX Corporation.

[Production of Negative Electrode 1-1]

94.800 wt% of artificial graphite having an average particle size of 4.5 μm, 3.000 wt% of carbon black, 2.000 wt% of carboxymethyl cellulose (CMC2) as a dispersant, and distilled water were mixed to obtain a mixture having a solid weight ratio of 28.0 wt%. The obtained mixture was dispersed for 10 minutes at a rotation speed of 2,000 rpm using a rotation-revolution mixer "*Awatori Rentaro*®" manufactured by Thinky Corporation to obtain a mixture. A carbon nanotube dispersion was added to the mixture prepared as described above so that the carbon nanotubes were 0.080 wt% and

CMC1 was 0.120 wt%, and dispersion was then performed for 10 minutes at a rotation speed of 2,000 rpm to prepare a negative electrode coating liquid 1-1. The viscosity (ηb) and TI value of the obtained negative electrode coating liquid 1-1 were measured using an E-type viscometer TVE-35H manufactured by Toki Sangyo. As a result, the viscosity (ηb) was 1,560 mPa·s and the TI value was 3.7. The negative electrode coating liquid 1-1 was applied to one side of an electrolytic copper foil having a thickness of 10 μm using a doctor blade and dried on a hot plate heated to 50 °C for 10 minutes. Next, a negative electrode 1-1 was produced by pressing using a roll press under the conditions of a pressure of 5 kN/cm and a surface temperature of the pressing parts of 25 °C. Using a film thickness gauge "Linear Gauge Sensor GS-551" manufactured by Ono Sokki Co., Ltd., the total thickness of the negative electrode 1-1 was measured at 10 arbitrary points, the thickness of the electrodeposited copper foil was subtracted from the average value to obtain the film thickness of the negative electrode active material layer, and the film thickness of the negative electrode active material layer of negative electrode 1-1 was 30 μm. The negative electrode mixture layer volume resistivity and the negative electrode interfacial resistance were calculated using an electrode resistance measurement system RM2611 manufactured by Hioki Electric Corporation. As a result, the composite layer volume resistivity of the negative electrode 1-1 was $9.13 \times 10^{-3}$ Ω·cm, and the interfacial resistance was $1.44 \times 10^{-4}$ Ω·cm.

[Analysis of Negative Electrode]

The surface of the negative electrode active material layer of the negative electrode 1-1 was coated with a gold film having a thickness of several nm by sputtering gold in a vacuum of 10 Pa. Next, an SEM image of the negative electrode active material layer surface was photographed under atmospheric exposure using the conditions shown below.

(SEM Measurement Conditions)

- Measuring device: field emission scanning electron microscope S-4700 manufactured by Hitachi High-Technologies Corporation
- Acceleration voltage: 1 kV
- Emission current: 10 μA
- Measurement magnification: 20,000-fold
- Detector: Secondary electron detector
- Electron beam incident angle: 90°

When capturing an image, the brightness and contrast were adjusted so that there were no pixels in the SEM image that reached the maximum brightness value, and the average brightness value was within the range of 40% to 60% of the maximum brightness value.

[Production of Negative Electrodes 1-2 to 1-12]

Negative electrodes 1-2 to 1-12 were produced in the same manner as [Negative Electrode 1-1 Production Example] except that the amount of each component used was adjusted as shown in Table 1. Using an electrode resistance measurement system RM2611 manufactured by Hioki Electric Corporation, the mixture layer volume resistivity and negative electrode interfacial resistance of negative electrodes 1-9 were calculated. As a result, the composite layer volume resistivity of the negative electrode 1-9 was $3.34 \times 10^{-2}$ Ω·cm, and the interfacial resistance was $3.84 \times 10^{-4}$ Ω·cm.

FIG. 1 is an SEM image of negative electrode 1-5 captured at a magnification of 20,000. It could be confirmed that single-wall carbon nanotubes (2) formed a bundle structure on the negative electrode active material (1) surface, and the negative electrode active material surface was covered with a mesh-like and that the active materials were crosslinked (3). In negative electrodes 1-1 to 1-4, 1-6 to 1-8, and 1-10 to 1-12, mesh-like coating and crosslinking by the bundled single-wall carbon nanotubes were similarly confirmed. Negative electrodes 1-1 to 1-8 and 1-10 to 1-12 were all confirmed to have a bundle structure having an average fiber diameter of 9 nm from the average value of 20 arbitrary carbon nanotubes.

Table 1

| | Negative electrode composition ratio (wt%) | | | | | Electrode resistance | |
|---|---|---|---|---|---|---|---|
| | Artificial graphite | Carbon black | CMC2 | CNT | CMC1 | Negative electrode mixture layer volume resistivity (Ω·cm) | Negative electrode interfacial resistance (Ω·cm$^2$) |
| Negative electrode 1-1 | 94.800 | 3.000 | 2.000 | 0.080 | 0.120 | $9.13\times10^{-3}$ | $1.44\times10^{-4}$ |
| Negative electrode 1-2 | 94.750 | 3.000 | 2.000 | 0.100 | 0.150 | - | - |
| Negative electrode 1-3 | 94.850 | 3.000 | 2.000 | 0.060 | 0.090 | - | - |
| Negative electrode 1-4 | 94.900 | 3.000 | 2.000 | 0.040 | 0.060 | - | - |
| Negative electrode 1-5 | 94.950 | 3.000 | 2.000 | 0.020 | 0.030 | - | - |
| Negative electrode 1-6 | 94.975 | 3.000 | 2.000 | 0.010 | 0.015 | - | - |
| Negative electrode 1-7 | 94.990 | 3.000 | 2.000 | 0.004 | 0.006 | - | - |
| Negative electrode 1-8 | 94.995 | 3.000 | 2.000 | 0.002 | 0.003 | - | - |
| Negative electrode 1-9 | 95.000 | 3.000 | 2.000 | 0.000 | 0.000 | $3.34\times10^{-2}$ | $3.84\times10^{-4}$ |
| Negative electrode 1-10 | 94.700 | 3.000 | 2.000 | 0.120 | 0.180 | - | - |
| Negative electrode 1-11 | 94.650 | 3.000 | 2.000 | 0.140 | 0.210 | - | - |
| Negative electrode 1-12 | 94.600 | 3.000 | 2.000 | 0.160 | 0.240 | - | - |

[Preparation of Positive Electrode Active Material]

A crushed coconut shell carbonized product was placed in a small carbonization furnace and carbonized at 500 °C for 3 hours in a nitrogen atmosphere to obtain a carbonized product. The obtained carbonized product was placed in an activation furnace, steam heated in a preheating furnace was introduced into the activation furnace at a rate of 1 kg/h, and the temperature was raised to 900 °C over 8 hours for activation. The activated carbonized product was removed and cooled in a nitrogen atmosphere to obtain activated carbon. The activated carbon obtained in this manner was washed with water for 10 hours, drained, dried in an electric dryer maintained at 115 °C for 10 hours, and ground with a ball mill for 1 hour to obtain activated carbon 1-1. The average particle size of the activated carbon 1-1 was measured using a laser diffraction particle size distribution analyzer (SALD-2000J) manufactured by Shimadzu Corporation and found to be 5.5 μm. The

pore distribution of the activated carbon 1-1 was measured using a pore distribution analyzer (AUTOSORB-1 AS-1-MP) manufactured by Yuasa Ionics. As a result, the BET specific surface area was 2360 $m^2/g$, the mesopore volume ($V_1$) was 0.52 cc/g, the micropore volume ($V_2$) was 0.88 cc/g, and $V_1/V_2$ = 0.59.

[Production of Positive Electrode Precursor 1-1]

56.200 wt% of activated carbon 1-1, 2.000 wt% of carboxymethyl cellulose (CMC3), 30.000 wt% of lithium carbonate, 5.000 wt% of carbon black, as well as 4.500 wt% of acrylic latex (LTX), 2.000 wt% of PVP (polyvinylpyrrolidone), and distilled water were mixed so that the weight ratio of the solid content was 34.1 wt%, and this was dispersed for 20 minutes at a rotational speed of 2000 rpm using a rotation-revolution mixer "*Awatori Rentaro*®" manufactured by Thinky Corporation to obtain a mixture. A carbon nanotube dispersion was added to the obtained mixture so that carbon nanotubes were 0.120 wt% and CMC1 was 0.180 wt%, and positive electrode coating liquid 1-1 was prepared by dispersing for 10 minutes at a rotation speed of 2,000 rpm. The viscosity (ηb) and TI value of the obtained positive electrode coating liquid 1-1 were measured using an E-type viscometer TVE-35H manufactured by Toki Sangyo. As a result, the viscosity (ηb) was 2,340 mPa·s and the TI value was 5.1. The degree of dispersion of the obtained positive electrode coating liquid 1-1 was measured using a grain gauge manufactured by Yoshimitsu Seiki Co., Ltd. As a result, the particle size was 33 μm. The positive electrode precursor 1-1 was obtained by pressing using a roll press under the conditions of a pressure of 6 kN/cm and a surface temperature of the pressing parts of 25 °C after applying the positive electrode coating liquid 1-1 to one side of an aluminum foil having a thickness of 15 μm using a doctor blade and drying on a hot plate heated to 50 °C for 10 minutes. Using a Linear Gauge Sensor GS-551 manufactured by Ono Sokki Co., Ltd., the total thickness of the obtained positive electrode precursor 1-1 was measured at 10 arbitrary points, the film thickness of the positive electrode active material layer was obtained by subtracting the film thickness of the aluminum foil from the average value, and the film thickness of the positive electrode active material layer of the positive electrode precursor 1-1 was 60 μm. Using an electrode resistance measurement system RM2611 manufactured by Hioki Electric Corporation, the positive electrode mixture layer volume resistivity and the interfacial resistance of the positive electrode were calculated. As a result, the positive electrode precursor 1-1 had a mixture layer volume resistivity of 2.97 Ω·cm and an interfacial resistance of $2.37 \times 10^{-2}$ Ω·cm.

[Analysis of Positive Electrode Precursor]

The surface of the positive electrode active material layer of the positive electrode precursor 1-1 was coated with a gold film having a thickness of several nm by sputtering gold in a vacuum of 10 Pa. Next, an SEM image of the positive electrode active material layer surface was captured under atmospheric exposure using the conditions shown below.

(SEM Measurement Conditions)

- Measuring device: field emission scanning electron microscope S-4700 manufactured by Hitachi High-Technologies Corporation
- Acceleration voltage: 1 kV
- Emission current: 10 μA
- Measurement magnification: 20,000-fold
- Detector: Secondary electron detector
- Electron beam incident angle: 90°

When capturing an image, the brightness and contrast were adjusted so that there were no pixels in the SEM image that reached the maximum brightness value, and the average brightness value was within the range of 40% to 60% of the maximum brightness value.

[Positive Electrode Precursors 1-2 to 1-14 Production Examples]

Positive electrode precursors 1-2 to 1-14 were produced in the same manner as [Production of Positive Electrode Precursor 1-1] except that the amount of each component used was adjusted as shown in Table 2. Using an electrode resistance measurement system RM2611 manufactured by Hioki Electric Corporation, the mixture layer volume resistivity and interfacial resistance of the positive electrode precursor 1-11 were calculated. As a result, the mixture layer volume resistivity of positive electrode precursor 1-11 was 4.29 Q.cm, and the interfacial resistance was $1.41 \times 10^{-1}$ Ω·cm.

FIG. 2 is an SEM image of the positive electrode precursor 1-9 captured at a magnification of 20,000. It could be

confirmed that the single-wall carbon nanotubes (2) formed a bundle structure on the positive electrode active material (4), covering the positive electrode active material surface in a mesh pattern, and the active materials (3) were crosslinked. In the same manner as in the SEM images of the positive electrode precursors 1-1 to 1-8, 1-10 to 1-11, and 1-13 to 1-14 captured at a magnification of 20,000, it was confirmed that the single-wall carbon nanotubes formed a bundle structure on the positive electrode active material surface, covered the positive electrode active material surface in a mesh pattern, and crosslinked the positive electrode active materials. Positive electrode precursors 1-1 to 1-11 and 1-13 to 1-14 were all confirmed to have a bundle structure with an average fiber diameter of 9 nm from the average value of 20 arbitrary carbon nanotubes.

Table 2

| | Positive electrode precursor composition ratio (wt%) | | | | | | | | Electrode resistance | |
|---|---|---|---|---|---|---|---|---|---|---|
| | Activated carbon 1-1 | Lithium carbonate | CMC3 | Carbon black | LTX | PVP | CNT | CMC1 | Positive electrode mixture layer volume resistivity (Ω·cm) | Positive electrode interfacial resistance (Ω·cm$^2$) |
| Positive electrode precursor 1-1 | 56.200 | 30.000 | 2.000 | 5.000 | 4.500 | 2.000 | 0.120 | 0.180 | 2.97 | $2.37\times10^{-2}$ |
| Positive electrode precursor 1-2 | 56.150 | 30.000 | 2.000 | 5.000 | 4.500 | 2.000 | 0.140 | 0.210 | - | - |
| Positive electrode precursor 1-3 | 56.100 | 30.000 | 2.000 | 5.000 | 4.500 | 2.000 | 0.160 | 0.240 | - | - |
| Positive electrode precursor 1-4 | 56.050 | 30.000 | 2.000 | 5.000 | 4.500 | 2.000 | 0.180 | 0.270 | - | - |
| Positive electrode precursor 1-5 | 56.000 | 30.000 | 2.000 | 5.000 | 4.500 | 2.000 | 0.200 | 0.300 | - | - |
| Positive electrode precursor 1-6 | 56.250 | 30.000 | 2.000 | 5.000 | 4.500 | 2.000 | 0.100 | 0.150 | - | - |
| Positive electrode precursor 1-7 | 56.300 | 30.000 | 2.000 | 5.000 | 4.500 | 2.000 | 0.080 | 0.120 | - | - |
| Positive electrode precursor 1-8 | 56.350 | 30.000 | 2.000 | 5.000 | 4.500 | 2.000 | 0.060 | 0.090 | - | - |

(continued)

| | Positive electrode precursor composition ratio (wt%) | | | | | | | | Electrode resistance | |
|---|---|---|---|---|---|---|---|---|---|---|
| | Activated carbon 1-1 | Lithium carbonate | CMC3 | Carbon black | LTX | PVP | CNT | CMC1 | Positive electrode mixture layer volume resistivity (Ω·cm) | Positive electrode interfacial resistance (Ω·cm$^2$) |
| Positive electrode precursor 1-9 | 56.425 | 30.000 | 2.000 | 5.000 | 4.500 | 2.000 | 0.030 | 0.045 | - | - |
| Positive electrode precursor 1-10 | 56.475 | 30.000 | 2.000 | 5.000 | 4.500 | 2.000 | 0.010 | 0.015 | - | - |
| Positive electrode precursor 1-11 | 56.488 | 30.000 | 2.000 | 5.000 | 4.500 | 2.000 | 0.005 | 0.008 | - | - |
| Positive electrode precursor 1-12 | 56.500 | 30.000 | 2.000 | 5.000 | 4.500 | 2.000 | 0.000 | 0.000 | 4.29 | $1.41\times10^{-1}$ |
| Positive electrode precursor 1-13 | 55.950 | 30.000 | 2.000 | 5.000 | 4.500 | 2.000 | 0.220 | 0.330 | - | - |
| Positive electrode precursor 1-14 | 55.875 | 30.000 | 2.000 | 5.000 | 4.500 | 2.000 | 0.250 | 0.375 | - | - |

[Preparation of Electrolyte 1-1]

Using a mixed solvent of ethylene carbonate (EC):ethyl methyl carbonate (EMC) = 33:67 (volume ratio) as an organic solvent, nonaqueous electrolyte 1-1 was obtained by dissolving the electrolyte salts so that the concentration ratio of $LiPF_6$ and LiFSI was 1:1 and the total concentration was 1.2 mol/L.

[Preparation of electrolyte 1-2]

Using a mixed solvent of ethylene carbonate (EC):ethyl methyl carbonate (EMC) = 33:67 (volume ratio) as an organic solvent, nonaqueous electrolyte 1-2 was obtained by dissolving the electrolyte salts so that the concentration of bis(2,2,2-trifluoroethyl)N,N-diisopropylamide phosphate was 2.0 wt%, the concentration ratio of $LiPF_6$ and LiFSI was 1:1, and the total concentration was 1.2 mol/L.

<<Example 1-1>>

<Production of Nonaqueous Alkali Metal Power Storage Elements>

[Assembly Process]

One obtained positive electrode precursor 1-1 was cut so that the positive electrode active material layer had a

size of 4.4 cm × 9.4 cm. Next, one negative electrode 1-1 was cut so that the negative electrode active material layer had a size of 4.5 cm × 9.5 cm. One polyethylene separator (manufactured by Asahi Kasei Corporation, thickness: 15 μm) of a size of 4.7 cm × 9.8 cm was prepared. Using these, the positive electrode precursor 1-1, separator, and negative electrode 1-1 were laminated, in this order, so as to face each other so that the separator was interposed between the positive electrode active material layer and the negative electrode active material layer, to obtain an electrode laminate. A positive electrode terminal and a negative electrode terminal were ultrasonically welded to the obtained electrode body, which was then arranged in an exterior body formed of an aluminum laminate packaging material, and three sides thereof including the electrode terminal parts were heat-sealed.

[Injection, Impregnation, and Sealing Processes]

Approximately 2.5 g of the nonaqueous electrolyte 1-1 was injected into the exterior body in which the electrode laminate is housed under a dry air environment of atmospheric pressure, a temperature of 25 °C, and a dew point of -40 °C or lower. Next, the exterior body in which the electrode laminate is housed and the nonaqueous electrolyte were placed in a decompression chamber, and the pressure was reduced from atmospheric pressure to -87 kPa, then returned to atmospheric pressure and allowed to stand for 5 minutes. Thereafter, the pressure of the exterior body in the chamber was reduced from atmospheric pressure to -87 kPa, and after repeating the step of returning to atmospheric pressure four times, the chamber was allowed to stand at atmospheric pressure for 15 minutes. As a result of the above steps, the electrode laminate was impregnated with the nonaqueous electrolyte 1-1. The electrode laminate impregnated with nonaqueous electrolyte 1-1 was then placed in a vacuum sealing machine, and the exterior body was closed by sealing at 180 °C for 10 seconds at a pressure of 0.1 MPa in a state in which the pressure was reduced to -95 kPa.

[Alkali Metal Doping Process]

After charging the sealed electrode laminate at a temperature of 50 °C with a current value of 50 mA until the voltage reached 4.5 V, initial charging was performed by a method of continuously charging at a constant voltage of 4.5 V for 2 hours to dope the negative electrode with the alkali metal.

[Aging Process]

The electrode laminate after alkali metal doping was removed from the drying box, constant current discharge was performed at 50 mA in a 25 °C environment until the voltage reached 2.0 V, and the voltage was adjusted to 2.0 V by performing constant current discharge at 2.0 V for 1 hour. Next, the electrode assembly was stored in a constant temperature bath at 85 °C for 12 hours.

[Degassing Process]

After aging, a part of the exterior body was opened in a dry air environment at a temperature of 25 °C and a dew point of -40 °C, and the electrode laminate was removed. The removed electrode laminate was placed in a decompression chamber, and a diaphragm pump was used to reduce the pressure from atmospheric pressure to -80 kPa over 3 minutes, the pressure was then returned to atmospheric pressure over 3 minutes, and this process was repeated three times in total. Thereafter, the electrode laminate was placed back into the exterior body, and after reducing the pressure to -90 kPa using a vacuum sealer, the exterior body was sealed at 200 °C for 10 seconds with a pressure of 0.1 MPa to produce a nonaqueous alkali metal power storage element.

<Evaluation of Nonaqueous Alkali Metal Power Storage Element>

[Measurement of Internal Resistance Ra]

The internal resistance Ra (mΩ) of Example 1 is a value obtained by the following method. First, the nonaqueous alkali metal power storage element was charged at a constant current of 20 C in a constant temperature bath set at 25 °C until it reached 4.0 V, and then, a constant voltage charge of 4.0 V is applied thereto for a total of 30 minutes. Next, at a sampling interval of 0.05 seconds, constant current discharge is performed at a current value of 20 C to 2.0 V to obtain a discharge curve (time-voltage). In this discharge curve, when the voltage at a discharge time = 0 seconds obtained by extrapolating the voltage values at the discharge times of 1 second and 2 seconds by linear approximation is Eo, this value is calculated from the drop voltage $\Delta E = 4.0 - Eo$ as $Ra = \Delta E$ / (current value at 20 C). For one of the obtained nonaqueous alkali metal power storage elements, when the internal resistance Ra was measured by the method described above using a charge/discharge device (5 V, 10 A) manufactured by Aska Electronics Co., Ltd. in a constant temperature bath set at 25

°C, Ra was 80.5 mΩ. These values are shown in Table 3 as the initial internal resistance Ra.

[Measurement of Amount of Pre-Doping to Negative Electrode]

For another obtained nonaqueous alkali metal power storage element, the aluminum laminate packing material was opened, and the negative electrode was removed. An electrode assembly was produced using the obtained negative electrode as a working electrode, a counter electrode in which a metallic lithium foil having a thickness of 50 μm was attached to a copper foil, and a reference electrode in which a metallic lithium foil having a thickness of 50 μm was attached to an SUS foil, along with a separator composed of polyethylene. The obtained electrode body was inserted into an exterior body made of an aluminum laminate packaging material and impregnated with nonaqueous electrolyte 1-2 to produce a triode cell. Using a charging/discharging device (TOSCAT-3100) manufactured by Toyo System Co., Ltd., constant-current charging of the obtained tripolar cell was performed under the conditions of a current value of 7 mA at 25 °C until the potential of the working electrode reached 2.5 V. Based on the obtained charge capacity (mAh) and the weight (g) of the negative electrode active material layer, the amount of pre-doping to the negative electrode was 289 mAh/g.

[High-Voltage and High-Temperature Storage Test]

The capacity after high-voltage and high-temperature storage and the rate of change in resistance of Example 1 are values measured by the following methods. First, the cell corresponding to the nonaqueous alkali metal power storage element was charged at a constant current of 2 C in a constant temperature chamber set at 25 °C until it reached 4.2 V, and then, constant voltage discharge was performed by applying a constant voltage of 4.2 V for a total of 30 minutes. Next, after storing in an environment of 85 °C for 2 weeks, the internal resistance Rb after high-voltage and high-temperature storage was measured according to the internal resistance measuring method described above. The resistance change rate after high-voltage and high-temperature storage is defined as Rb/Ra. Another of the obtained nonaqueous alkali metal power storage elements was measured for volume according to Archimedes' principle using distilled water as a solvent. Next, a high-voltage and high-temperature storage test was performed by the method described above. When the internal resistance Rb was measured after the test, Rb was 91.3 mΩ, and this value is shown in Table 3 as the internal resistance Rb after high-voltage and high-temperature storage. The cell volume after the test was measured by the method described above, and from the change in volume before and after the high-voltage and high-temperature storage test, the amount of gas generated during the high-voltage and high-temperature storage test was 3.5 cc.

<<Examples 1-2 to 1-22, Comparative Examples 1-1 to 1-9>>

Nonaqueous alkali metal power storage elements were produced and evaluated in the same manner as in Example 1-1, except that the respective negative electrodes, positive electrode precursors, and nonaqueous electrolytes shown in Tables 1 and 2 were used. The evaluation results are shown in Table 3.

Table 3

| | Positive electrode precursor | A (wt%) | Negative electrode | B (wt%) | A/B | Ra (mΩ) | Rb (mΩ) | Rb/Ra | Pre-doping amount (mAh/g) |
|---|---|---|---|---|---|---|---|---|---|
| Ex 1-1 | Positive electrode precursor 1-1 | 0.120 | Negative electrode 1-1 | 0.080 | 1.50 | 80.5 | 91.3 | 1.13 | 289 |
| Ex 1-2 | Positive electrode precursor 1-2 | 0.140 | Negative electrode 1-1 | 0.080 | 1.75 | 81.4 | 91.2 | 1.12 | 291 |
| Ex 1-3 | Positive electrode precursor 1-3 | 0.160 | Negative electrode 1-1 | 0.080 | 2.00 | 83.4 | 91.4 | 1.10 | 294 |
| Ex 1-4 | Positive electrode precursor 1-4 | 0.180 | Negative electrode 1-1 | 0.080 | 2.25 | 84.5 | 92.0 | 1.09 | 293 |

(continued)

| | Positive electrode precursor | A (wt%) | Negative electrode | B (wt%) | A/B | Ra (mΩ) | Rb (mΩ) | Rb/Ra | Pre-doping amount (mAh/g) |
|---|---|---|---|---|---|---|---|---|---|
| Ex 1-5 | Positive electrode precursor 1-5 | 0.200 | Negative electrode 1-1 | 0.080 | 2.50 | 85.1 | 92.2 | 1.08 | 296 |
| Ex 1-6 | Positive electrode precursor 1-6 | 0.100 | Negative electrode 1-1 | 0.080 | 1.25 | 80.1 | 91.0 | 1.14 | 288 |
| Ex 1-7 | Positive electrode precursor 1-1 | 0.120 | Negative electrode 1-2 | 0.100 | 1.20 | 81.2 | 91.4 | 1.13 | 286 |
| Ex 1-8 | Positive electrode precursor 1-1 | 0.120 | Negative electrode 1-3 | 0.060 | 2.00 | 77.5 | 90.9 | 1.17 | 291 |
| Ex 1-9 | Positive electrode precursor 1-1 | 0.120 | Negative electrode 1-4 | 0.040 | 3.00 | 76.3 | 90.8 | 1.19 | 290 |
| Ex 1-10 | Positive electrode precursor 1-1 | 0.120 | Negative electrode 1-5 | 0.020 | 6.00 | 75.9 | 90.7 | 1.19 | 294 |
| Ex 1-11 | Positive electrode precursor 1-1 | 0.120 | Negative electrode 1-6 | 0.010 | 12.00 | 76.3 | 90.5 | 1.19 | 297 |
| Ex 1-12 | Positive electrode precursor 1-7 | 0.080 | Negative electrode 1-6 | 0.010 | 8.00 | 75.1 | 90.3 | 1.20 | 294 |
| Ex 1-13 | Positive electrode precursor 1-8 | 0.060 | Negative electrode 1-6 | 0.010 | 6.00 | 74.4 | 88.9 | 1.19 | 299 |
| Ex 1-14 | Positive electrode precursor 1-9 | 0.030 | Negative electrode 1-6 | 0.010 | 3.00 | 74.7 | 88.7 | 1.19 | 293 |
| Ex 1-15 | Positive electrode precursor 1-9 | 0.030 | Negative electrode 1-7 | 0.004 | 7.50 | 76.1 | 89.1 | 1.17 | 291 |
| Ex 1-16 | Positive electrode precursor 1-10 | 0.010 | Negative electrode 1-7 | 0.004 | 2.50 | 77.7 | 90.5 | 1.16 | 286 |
| Ex 1-17 | Positive electrode precursor 1-8 | 0.060 | Negative electrode 1-1 | 0.080 | 0.75 | 88.5 | 102.2 | 1.15 | 276 |
| Ex 1-18 | Positive electrode precursor 1-9 | 0.030 | Negative electrode 1-1 | 0.080 | 0.38 | 90.4 | 105.5 | 1.17 | 270 |
| Ex 1-19 | Positive electrode precursor 1-10 | 0.010 | Negative electrode 1-1 | 0.080 | 0.13 | 91.2 | 108.5 | 1.19 | 261 |

(continued)

| | Positive electrode precursor | A (wt%) | Negative electrode | B (wt%) | A/B | Ra (mΩ) | Rb (mΩ) | Rb/Ra | Pre-doping amount (mAh/g) |
|---|---|---|---|---|---|---|---|---|---|
| Ex 1-20 | Positive electrode precursor 1-11 | 0.005 | Negative electrode 1-8 | 0.002 | 2.50 | 89.5 | 113.2 | 1.26 | 274 |
| Ex 1-21 | Positive electrode precursor 1-13 | 0.220 | Negative electrode 1-11 | 0.140 | 1.57 | 91.9 | 105.5 | 1.15 | 268 |
| Ex 1-22 | Positive electrode precursor 1-14 | 0.250 | Negative electrode 1-12 | 0.160 | 1.56 | 93.5 | 108.8 | 1.16 | 262 |
| Comp Ex 1-1 | Positive electrode precursor 1-12 | 0.000 | Negative electrode 1-9 | 0.000 | - | 98.9 | 137.9 | 1.39 | 265 |
| Comp Ex 1-2 | Positive electrode precursor 1-12 | 0.000 | Negative electrode 1-8 | 0.002 | 0.00 | 96.5 | 128.7 | 1.33 | 260 |
| Comp Ex 1-3 | Positive electrode precursor 1-12 | 0.000 | Negative electrode 1-7 | 0.004 | 0.00 | 94.3 | 123.0 | 1.30 | 256 |
| Comp Ex 1-4 | Positive electrode precursor 1-12 | 0.000 | Negative electrode 1-6 | 0.010 | 0.00 | 92.0 | 118.1 | 1.28 | 251 |
| Comp Ex 1-5 | Positive electrode precursor 1-11 | 0.005 | Negative electrode 1-9 | 0.000 | - | 97.7 | 129.4 | 1.32 | 271 |
| Comp Ex 1-6 | Positive electrode precursor 1-10 | 0.010 | Negative electrode 1-9 | 0.000 | - | 95.0 | 126.8 | 1.33 | 275 |
| Comp Ex 1-7 | Positive electrode precursor 1-9 | 0.030 | Negative electrode 1-9 | 0.000 | - | 94.5 | 122.0 | 1.29 | 273 |
| Comp Ex 1-8 | Positive electrode precursor 1-8 | 0.060 | Negative electrode 1-9 | 0.000 | - | 94.6 | 120.1 | 1.27 | 278 |
| Comp Ex 1-9 | Positive electrode precursor 1-7 | 0.080 | Negative electrode 1-9 | 0.000 | - | 95.7 | 118.9 | 1.24 | 280 |

By mixing carbon nanotubes in both the positive electrode and the negative electrode, the initial internal resistance Ra and the internal resistance Rb after high voltage and high temperature storage were reduced. Conversely, Ra increased when the content of carbon nanotubes was excessively increased. By adjusting the content A of the carbon nanotubes in the positive electrode so as to be greater than the content B of the carbon nanotubes in the negative electrode, the initial internal resistance Ra was further reduced.

<<Example 1-23>>

A nonaqueous alkali metal power storage element was produced under the same conditions as in Example 1-1, except that nonaqueous electrolyte 1-2 was used as the nonaqueous electrolyte. When Ra was measured by the method described above, it was 83.2 mΩ, and the pre-doping amount of the negative electrode was 310 mAh. Next, a high voltage

high temperature storage test was performed by the method described above. When the internal resistance Rb was measured after the test, Rb was 91.6 mΩ. The cell volume after the test was measured by the method described above, and from the change in volume before and after the high voltage high temperature storage test, the amount of gas generated during the high voltage high temperature storage test was 1.8 cc.

<<Example 2>>

<Negative Electrode, Positive Electrode Precursor and Electrolytic Solution Production Examples>

[Preparation of Carbon Nanotube Dispersion]

0.400 wt% of commercially available single-wall carbon nanotubes, 0.600 wt% of carboxymethyl cellulose (CMC1) as a dispersant, and 99.000 wt% of distilled water were mixed, and this was dispersed at a peripheral speed of 17 m/s using a thin-film rotating high-speed mixer Filmix manufactured by PRIMIX to prepare a carbon nanotube dispersion.

[Preparation of Negative Electrode 2-1]

94.800 wt% of artificial graphite having an average particle size of 4.5 μm, 3.000 wt% of carbon black, 2.000 wt% of carboxymethyl cellulose (CMC2) as a dispersant, and distilled water were mixed to obtain a mixture having a solid weight ratio of 28.0 wt%. The obtained mixture was dispersed for 10 minutes at a rotation speed of 2,000 rpm using a rotation-revolution mixer "*Awatori Rentaro*®" manufactured by Thinky Corporation to obtain a mixture. A carbon nanotube dispersion was added to the mixture prepared as described above so that the carbon nanotubes were 0.080 wt% and CMC1 was 0.120 wt%, and dispersion was then performed for 10 minutes at a rotation speed of 2,000 rpm to prepare a negative electrode coating liquid 2-1. The viscosity (ηb) and TI value of the obtained negative electrode coating liquid 2-1 were measured using an E-type viscometer TVE-35H manufactured by Toki Sangyo. As a result, the viscosity (ηb) was 1,560 mPa·s and the TI value was 3.7. The negative electrode coating liquid 2-1 was applied to one side of an electrolytic copper foil having a thickness of 10 μm using a doctor blade and dried on a hot plate heated to 50 °C for 10 minutes. Next, using a roll press, a negative electrode 2-1 was produced by pressing under the conditions of a pressure of 5 kN/cm and a surface temperature of the pressing parts of 25 °C. Using a film thickness gauge "Linear Gauge Sensor GS-551" manufactured by Ono Sokki Co., Ltd., the total thickness of the negative electrode 2-1 was measured at 10 arbitrary points, the thickness of the electrodeposited copper foil was subtracted from the average value to obtain the film thickness of the negative electrode active material layer, and the film thickness of the negative electrode active material layer of negative electrode 2-1 was 30 μm.

[Analysis of Negative Electrode]

The surface of the negative electrode active material layer of the negative electrode 2-1 was coated with a gold film having a thickness of several nm by sputtering gold in a vacuum of 10 Pa. Next, an SEM image of the negative electrode active material layer surface was photographed under atmospheric exposure using the conditions shown below.

(SEM Measurement Conditions)

- Measuring device: field emission scanning electron microscope S-4700 manufactured by Hitachi High-Technologies Corporation
- Acceleration voltage: 1 kV
- Emission current: 10 μA
- Measurement magnification: 20,000-fold
- Detector: Secondary electron detector
- Electron beam incident angle: 90°

When capturing an image, the brightness and contrast were adjusted so that there were no pixels in the SEM image that reached the maximum brightness value, and the average brightness value was within the range of 40% to 60% of the maximum brightness value. In the negative electrode 2-1, as in FIG. 1, mesh-like coating and crosslinking by bundled single-wall carbon nanotubes were confirmed. It was confirmed from the average value of 20 arbitrary carbon nanotubes that negative electrode 2-1 had an average fiber diameter of 9 nm.

[Production of Negative Electrode 2-2]

Negative electrode 2-2 was produced in the same manner as [Negative Electrode 2-1 Production Example], except that the amount of each component used was adjusted as shown in Table 4.

Table 4

| | Negative electrode composition ratio (wt%) | | | | |
|---|---|---|---|---|---|
| | Artificial graphite | Carbon black | CMC2 | CNT | CMC1 |
| Negative electrode 2-1 | 94.800 | 3.000 | 2.000 | 0.080 | 0.120 |
| Negative electrode 2-2 | 95.000 | 3.000 | 2.000 | 0.000 | 0.000 |

[Preparation of Positive Electrode Active Material]

A crushed coconut shell carbonized product was placed in a small carbonization furnace and carbonized at 500 °C for 3 hours in a nitrogen atmosphere to obtain a carbonized product. The obtained carbonized product was placed in an activation furnace, steam heated in a preheating furnace was introduced into the activation furnace at a rate of 1 kg/h, and the temperature was raised to 900 °C over 8 hours for activation. The activated carbonized product was removed and cooled in a nitrogen atmosphere to obtain activated carbon. The activated carbon obtained in this manner was washed with water for 10 hours, drained, dried in an electric dryer maintained at 115 °C for 10 hours, and ground with a ball mill for 1 hour to obtain activated carbon 2-1. The average particle size of the activated carbon 2-1 was measured using a laser diffraction particle size distribution analyzer (SALD-2000J) manufactured by Shimadzu Corporation and found to be 5.5 μm. The pore distribution of the activated carbon 2-1 was measured using a pore distribution analyzer (AUTOSORB-1 AS-1-MP) manufactured by Yuasa Ionics. As a result, the BET specific surface area was 2360 $m^2/g$, the mesopore volume ($V_1$) was 0.52 cc/g, the micropore volume ($V_2$) was 0.88 cc/g, and $V_1/V_2$ = 0.59.

[Production of Positive Electrode Precursor 2-1]

56.200 wt% of activated carbon 2-1, 2.000 wt% of carboxymethyl cellulose (CMC3), 30.000 wt% of lithium carbonate, 5.000 wt% of carbon black, as well as 4.500 wt% of acrylic latex (LTX), 2.000 wt% of PVP (polyvinylpyrrolidone), and distilled water were mixed so that the weight ratio of the solid content was 34.1 wt%, and this was dispersed for 20 minutes at a rotational speed of 2000 rpm using a rotation-revolution mixer "*Awatori Rentaro*®" manufactured by Thinky Corporation to obtain a mixture. A carbon nanotube dispersion was added to the obtained mixture so that carbon nanotubes were 0.120 wt% and CMC1 was 0.180 wt%, and positive electrode coating liquid 2-1 was prepared by dispersing for 10 minutes at a rotation speed of 2,000 rpm. The viscosity (ηb) and TI value of the obtained positive electrode coating liquid 2-1 were measured using an E-type viscometer TVE-35H manufactured by Toki Sangyo. As a result, the viscosity (ηb) was 2,340 mPa·s and the TI value was 5.1. The degree of dispersion of the obtained positive electrode coating liquid 2-1 was measured using a grain gauge manufactured by Yoshimitsu Seiki Co., Ltd. As a result, the particle size was 33 μm. The positive electrode precursor 2-1 was obtained by pressing using a roll press under the conditions of a pressure of 6 kN/cm and a surface temperature of the pressing parts of 25 °C after applying the positive electrode coating liquid 2-1 to one side of an aluminum foil having a thickness of 15 μm using a doctor blade and drying on a hot plate heated to 50 °C for 10 minutes. Using a Linear Gauge Sensor GS-551 manufactured by Ono Sokki Co., Ltd., the total thickness of the obtained positive electrode precursor 2-1 was measured at 10 arbitrary points, the film thickness of the positive electrode active material layer was obtained by subtracting the film thickness of the aluminum foil from the average value, and the film thickness of the positive electrode active material layer of the positive electrode precursor 2-1 was 60 μm.

[Analysis of Positive Electrode Precursor]

The surface of the positive electrode active material layer of the positive electrode precursor 2-1 was coated with a gold film having a thickness of several nm by sputtering gold in a vacuum of 10 Pa. Next, an SEM image of the positive electrode active material layer surface was captured under atmospheric exposure using the conditions shown below.

(SEM Measurement Conditions)

- Measuring device: field emission scanning electron microscope S-4700 manufactured by Hitachi High-Technologies

Corporation

- Acceleration voltage: 1 kV
- Emission current: 10 μA
- Measurement magnification: 20,000-fold
- Detector: Secondary electron detector
- Electron beam incident angle: 90°

When capturing an image, the brightness and contrast were adjusted so that there were no pixels in the SEM image that reached the maximum brightness value, and the average brightness value was within the range of 40% to 60% of the maximum brightness value.

[Production of Positive Electrode Precursor 2-2]

Positive electrode precursor 2-2 was produced in the same manner as [Production of Positive Electrode Precursor 2-1], except that the amount of each component used was adjusted as shown in Table 5.

From the SEM image of the positive electrode precursor 2-1 taken at a magnification of 30,000, it could be confirmed that the single-wall carbon nanotubes formed a bundle structure on the positive electrode active material surface, covered the positive electrode active material surface in a mesh pattern, and crosslinked the positive electrode active materials. It could also be confirmed from the average value of 20 arbitrary carbon nanotubes that the average fiber diameter was 9 nm.

Table 5

| | Positive electrode precursor composition ratio (wt%) | | | | | | | |
|---|---|---|---|---|---|---|---|---|
| | Activated carbon 2-1 | Lithium carbonate | CMC3 | Carbon black | LTX | PVP | CNT | CMC1 |
| Positive electrode precursor 2-1 | 56.200 | 30.000 | 2.000 | 5.000 | 4.500 | 2.000 | 0.120 | 0.180 |
| Positive electrode precursor 2-2 | 56.500 | 30.000 | 2.000 | 5.000 | 4.500 | 2.000 | 0.000 | 0.000 |

[Preparation of Electrolyte 2-1]

Using a mixed solvent of ethylene carbonate (EC):ethyl methyl carbonate (EMC) = 33:67 (volume ratio) as an organic solvent, bis(2,2,2-trifluoroethyl) N,N-diisopropylamide phosphate as additive 1 was mixed to 2.0 wt%, and nonaqueous electrolyte 2-1 was obtained by dissolving the electrolyte salts so that the concentration ratio of $LiPF_6$ and LiFSI was 1:1, and the total concentration was 1.2 mol/L.

[Production of Electrolyte 2-11]

Using a mixed solvent of ethylene carbonate (EC):ethyl methyl carbonate (EMC) = 33:67 (volume ratio) as an organic solvent, nonaqueous electrolyte 2-11 was obtained by dissolving the electrolyte salts so that the concentration ratio of $LiPF_6$ and LiFSI was 1:1, and the total concentration was 1.2 mol/L.

[Production of Electrolytes 2-2 to 2-10 and 2-12 to 2-15]

Nonaqueous electrolytes 2-2 to 2-10 and 2-12 to 2-15 were produced in the same manner as [Production of Electrolyte 2-1] except that the amount of additive 1 used was adjusted as shown in Table 6.

<<Example 2-1>>

<Production of Nonaqueous Alkali Metal Power Storage Element>

[Assembly Process]

One obtained positive electrode precursor 2-1 was cut so that the positive electrode active material layer had a size of 4.4 cm × 9.4 cm. Next, one negative electrode 2-1 was cut so that the negative electrode active material layer had a

size of 4.5 cm × 9.5 cm. One polyethylene separator (manufactured by Asahi Kasei Corporation, thickness: 15 μm) of a size of 4.7 cm × 9.8 cm was prepared. Using these, the positive electrode precursor 2-1, separator, and negative electrode 2-1 were laminated, in this order, so as to face each other so that the separator was interposed between the positive electrode active material layer and the negative electrode active material layer, to obtain an electrode laminate. A positive electrode terminal and a negative electrode terminal were ultrasonically welded to the obtained electrode body, which was then arranged in an exterior body formed of an aluminum laminate packaging material, and three sides thereof including the electrode terminal parts were heat-sealed.

[Injection, Impregnation, and Sealing Processes]

Approximately 2.5 g of the nonaqueous electrolyte 2-1 was injected into the exterior body in which the electrode laminate is housed under a dry air environment of atmospheric pressure, a temperature of 25 °C, and a dew point of -40 °C or lower. Next, the exterior body in which the electrode laminate is housed and the nonaqueous electrolyte were placed in a decompression chamber, and the pressure was reduced from atmospheric pressure to -87 kPa, then returned to atmospheric pressure and allowed to stand for 5 minutes. Thereafter, after repeating the process of reducing the pressure of the exterior body in the chamber from atmospheric pressure to -87 kPa and returning to atmospheric pressure four times, the chamber was allowed to stand at atmospheric pressure for 15 minutes. As a result of the above steps, the electrode laminate was impregnated with the nonaqueous electrolyte 2-1. The electrode laminate impregnated with nonaqueous electrolyte 2-1 was then placed in a vacuum sealing machine, and the exterior body was closed by sealing at 180 °C for 10 seconds at a pressure of 0.1 MPa in a state in which the pressure was reduced to -95 kPa.

[Alkali Metal Doping Process]

After charging the sealed electrode laminate at a temperature of 50 °C with a current value of 50 mA until the voltage reached 4.5 V, initial charging was performed by a method of continuously charging at a constant voltage of 4.5 V for 2 hours to dope the negative electrode with the alkali metal.

[Aging Process]

The electrode laminate after alkali metal doping was removed from the drying box, constant current discharge was performed at 50 mA in a 25 °C environment until the voltage reached 2.0 V, and the voltage was adjusted to 2.0 V by performing constant current discharge at 2.0 V for 1 hour. Next, the electrode assembly was stored in a constant temperature bath at 85 °C for 12 hours.

[Degassing Process]

After aging, a part of the exterior body was opened in a dry air environment at a temperature of 25 °C and a dew point of -40 °C, and the electrode laminate was removed. The removed electrode laminate was placed in a decompression chamber, and a diaphragm pump was used to reduce the pressure from atmospheric pressure to -80 kPa over 3 minutes, the pressure was then returned to atmospheric pressure over 3 minutes, and this process was repeated three times in total. Thereafter, the electrode laminate was placed back into the exterior body, and after reducing the pressure to -90 kPa using a vacuum sealer, the exterior body was sealed at 200 °C for 10 seconds with a pressure of 0.1 MPa to produce a nonaqueous alkali metal power storage element.

<Evaluation of Nonaqueous Alkali Metal Power Storage Element>

[Measurement of Internal Resistance Ra]

The internal resistance Ra (mΩ) of Example 2 is a value obtained by the following method. First, the nonaqueous alkali metal power storage element was charged at a constant current of 20 C in a constant temperature bath set at 25 °C until it reached 4.0 V, and then, a constant voltage charge of 4.0 V is applied thereto for a total of 30 minutes. Next, at a sampling interval of 0.05 seconds, constant current discharge is performed at a current value of 20 C to 2.0 V to obtain a discharge curve (time-voltage). In this discharge curve, when the voltage at a discharge time = 0 seconds obtained by extrapolating the voltage values at the discharge times of 1 second and 2 seconds by linear approximation is Eo, this value is calculated from the drop voltage $\Delta E = 4.0 - Eo$ as $Ra = \Delta E$ / (current value at 20 C). For one of the obtained nonaqueous alkali metal power storage elements, when the internal resistance Ra was measured by the method described above using a charge/discharge device (5 V, 10 A) manufactured by Aska Electronics Co., Ltd. in a constant temperature bath set at 25 °C, Ra was 83.2 mΩ. These values are shown in Table 3 as the initial internal resistance Ra.

[Measurement of Amount of Pre-Doping to Negative Electrode]

For another obtained nonaqueous alkali metal power storage element, the aluminum laminate packing material was opened, and the negative electrode was removed. An electrode assembly was produced using the obtained negative electrode as a working electrode, a counter electrode in which a metallic lithium foil having a thickness of 50 μm was attached to a copper foil, and a reference electrode in which a metallic lithium foil having a thickness of 50 μm was attached to an SUS foil, along with a separator composed of polyethylene. The obtained electrode body was inserted into an exterior body made of an aluminum laminate packaging material and impregnated with nonaqueous electrolyte 2-11 to produce a triode cell. Using a charging/discharging device (TOSCAT-3100) manufactured by Toyo System Co., Ltd., constant-current charging of the obtained tripolar cell was performed under the conditions of a current value of 7 mA at 25 °C until the potential of the working electrode reached 2.5 V. Based on the obtained charge capacity (mAh) and the weight (g) of the negative electrode active material layer, the amount of pre-doping to the negative electrode was 310 mAh/g.

[High-Voltage and High-Temperature Storage Test]

The capacity after high-voltage and high-temperature storage and the rate of change in resistance of Example 2 are values measured by the following methods. First, the cell corresponding to the nonaqueous alkali metal power storage element was charged at a constant current of 2 C in a constant temperature chamber set at 25 °C until it reached 4.2 V, and then, constant voltage discharge was performed by applying a constant voltage of 4.2 V for a total of 30 minutes. Next, after storing in an environment of 85 °C for 2 weeks, the internal resistance Rb after high-voltage and high-temperature storage was measured according to the internal resistance measuring method described above. The resistance change rate after high-voltage and high-temperature storage is defined as Rb/Ra. Another of the obtained nonaqueous alkali metal power storage elements was measured for volume according to Archimedes' principle using distilled water as a solvent. Next, a high-voltage and high-temperature storage test was performed by the method described above. When the internal resistance Rb was measured after the test, Rb was 91.6 mΩ, and this value is shown in Table 3 as the internal resistance Rb after high-voltage and high-temperature storage. The cell volume after the test was measured by the method described above, and from the change in volume before and after the high-voltage and high-temperature storage test, the amount of gas generated during the high-voltage and high-temperature storage test was 1.8 cc.

<<Examples 2-2 to 2-11 and Comparative Examples 2-1 to 2-4>>

Nonaqueous alkali metal power storage elements were produced and evaluated in the same manner as in Example 2-1, except that the components described in Table 6 were used as the negative electrode, positive electrode precursor, and nonaqueous electrolyte. The evaluation results are shown in Table 6.

By including the phosphate ester amide represented by general formula (1) in the nonaqueous electrolyte, the reaction between the electrolyte and the alkali metal compound in the alkali metal doping step was suppressed, the alkali metal doping reaction to the negative electrode was made efficient, and the amount of pre-doping of the negative electrode was increased. In addition, gas generation in a high-temperature and high-voltage environment of 80 °C and 4.2 V could be suppressed. By mixing carbon nanotubes in both the positive electrode and the negative electrode, the initial internal resistance Ra and the internal resistance Rb after high-voltage and high-temperature storage were reduced.

<<Examples 2-12 to 2-16>>

Additives 2 to 5 shown in Table 6 were further added to nonaqueous electrolyte 2-1 to produce nonaqueous electrolytes 2-16 to 2-22. Nonaqueous alkali metal power storage elements were produced under the same conditions as in Example 2-1, except that nonaqueous electrolytes 2-16 to 2-22, respectively, were used. The evaluation results are shown in Table 6.

Table 6

| | Nonaqueous electrolyte | Additive | Additive mixing amount (wt%) | Positive electrode precursor | Negative electrode | Ra (mΩ) | Rb (mΩ) | Rb/Ra | Gas amount (cc) | Pre-doping amount (mAh/g) |
|---|---|---|---|---|---|---|---|---|---|---|
| Ex 2-1 | Nonaqueous electrolyte 2-1 | Additive 1 | 2 | Positive electrode precursor 2-1 | Negative electrode 2-1 | 83.2 | 91.6 | 1.10 | 1.8 | 310 |

(continued)

| | Nonaqueous electrolyte | Additive | Additive mixing amount (wt%) | Positive electrode precursor | Negative electrode | Ra (mΩ) | Rb (mΩ) | Rb/Ra | Gas amount (cc) | Pre-doping amount (mAh/g) |
|---|---|---|---|---|---|---|---|---|---|---|
| Ex 2-2 | Nonaqueous electrolyte 2-2 | Additive 1 | 1 | Positive electrode precursor 2-1 | Negative electrode 2-1 | 83.0 | 93.0 | 1.12 | 2.0 | 305 |
| Ex 2-3 | Nonaqueous electrolyte 2-3 | Additive 1 | 0.5 | Positive electrode precursor 2-1 | Negative electrode 2-1 | 82.4 | 93.2 | 1.13 | 2.3 | 303 |
| Ex 2-4 | Nonaqueous electrolyte 2-4 | Additive 1 | 0.3 | Positive electrode precursor 2-1 | Negative electrode 2-1 | 82.3 | 93.3 | 1.13 | 2.4 | 299 |
| Ex 2-5 | Nonaqueous electrolyte 2-5 | Additive 1 | 0.1 | Positive electrode precursor 2-1 | Negative electrode 2-1 | 81.6 | 92.2 | 1.13 | 2.6 | 298 |
| Ex 2-6 | Nonaqueous electrolyte 2-6 | Additive 1 | 3 | Positive electrode precursor 2-1 | Negative electrode 2-1 | 84.1 | 93.0 | 1.11 | 1.7 | 309 |
| Ex 2-7 | Nonaqueous electrolyte 2-7 | Additive 1 | 4 | Positive electrode precursor 2-1 | Negative electrode 2-1 | 85.7 | 92.4 | 1.08 | 1.6 | 316 |
| Ex 2-8 | Nonaqueous electrolyte 2-8 | Additive 1 | 5 | Positive electrode precursor 2-1 | Negative electrode 2-1 | 86.0 | 93.0 | 1.08 | 1.7 | 315 |
| Ex 2-9 | Nonaqueous electrolyte 2-9 | Additive 1 | 6 | Positive electrode precursor 2-1 | Negative electrode 2-1 | 87.2 | 95.1 | 1.09 | 1.5 | 315 |
| Ex 2-10 | Nonaqueous electrolyte 2-10 | Additive 1 | 7 | Positive electrode precursor 2-1 | Negative electrode 2-1 | 89.8 | 99.0 | 1.10 | 1.6 | 316 |
| Ex 2-11 | Nonaqueous electrolyte 2-11 | - | 0 | Positive electrode precursor 2-1 | Negative electrode 2-1 | 80.5 | 91.3 | 1.13 | 3.5 | 289 |
| Comp Ex 2-1 | Nonaqueous electrolyte 2-12 | Additive 1 | 2 | Positive electrode precursor 2-2 | Negative electrode 2-1 | 94.5 | 119.8 | 1.27 | 2.1 | 284 |
| Comp Ex 2-2 | Nonaqueous electrolyte 2-13 | Additive 1 | 2 | Positive electrode precursor 2-1 | Negative electrode 2-2 | 96.6 | 122.2 | 1.27 | 2.0 | 283 |

(continued)

| | Nonaqueous electrolyte | Additive | Additive mixing amount (wt%) | Positive electrode precursor | Negative electrode | Ra (mΩ) | Rb (mΩ) | Rb/Ra | Gas amount (cc) | Pre-doping amount (mAh/g) |
|---|---|---|---|---|---|---|---|---|---|---|
| Comp Ex 2-3 | Nonaqueous electrolyte 2-14 | Additive 1 | 2 | Positive electrode precursor 2-2 | Negative electrode 2-2 | 105.5 | 142.0 | 1.35 | 2.4 | 274 |
| Comp Ex 2-4 | Nonaqueous electrolyte 2-15 | - | 2 | Positive electrode precursor 2-2 | Negative electrode 2-2 | 98.9 | 137.9 | 1.39 | 5.7 | 265 |
| Ex 2-12 | Nonaqueous electrolyte 2-16 | Additive 2 | 0.01 | Positive electrode precursor 2-1 | Negative electrode 2-1 | 83.5 | 89.5 | 1.07 | 1.9 | 310 |
| Ex 2-13 | Nonaqueous electrolyte 2-17 | Additive 2 | 0.2 | Positive electrode precursor 2-1 | Negative electrode 2-1 | 84.2 | 89.8 | 1.07 | 2.2 | 314 |
| Ex 2-14 | Nonaqueous electrolyte 2-20 | Additive 3 | 2 | Positive electrode precursor 2-1 | Negative electrode 2-1 | 85.3 | 91.5 | 1.07 | 1.3 | 306 |
| Ex 2-15 | Nonaqueous electrolyte 2-21 | Additive 4 | 2 | Positive electrode precursor 2-1 | Negative electrode 2-1 | 86.2 | 91.9 | 1.07 | 1.2 | 306 |
| Ex 2-16 | Nonaqueous electrolyte 2-22 | Additive 5 | 2 | Positive electrode precursor 2-1 | Negative electrode 2-1 | 86.3 | 92.0 | 1.07 | 1.2 | 303 |

Additive 1: bis(2,2,2-trifluoroethyl) N,N-diisopropylamide phosphate
Additive 2: $LiPO_2F_2$
Additive 3: 2-amino-1,1,3-tricyano-1-propene
Additive 4: 1-butyl-3-methylimidazolium tricyanometanide
Additive 5: lithium tricyanometanide

<<Example 3>>

Example 3 below demonstrates the effect of including carbon nanotubes and a compound containing a specific amount of elemental copper in the positive electrode active material layer of the positive electrode precursor (and the positive electrode). Examples which contain carbon nanotubes and a compound containing a specific amount of copper element in the positive electrode active material layer are referred to as "Examples", and Examples which do not include carbon nanotubes are referred to as "Comparative Examples."

[Doping Efficiency]

The doping efficiency η (%) of Example 3 is a value obtained by the following method.

Alkali metal doping was performed by a method of performing constant current charging of the positive electrode monopolar cell at a current value per electrode area of the positive electrode of 0.49 mA/$cm^2$ in a constant temperature bath set at 45 °Cuntil the voltage reached 4.5 V, and then continuing constant voltage charging at 4.5 V for 3 hours. At this

time, when the amount of increase in capacity at a cell voltage of 4.3 V or higher is defined as Q (mAh), the weight of the alkali metal compound contained in the positive electrode active material layer is defined as M (g), and the theoretical capacity of the alkali metal compound is defined as B (mAh/g), the doping efficiency $\eta$ (%) is calculated by $\eta = Q / (M \times B) \times 100$. B is obtained by dividing the product of the Faraday constant (96500 C/mol = 26.8 Ah/mol) and the alkali metal amount (for example, 2 for $Li_2CO_3$ and 3 for $Li_3PO_4$) contained in the chemical formula by the molecular weight of the compound.

[Negative Electrode Potential]

The negative electrode potential Vp (mV) of Example 3 is a value obtained by the following method.
Constant current discharge is performed at a current value of 2 C until reaching 2.2 V in a constant temperature bath set at 25 °C, and then, constant voltage discharge is performed by applying a constant voltage of 2.2 V for 20 minutes. Thereafter, the potential relative to a metal lithium reference electrode was measured to obtain the negative electrode potential (mV).

[Capacitance]

The capacity Qa (mAh) of Example 3 is a value obtained by the following method.
First, the cell corresponding to the nonaqueous lithium power storage element was subjected to constant current charging at a current value of 2 C in a constant temperature bath set at 25 °C until reaching 4.0 V, and then, a constant voltage charge of 4.0 V was applied thereto for a total of 30 minutes. Thereafter, the capacity at the time of performing constant current discharge at a current value of 2 C to 2.0 V is defined as Qa (mAh).
The current discharge rate (also referred to as the "C rate") as used herein is the relative ratio of the current during discharge to the discharge capacity, and in general, 1 C is the current value at which discharge is completed in one hour when performing constant current discharge from the upper limit voltage to the lower limit voltage. In the present specification, 1 C is the current value at which discharge is completed in one hour when performing constant current discharge from the upper limit voltage of 4.0 V to the lower limit voltage of 2.0 V.

[Internal Resistance]

The internal resistance Ra (m$\Omega$) of Example 3 is a value obtained by the following method.
First, the nonaqueous lithium metal power storage element was charged in a constant temperature bath set at 25 °C at a current value of 20 C until it reached 4.0 V, and then, a constant voltage charge of 4.0 V was applied thereto for a total of 30 minutes. Next, at a sampling interval of 0.05 seconds, constant current discharge was performed at a current value of 20 C to 2.0 V to obtain a discharge curve (time-voltage). In this discharge curve, when the voltage at a discharge time = 0 seconds obtained by extrapolating the voltage values at the discharge times of 1 second and 2 seconds by linear approximation is Eo, this value is calculated from the drop voltage $\Delta E = 4.0 - Eo$ as $Ra = \Delta E$ / (current value at 20 C).

[Self-Discharge Coefficient]

The self-discharge coefficient A ($V/h^{1/2}$) of Example 3 is a value obtained by the following method.
First, the cell corresponding to the nonaqueous lithium power storage element was charged in a constant temperature bath set at 25 °C at a current value of 2 C until reaching 4.0 V, and then, constant voltage discharge was performed by applying a constant voltage of 4.0 V thereto for 30 minutes. The charge completion time at this time is taken as the start time of the self-discharge coefficient measurement. Thereafter, the cell was mounted on a jig applying a pressure of 1.0 kgf/cm$^2$ and stored in a constant temperature bath set at 25 °C for Ta (h). After storage, the cell voltage of the jig was measured while attached to the jig, and the value at this time was defined as Va. The self-discharge coefficient A ($V/h^{1/2}$) was determined by $A = (4.0 - Va) / (Ta)^{1/2}$. In the present specification, Ta = 96 (h), i.e., the self-discharge coefficient was calculated by storing the cell under pressure for 4 days.

[High-voltage and High-Temperature Storage Test]

The capacity retention rate (%) and resistance change rate (%) after high-voltage and high temperature storage of Example 3 are values measured by the following methods.
First, the cell corresponding to the nonaqueous alkali metal power storage element was charged at a constant current of 2 C in a constant temperature chamber set at 25 °C until it reached 4.0 V, and then, constant voltage discharge was performed by applying a constant voltage of 4.0 V for a total of 30 minutes. Next, after storing in an environment of 80 °C for one week, the capacitance Qb and the internal resistance Rb after high-voltage and high-temperature storage were measured according to the capacitance and internal resistance measuring methods described above. Let $Qb / Qa \times 100$ is

the capacity retention rate (%) after high-voltage and high-temperature storage, and Rb / Ra × 100 is the resistance change rate (%) after high-voltage and high-temperature storage.

[High-Temperature Float Test]

The gas generation amount V (cc) in the high-temperature float test of Example 3 was measured by the following method.

First, the cell volume before the float test was calculated from the buoyancy applied to the cell in a solvent at room temperature (Archimedes method). The volume of the cell at this time is defined as Va (cc). Next, the cell corresponding to the nonaqueous lithium power storage element was charged in a constant temperature bath set at 80 °C at a current value of 2 C until reaching 3.6 V, and constant voltage discharge was performed by applying a constant voltage of 3.6 V for a total of two weeks. Thereafter, the volume of the cell at room temperature after the test was calculated by the Archimedes method described above. When the volume of the cell at this time is defined as Vb (cc), the amount of gas generated V (cc) in the high-temperature float test was determined from V = Vb - Va.

[Preparation of Positive Electrode Active Material]

The following were used as the activated carbon. The average particle size was measured using a laser diffraction particle size distribution analyzer (SALD-2000J) manufactured by Shimadzu Corporation.

(1) Activated carbon 3-1 having a particle size of 4.8 μm using coconut shell as a raw material and activated by steam
(2) Activated carbon 3-2 having a particle size of 6.1 μm using charcoal as a raw material and activated by steam

[Preparation of Carbon Nanotubes Dispersion]

A carbon nanotubes dispersion was prepared by mixing 6.0 wt% of commercially available multilayer carbon nanotubes (CNT) (average fiber diameter: 15 nm, average fiber length: 5 μm), 1.0 wt% of carboxymethyl cellulose (CMC) as a dispersant, and 91.0 wt% of distilled water, and dispersing with a planetary ball mill at a speed of 100 rpm for 120 minutes.

[Preparation of Positive Electrode Precursor 3-1]

54.7 wt% of activated carbon 3-1 as the positive electrode active material, 38.1 wt% of lithium carbonate as the alkali metal compound, 1.44 wt% of carboxymethyl cellulose as dispersant 1, 1.70 wt% of PVP (polyvinylpyrrolidone) as dispersant 2, as well as 3.96 wt% of acrylic latex (LTX) as a binder, an amount of anhydrous copper sulfate equivalent to 10 ppm in terms of copper atomic weight as a copper compound, an amount of the carbon nanotubes dispersion equivalent to 0.099 wt% of the carbon nanotubes, and distilled water were mixed so that the weight ratio of the solid content was 29.0%, and this mixture was dispersed for 10 minutes at a rotational speed of 2000 rpm using a rotation-revolution mixer "*Awatori Rentaro*®" manufactured by Thinky Corporation to obtain positive electrode coating liquid 3-1.

Positive electrode precursor 3-1 was obtained by pressing using a roll press under the conditions of a pressure of 6 kN/cm and a surface temperature of the pressing parts of 25 °C after applying the positive electrode coating liquid 3-1 to one side of an aluminum foil having a thickness of 15 μm using a doctor blade and drying on a hot plate heated to 50 °C for 10 minutes.

Using a Linear Gauge Sensor GS-551 manufactured by Ono Sokki Co., Ltd., the total thickness of the obtained positive electrode precursor 3-1 was measured at 10 arbitrary points, the film thickness of the positive electrode active material layer was obtained by subtracting the film thickness of the aluminum foil from the average value, and the film thickness of the positive electrode active material layer of the positive electrode precursor 3-1 was 72 μm.

[Production of Positive Electrode Precursors 3-2 to 3-20]

Positive electrode precursors 3-2 to 3-20 were produced in the same manner as [Production of Positive Electrode Precursor 3-1], except that the types and amounts of each component were as shown in Table 7 below.

Table 7

| | Activated carbon | Copper compound species | Activated carbon (wt%) | Alkali metal compound (wt%) | Carbon black (wt%) | Binder (wt%) | Dispersant 1 (wt%) | Dispersant 2 (wt%) | CNT (wt%) | Elemental copper (weight ppm) |
|---|---|---|---|---|---|---|---|---|---|---|
| Positive electrode precursor 3-1 | Activated carbon 3-1 | $CuSO_4$ | 54.7 | 38.1 | 0 | 3.96 | 1.44 | 1.70 | 0.099 | 10 |
| Positive electrode precursor 3-2 | Activated carbon 3-1 | $CuSO_4$ | 54.5 | 37.9 | 0 | 3.96 | 1.44 | 1.70 | 0.499 | 10 |
| Positive electrode precursor 3-3 | Activated carbon 3-1 | $CuSO_4$ | 54.0 | 37.9 | 0 | 3.96 | 1.44 | 1.70 | 0.999 | 10 |
| Positive electrode precursor 3-4 | Activated carbon 3-2 | $CuSO_4$ | 54.7 | 38.1 | 0 | 3.96 | 1.44 | 1.70 | 0.099 | 10 |
| Positive electrode precursor 3-5 | Activated carbon 3-2 | $CuSO_4$ | 54.5 | 37.9 | 0 | 3.96 | 1.44 | 1.70 | 0.499 | 10 |
| Positive electrode precursor 3-6 | Activated carbon 3-2 | $CuSO_4$ | 54.0 | 37.9 | 0 | 3.96 | 1.44 | 1.70 | 0.999 | 10 |
| Positive electrode precursor 3-7 | Activated carbon 3-1 | $CuSO_4$ | 54.5 | 37.9 | 0 | 3.96 | 1.43 | 1.70 | 0.500 | 1 |
| Positive electrode precursor 3-8 | Activated carbon 3-1 | $CuSO_4$ | 54.5 | 37.9 | 0 | 3.96 | 1.43 | 1.70 | 0.500 | 100 |
| Positive electrode precursor 3-9 | Activated carbon 3-1 | $CuSO_4$ | 54.5 | 37.9 | 0 | 3.94 | 1.42 | 1.69 | 0.500 | 500 |
| Positive electrode precursor 3-10 | Activated carbon 3-1 | $CuCl_2$ | 54.5 | 37.9 | 0 | 3.96 | 1.44 | 1.70 | 0.499 | 10 |

(continued)

| | Activated carbon | Copper compound species | Activated carbon (wt%) | Alkali metal compound (wt%) | Carbon black (wt%) | Binder (wt%) | Dispersant 1 (wt%) | Dispersant 2 (wt%) | CNT (wt%) | Elemental copper (weight ppm) |
|---|---|---|---|---|---|---|---|---|---|---|
| Positive electrode precursor 3-11 | Activated carbon 3-1 | $CuSO_4$ | 55.5 | 31.2 | 4.12 | 4.05 | 1.47 | 1.74 | 1.92 | 10 |
| Positive electrode precursor 3-12 | Activated carbon 3-1 | N/A | 51.3 | 37.9 | 4.08 | 3.74 | 1.37 | 1.61 | 0 | 0 |
| Positive electrode precursor 3-13 | Activated carbon 3-1 | $CuSO_4$ | 51.3 | 37.9 | 4.08 | 3.74 | 1.37 | 1.61 | 0 | 10 |
| Positive electrode precursor 3-14 | Activated carbon 3-1 | N/A | 54.5 | 37.9 | 0 | 3.96 | 1.44 | 1.70 | 0.500 | 0 |
| Positive electrode precursor 3-15 | Activated carbon 3-1 | $CuSO_4$ | 54.4 | 37.9 | 0 | 3.96 | 1.44 | 1.70 | 0.500 | 1000 |
| Positive electrode precursor 3-16 | Activated carbon 3-2 | N/A | 51.3 | 37.9 | 4.08 | 3.74 | 1.37 | 1.61 | 0 | 0 |
| Positive electrode precursor 3-17 | Activated carbon 3-2 | $CuSO_4$ | 51.3 | 37.9 | 4.08 | 3.74 | 1.37 | 1.61 | 0 | 10 |
| Positive electrode precursor 3-18 | Activated carbon 3-1 | N/A | 54.7 | 38.1 | 0 | 4.00 | 1.47 | 1.73 | 0 | 0 |
| Positive electrode precursor 3-19 | Activated carbon 3-1 | $CuSO_4$ | 54.7 | 38.1 | 0 | 4.00 | 1.47 | 1.73 | 0 | 10 |
| Positive electrode precursor 3-20 | Activated carbon 3-1 | N/A | 56.7 | 31.7 | 4.20 | 4.13 | 1.50 | 1.77 | 0 | 0 |

[Negative Electrode Production Example]

82.8 wt% artificial graphite, 4.3 wt% porous carbon, 8.7 wt% acetylene black, 2.0 wt% of CMC (carboxymethyl cellulose), 2.2 wt% of SBR (styrene-butadiene rubber) latex, and distilled water were mixed so that the solid content weight ratio was 34.0% to obtain a mixture. The obtained mixture was dispersed for 10 minutes at a rotational speed of 2000 rpm using a rotation-revolution mixer "*Awatori Rentaro*®" manufactured by Thinky Corporation to obtain negative electrode coating liquid 3-1. The negative electrode coating liquid 3-1 was applied to one side of an electrolytic copper foil having a thickness of 8 μm using a doctor blade and dried on a hot plate heated to 50 °C for 10 minutes. The negative electrode 3-1 was produced by pressing using a roll press under the conditions of a pressure of 5 kN/cm and a surface temperature of the pressing parts of 25 °C. Using a Linear Gauge Sensor GS-551 manufactured by Ono Sokki Co., Ltd., the total thickness of the obtained negative electrode 3-1 was measured at 10 arbitrary points, the film thickness of the negative electrode active material layer was obtained by subtracting the film thickness of the electrolytic foil from the average value, and the film thickness of the negative electrode active material layer of the negative electrode 3-1 was 30 μm.

[Electrolyte Preparation Example]

Using a mixed solvent of ethylene carbonate (EC):ethyl methyl carbonate (EMC):dimethyl methyl carbonate (DMC) = 34:22:44 (volume ratio) as an organic solvent, the electrolyte salts were dissolved so that the concentration ratio of $LiPF_6$ and LiFSI was 3:1 and the total concentration was 1.2 mol/L to obtain nonaqueous electrolyte 3-1.

[Preparation of Metallic Lithium Counter Electrode]

A copper foil was cut to a size of 4.6 cm × 9.6 cm (44 $cm^2$), and a rectangular metallic lithium foil was stacked thereon. Thereafter, the lithium foil was pressure-bonded to the copper foil with a hand roller to obtain a metallic lithium counter electrode.

<<Example 3-1>>

<Production of Nonaqueous Alkali Metal Power Storage Element>

[Preparation of Positive Electrode Monopolar Cell]

The obtained positive electrode precursor 3-1 was cut into a positive electrode active material layer measuring 4.3 cm × 9.5 cm (41 $cm^2$). A 4.8 cm × 9.8 cm (47 $cm^2$) polyolefin separator (manufactured by Asahi Kasei Corporation, thickness: 15 μm) and a 4.8 cm × 9.8 cm (47 $cm^2$) glass filter were also prepared. Next, the positive electrode precursor 3-1, separator, glass filter, and metallic lithium counter electrode were laminated in this order to obtain an electrode laminate. A positive electrode terminal and a negative electrode terminal were ultrasonically welded to the obtained electrode laminate, which was then placed in a container composed of an aluminum laminate packaging material, and three sides thereof including the electrode terminal parts were heat-sealed. The electrode laminate produced in this manner is referred to as positive electrode monopolar cell 3-1.

[Assembly]

One obtained positive electrode precursor 3-1 was cut so that the positive electrode active material layer had a size of 4.4 cm × 9.4 cm. Next, one negative electrode 3-1 was cut so that the negative electrode active material layer had a size of 4.5 cm × 9.5 cm. One polyethylene separator (manufactured by Asahi Kasei Corporation, thickness: 15 μm) of a size of 4.7 cm × 9.8 cm was prepared. Using these, the positive electrode precursor 3-1, separator, and negative electrode 3-1 were laminated, in this order, so as to face each other so that the separator was interposed between the positive electrode active material layer and the negative electrode active material layer, to obtain an electrode laminate. A positive electrode terminal and a negative electrode terminal were ultrasonically welded to the obtained electrode body, which was then placed in an exterior body formed of an aluminum laminate packaging material, and three sides thereof including the electrode terminal parts were heat-sealed. The electrode laminate produced in this manner is referred to as nonaqueous lithium power storage element 3-1.

[Injection]

Approximately 3.0 g of the nonaqueous electrolyte 3-1 was injected into the exterior body in which the positive electrode monopolar cell 3-1 and the nonaqueous lithium power storage element 3-1 prepared as described above are

housed under a dry air environment of atmospheric pressure, a temperature of 25 °C, and a dew point of -40 °C or lower. Next, the exterior body in which the electrode laminate and the nonaqueous electrolyte are housed was placed in a decompression chamber, and the pressure was reduced from atmospheric pressure to -87 kPa, then returned to atmospheric pressure and allowed to stand for 5 minutes. Thereafter, the pressure of the exterior body in the chamber was reduced from atmospheric pressure to -87 kPa, and after repeating the step of returning to atmospheric pressure four times, the chamber was allowed to stand at atmospheric pressure for 15 minutes. As a result of the above steps, the electrode laminate was impregnated with the nonaqueous electrolyte 3-1. The electrode laminate impregnated with nonaqueous electrolyte 3-1 was then placed in a vacuum sealing machine, and the exterior body was closed by sealing at 180 °C for 10 seconds at a pressure of 0.1 MPa in a state in which the pressure was reduced to -95 kPa.

[Alkali Metal Doping Process]

Next, the nonaqueous lithium power storage element 3-1 was placed in a constant temperature bath set at 45 °C. Using a charging/discharging device manufactured by Aska Denshi Co., Ltd., constant current charging was performed at a current value per electrode area of the positive electrode of 1.2 mA/cm$^2$ until a voltage of 4.5 V was reached, and thereafter, initial charging was performed by a method of continuously charging at a constant voltage of 4.5 V for 3 hours to perform alkali metal doping. Thereafter, a charge/discharge cycle consisting of a discharge step of continuing constant current discharge from 4.0 V to 2.0 V and constant voltage discharge of 2.0 V at a current value per electrode area of the positive electrode of 1.2 mA/cm$^2$ for 10 minutes; and a charging step of continuously charging at a constant current from 2.0 V to 4.0 V and charging at a constant voltage of 4.0 V at a current value of 1.2 mA/cm$^2$ per electrode area of the positive electrode for 10 minutes was repeated five times.

[Aging Process]

After the alkali metal doping process, the nonaqueous lithium power storage element 3-1 was placed in a constant temperature bath set at 60 °C, and after charging at a constant current to 4.0 V at a current value per electrode area of the positive electrode of 1.2 mA/cm$^2$, 4.0 V constant voltage charging was performed for 16 hours.

[Degassing Process]

After the aging process, a part of the aluminum laminate packaging material of the nonaqueous lithium power storage element 3-1 was opened in an argon environment having a temperature of 25 °C and a dew point of -60 °C. Next, the partially opened aluminum laminate packaging material containing the electrode laminate was placed in a decompression chamber, and the process of reducing the pressure from atmospheric pressure to -80 kPa over 3 minutes using a diaphragm pump and returning to atmospheric pressure over 3 minutes was repeated a total of 10 times. Thereafter, the partially opened aluminum laminate packaging material containing the electrode laminate was placed into a vacuum sealing machine, the pressure was reduced to -90 kPa, and the aluminum laminate packaging material was closed by sealing at 200 °C for 10 seconds with a pressure of 0.1 MPa to produce a nonaqueous lithium power storage element.

<Evaluation of Nonaqueous Lithium Power Storage Element>

[Measurement of Capacitance Qa and Internal Resistance Ra]

For the obtained nonaqueous lithium power storage element 3-1, the negative electrode potential Vp, capacitance Qa and internal resistance Ra were measured by the methods described above in a constant temperature bath set at 25 °C using a charging/discharging device (5 V, 10 A) manufactured by Aska Electronics Co., Ltd., and Vp was 133 mV, Qa was 7.30 mAh, and Ra was 131 mΩ.

[High-Voltage and High-Temperature Storage Test]

A high voltage high temperature storage test was performed on the obtained nonaqueous lithium power storage element 3-1 by the method described above. When the capacitance Qb and internal resistance Rb were measured after the test, Qb was 4.91 mAh and Rb was 165 mΩ. The capacitance retention rate and internal resistance change rate before and after the high-voltage and high-temperature storage test were calculated and used as indices of high-voltage and high-temperature storage resistance, and the capacity retention rate Qb / Qa × 100 was 70.9 (%) and the resistance change rate Rb / Ra × 100 was 1.28 (%), which were both suitable.

<<Examples 3-2 to 3-11 and Comparative Examples 3-1 to 3-9>>

Using positive electrode precursors 3-2 to 3-20 described in Table 7, the metallic lithium described in Example 3-1, and the nonaqueous electrolyte 3-1, a positive electrode single electrode cell was produced. A nonaqueous lithium power storage element was produced using the negative electrode 3-1 described in Example 3-1 and the nonaqueous electrolyte 3-1. In Examples 3-2 to 3-10 and Comparative Examples 3-1 to 3-8, after evaluating the doping efficiency with a positive electrode monopolar cell and confirming the initial characteristics of the nonaqueous lithium power storage element, a high-temperature storage test was performed to measure the capacity retention rate and resistance change rate. In Example 3-11 and Comparative Example 3-9, after evaluating the doping efficiency using a positive electrode monopolar cell and confirming the initial characteristics of the nonaqueous lithium power storage element, a high-temperature float test was performed to measure the amount of gas generated. The evaluation results are shown in Table 8 below.

Table 8

| | Positive electrode precursor | Doping efficiency (%) | Negative electrode potential (mV) | Internal resistance (mΩ) | Self-discharge coefficient ($V/h^{1/2}$) | Capacity retention rate (%) | Resistance change rate (%) | Gas generation amount (cc) |
|---|---|---|---|---|---|---|---|---|
| Ex 3-1 | Positive electrode precursor 3-1 | 80.2 | 133 | 131 | 0.0186 | 70.9 | 1.28 | - |
| Ex 3-2 | Positive electrode precursor 3-2 | 80.4 | 138 | 113 | 0.0188 | 71.6 | 1.23 | - |
| Ex 3-3 | Positive electrode precursor 3-3 | 81.4 | 124 | 125 | 0.0191 | 71.8 | 1.22 | - |
| Ex 3-4 | Positive electrode precursor 3-4 | 81.3 | 133 | 112 | 0.0181 | 67.3 | 1.26 | - |
| Ex 3-5 | Positive electrode precursor 3-5 | 81.5 | 134 | 110 | 0.0193 | 67.0 | 1.32 | - |
| Ex 3-6 | Positive electrode precursor 3-6 | 80.1 | 134 | 104 | 0.0186 | 69.8 | 1.24 | - |
| Ex 3-7 | Positive electrode precursor 3-7 | 80.4 | 132 | 110 | 0.0181 | 71.3 | 1.24 | - |
| Ex 3-8 | Positive electrode precursor 3-8 | 82.3 | 136 | 115 | 0.0195 | 70.8 | 1.29 | - |
| Ex 3-9 | Positive electrode precursor 3-9 | 82.5 | 132 | 113 | 0.0268 | 69.8 | 1.31 | - |

(continued)

| | Positive electrode precursor | Doping efficiency (%) | Negative electrode potential (mV) | Internal resistance (mΩ) | Self-discharge coefficient ($V/h^{1/2}$) | Capacity retention rate (%) | Resistance change rate (%) | Gas generation amount (cc) |
|---|---|---|---|---|---|---|---|---|
| Ex 3-10 | Positive electrode precursor 3-10 | 80.5 | 133 | 117 | 0.0195 | 71.2 | 1.28 | - |
| Ex 3-11 | Positive electrode precursor 3-11 | 98.2 | 128 | 127 | 0.0198 | - | - | 14.8 |
| Comp Ex 3-1 | Positive electrode precursor 3-12 | 74.3 | 207 | 146 | 0.0193 | 57.1 | 1.95 | - |
| Comp Ex 3-2 | Positive electrode precursor 3-13 | 78.8 | 210 | 150 | 0.0201 | 58.9 | 1.89 | - |
| Comp Ex 3-3 | Positive electrode precursor 3-14 | 72.3 | 189 | 135 | 0.0188 | 65.1 | 1.62 | - |
| Comp Ex 3-4 | Positive electrode precursor 3-15 | 81.1 | 137 | 120 | 0.0525 | 63.2 | 1.48 | - |
| Comp Ex 3-5 | Positive electrode precursor 3-16 | 75.0 | 202 | 123 | 0.0213 | 60.3 | 1.79 | - |
| Comp Ex 3-6 | Positive electrode precursor 3-17 | 74.8 | 205 | 125 | 0.0263 | 60.9 | 1.84 | - |
| Comp Ex 3-7 | Positive electrode precursor 3-18 | 70.1 | 148 | 189 | 0.0216 | 65.6 | 1.51 | - |
| Comp Ex 3-8 | Positive electrode precursor 3-19 | 71.2 | 152 | 178 | 0.0238 | 64.5 | 1.67 | - |
| Comp Ex 3-9 | Positive electrode precursor 3-20 | 80.8 | 142 | 154 | 0.0189 | - | - | 24.8 |

<<Example 4>>

[Internal Resistance]

The internal resistance Ra (mΩ) of Example 4 is a value obtained by the following method. First, the nonaqueous lithium metal power storage element was charged in a constant temperature bath set at 25 °C at a current value of 20 C until it reached 4.0 V, and then, a constant voltage charge of 4.0 V was applied thereto for a total of 30 minutes. Next, at a sampling interval of 0.05 seconds, constant current discharge was performed at a current value of 20 C to 2.0 V to obtain a discharge curve (time-voltage). In this discharge curve, when the voltage at a discharge time = 0 seconds obtained by extrapolating the voltage values at the discharge times of 1 second and 2 seconds by linear approximation is Eo, this value is calculated from the drop voltage ΔE = 4.0 - Eo as Ra = ΔE / (current value at 20 C).

[Preparation of Positive Electrode Active Material]

The following were used as the activated carbon. The average particle size was measured using a laser diffraction particle size distribution analyzer (SALD-2000J) manufactured by Shimadzu Corporation.

(1) Activated carbon 4-1 having a particle size of 5.3 μm using coconut shell as a raw material and activated by steam
(2) Activated carbon 4-2 having a particle size of 6.1 μm using charcoal as a raw material and activated by steam.
(3) Activated carbon 4-3 having a particle size of 4.8 μm using coconut shell as a raw material and activated by steam

[Preparation of Carboxymethyl Cellulose (CMC) Aqueous Solution 4-1]

1.5 wt% of commercially available carboxymethyl cellulose and 98.5 wt% of distilled water were mixed and agitated for 60 minutes at a peripheral speed of 500 rpm using a Homo Disper to prepare CMC aqueous solution 4-1. The viscosity of the CMC aqueous solution 4-1 at a shear rate of 1,000 $s^{-1}$ was measured using an E-type viscometer TVE-35H manufactured by Toki Sangyo. As a result, the viscosity (ηb) was 1,962 mPa·s and the TI value was 2.4.

[Preparation of Carboxymethyl Cellulose (CMC) Aqueous Solution 4-2]

1.5 wt% of commercially available carboxymethyl cellulose and 98.5 wt% of distilled water were mixed and agitated for 10 minutes at a rotational speed of 500 rpm using a Homo Disper to prepare CMC aqueous solution 4-2. The viscosity of the CMC aqueous solution 4-2 at a shear rate of 1,000 $s^{-1}$ was measured using an E-type viscometer TVE-35H manufactured by Toki Sangyo. As a result, the viscosity (ηb) was 2,575 mPa·s and the TI value was 6.5.

[Preparation of Carbon Nanotube Dispersion]

0.400 wt% of commercially available single-wall carbon nanotubes, 0.600 wt% of carboxymethyl cellulose (CMC1) as a dispersant, and 99.000 wt% of distilled water were mixed, and this was dispersed at a peripheral speed of 17 m/s using a thin-film rotating high-speed mixer Filmix manufactured by PRIMIX to prepare a carbon nanotube dispersion.

[Preparation of Positive Electrode Precursor 4-1]

56.425 wt% of activated carbon 4-1 as the positive electrode active material, 30.000 wt% of lithium carbonate as the alkali metal compound, 5.000 wt% of carbon black as a conductive material, 4.500 wt% of acrylic latex (LTX) as a binder, an amount equivalent to 2.000 wt% of CMC content of CMC aqueous solution 4-1 as dispersant 1, 2.000 wt% of PVP (polyvinylpyrrolidone) as dispersant 2, an amount of the carbon nanotubes dispersion equivalent to 0.030 wt% of the carbon nanotubes, and distilled water were mixed so that the weight ratio of the solid content was 36.0%, and this mixture was dispersed for 10 minutes at a rotational speed of 2000 rpm using a rotation-revolution mixer "*Awatori Rentaro*®" manufactured by Thinky Corporation to obtain positive electrode coating liquid 4-1. Dispersion material 3 in Table 9 indicates the amount of CMC contained in the carbon nanotubes dispersion.

The viscosity curve of positive electrode coating liquid 4-1 was measured using an MCR102 manufactured by Anton Paar. FIG. 3 shows the viscosity curve of the positive electrode coating liquid 4-1. It was confirmed that the viscosity did not monotonically decrease with increasing shear rate in the range of shear rate from 10 to 1000 $s^{-1}$. X/Y was calculated as 3.49.

Using a doctor blade, the positive electrode coating liquid 4-1 was applied to one side of an aluminum foil having a thickness of 15 μm, dried on a hot plate heated to 50 °C for 10 minutes, and pressed using a roll press under the conditions of a pressure of 6 kN/cm and a surface temperature of the pressing parts of 25 °C to obtain positive electrode precursor 4-1.

Using a Linear Gauge Sensor GS-551 manufactured by Ono Sokki Co., Ltd., the total thickness of the obtained positive electrode precursor 4-1 was measured at 10 arbitrary points, the film thickness of the positive electrode active

material layer was obtained by subtracting the film thickness of the aluminum foil from the average value, and the film thickness of the positive electrode active material layer of the positive electrode precursor 4-1 was 83.6 μm. Since the basis weight of the positive electrode was 51.6 g/$m^2$, the bulk density was 0.617 g/cc.

[Production of Positive Electrode Coating Liquids and Positive Electrode Precursors 4-2 to 4-10]

Positive electrode coating liquids 4-2 to 4-10 and positive electrode precursors 4-2 to 4-10 were produced in the same manner as in [Production of Positive Electrode Precursor 4-1] except that the types and amounts of each component were as shown in Table 9 below. At that time, the viscosity curves of the positive electrode coating liquids 4-2 to 4-10 were measured in the same manner as the positive electrode coating liquid 4-1, the presence or absence of monotonic decreases in viscosity were confirmed, and the X/Y values were calculated. The viscosity curves of positive electrode coating liquids 4-4, 4-7 and 4-10 are shown in FIGS. 4, 5 and 6, respectively.

Table 9

| | Activated carbon | CMC aqueous solution | Activated carbon (wt%) | Alkali metal compound (wt%) | Carbon black (wt%) | Binder (wt%) | Dispersant 1 (wt%) | Dispersant 2 (wt%) | CNT (wt%) | Dispersant 3 (wt%) | Solid content ratio (%) |
|---|---|---|---|---|---|---|---|---|---|---|---|
| Positive electrode coating liquid 4-1 | Activated carbon 4-1 | CMC aqueous solution 4-1 | 56.425 | 30.000 | 5.000 | 4.500 | 2.000 | 2.000 | 0.030 | 0.045 | 36.0 |
| Positive electrode coating liquid 4-2 | Activated carbon 4-2 | CMC aqueous solution 4-1 | 56.425 | 30.000 | 5.000 | 4.500 | 2.000 | 2.000 | 0.030 | 0.045 | 36.0 |
| Positive electrode coating liquid 4-3 | Activated carbon 4-3 | CMC aqueous solution 4-1 | 56.425 | 30.000 | 5.000 | 4.500 | 2.000 | 2.000 | 0.030 | 0.045 | 36.0 |
| Positive electrode coating liquid 4-4 | Activated carbon 4-1 | CMC aqueous solution 4-1 | 56.425 | 30.000 | 5.000 | 4.500 | 2.000 | 2.000 | 0.030 | 0.045 | 40.0 |
| Positive electrode coating liquid 4-5 | Activated carbon 4-1 | CMC aqueous solution 4-1 | 56.425 | 30.000 | 5.000 | 4.500 | 2.000 | 2.000 | 0.030 | 0.045 | 45.0 |
| Positive electrode coating liquid 4-6 | Activated carbon 4-1 | CMC aqueous solution 4-2 | 56.425 | 30.000 | 5.000 | 4.500 | 2.075 | 2.000 | 0 | 0.000 | 36.0 |
| Positive electrode coating liquid 4-7 | Activated carbon 4-1 | CMC aqueous solution 4-2 | 56.425 | 30.000 | 5.000 | 4.500 | 2.000 | 2.000 | 0.030 | 0.045 | 36.0 |
| Positive electrode coating liquid 4-8 | Activated carbon 4-3 | CMC aqueous solution 4-2 | 56.425 | 30.000 | 5.000 | 4.500 | 2.000 | 2.000 | 0.030 | 0.045 | 30.0 |
| Positive electrode coating liquid 4-9 | Activated carbon 4-2 | CMC aqueous solution 4-2 | 56.425 | 30.000 | 5.000 | 4.500 | 2.000 | 2.000 | 0.030 | 0.045 | 32.0 |
| Positive electrode coating liquid 4-10 | Activated carbon 4-2 | CMC aqueous solution 4-2 | 56.425 | 30.000 | 5.000 | 4.500 | 2.000 | 2.000 | 0.030 | 0.045 | 33.3 |

[Negative Electrode Production Example]

82.8 wt% artificial graphite, 4.3 wt% porous carbon, 8.7 wt% acetylene black, 2.0 wt% of CMC (carboxymethyl cellulose), 2.2 wt% of SBR (styrene-butadiene rubber) latex, and distilled water were mixed so that the solid content weight ratio was 34.0% to obtain a mixture. The obtained mixture was dispersed for 10 minutes at a rotational speed of 2000 rpm using a rotation-revolution mixer "*Awatori Rentaro*®" manufactured by Thinky Corporation to obtain negative electrode coating liquid 4-1. The negative electrode coating liquid 4-1 was applied to one side of an electrolytic copper foil having a thickness of 8 μm using a doctor blade and dried on a hot plate heated to 50 °C for 10 minutes. The negative electrode 4-1 was produced by pressing using a roll press under the conditions of a pressure of 5 kN/cm and a surface temperature of the pressing parts of 25 °C. Using a Linear Gauge Sensor GS-551 manufactured by Ono Sokki Co., Ltd., the total thickness of the obtained negative electrode 4-1 was measured at 10 arbitrary points, the film thickness of the negative electrode active material layer was obtained by subtracting the film thickness of the electrolytic foil from the average value, and the film thickness of the negative electrode active material layer of the negative electrode 4-1 was 30 μm.

[Electrolyte Preparation Example]

Using a mixed solvent of ethylene carbonate (EC):ethyl methyl carbonate (EMC):dimethyl methyl carbonate (DMC) = 34:22:44 (volume ratio) as an organic solvent, the electrolyte salts were dissolved so that the concentration ratio of $LiPF_6$ and LiFSI was 3:1 and the total concentration was 1.2 mol/L to obtain nonaqueous electrolyte 4-1.

< <Example 4-1>>

<Production of Nonaqueous Lithium Power Storage Element>

[Assembly]

One obtained positive electrode precursor 4-1 was cut so that the positive electrode active material layer had a size of 4.4 cm × 9.4 cm. Next, one negative electrode 4-1 was cut so that the negative electrode active material layer had a size of 4.5 cm × 9.5 cm. One polyethylene separator (manufactured by Asahi Kasei Corporation, thickness: 15 μm) of a size of 4.7 cm × 9.8 cm was prepared. Using these, the positive electrode precursor 4-1, separator, and negative electrode 4-1 were laminated, in this order, so as to face each other so that the separator was interposed between the positive electrode active material layer and the negative electrode active material layer, to obtain an electrode laminate. A positive electrode terminal and a negative electrode terminal were ultrasonically welded to the obtained electrode body, which was then placed in an exterior body formed of an aluminum laminate packaging material, and three sides thereof including the electrode terminal parts were heat-sealed. The nonaqueous lithium power storage element 4-1 was produced in this manner.

[Injection]

Approximately 3.0 g of the nonaqueous electrolyte 4-1 was injected into the exterior body in which the nonaqueous lithium power storage element 4-1 prepared as described above is housed under a dry air environment of atmospheric pressure, a temperature of 25 °C, and a dew point of - 40 °C or lower. Next, the exterior body in which the electrode laminate and the nonaqueous electrolyte are housed was placed in a decompression chamber, and the pressure was reduced from atmospheric pressure to -87 kPa, then returned to atmospheric pressure and allowed to stand for 5 minutes. Thereafter, the pressure of the exterior body in the chamber was reduced from atmospheric pressure to -87 kPa, and after repeating the step of returning to atmospheric pressure four times, the chamber was allowed to stand at atmospheric pressure for 15 minutes. As a result of the above steps, the electrode laminate was impregnated with the nonaqueous electrolyte 4-1. The electrode laminate impregnated with nonaqueous electrolyte 4-1 was then placed in a vacuum sealing machine, and the exterior body was closed by sealing at 180 °C for 10 seconds at a pressure of 0.1 MPa in a state in which the pressure was reduced to -95 kPa.

[Alkali Metal Doping Process]

Next, the nonaqueous lithium power storage element 4-1 was placed in a constant temperature bath set at 45 °C. Using a charging/discharging device manufactured by Aska Denshi Co., Ltd., constant current charging was performed at a current value per electrode area of the positive electrode of 1.2 $mA/cm^2$ until a voltage of 4.5 V was reached, and thereafter, initial charging was performed by a method of continuously charging at a constant voltage of 4.5 V for 3 hours to perform alkali metal doping. Thereafter, a charge/discharge cycle consisting of a discharge step of continuing constant

current discharge from 4.0 V to 2.0 V and constant voltage discharge of 2.0 V at a current value per electrode area of the positive electrode of 1.2 mA/cm$^2$ for 10 minutes; and a charging step of continuously charging at a constant current from 2.0 V to 4.0 V and charging at a constant voltage of 4.0 V at a current value of 1.2 mA/cm per electrode area of the positive electrode for 10 minutes was repeated five times.

[Aging Process]

After the alkali metal doping process, the nonaqueous lithium power storage element 4-1 was placed in a constant temperature bath set at 60 °C, and after charging at a constant current to 4.0 V at a current value per electrode area of the positive electrode of 1.2 mA/cm$^2$, 4.0 V constant voltage charging was performed for 16 hours.

[Degassing Process]

After the aging process, a part of the aluminum laminate packaging material of the nonaqueous lithium power storage element 4-1 was opened in an argon environment having a temperature of 25 °C and a dew point of -60 °C. Next, the partially opened aluminum laminate packaging material containing the electrode laminate was placed in a decompression chamber, and the process of reducing the pressure from atmospheric pressure to -80 kPa over 3 minutes using a diaphragm pump and returning to atmospheric pressure over 3 minutes was repeated a total of 10 times. Thereafter, the partially opened aluminum laminate packaging material containing the electrode laminate was placed into a vacuum sealing machine, the pressure was reduced to -90 kPa, and the aluminum laminate packaging material was closed by sealing at 200 °C for 10 seconds with a pressure of 0.1 MPa to produce a nonaqueous lithium power storage element.

<Evaluation of Nonaqueous Lithium Power Storage Element>

[Measurement of Internal Resistance Ra]

For the obtained nonaqueous lithium power storage element 4-1, the internal resistance Ra was measured by the method described above in a constant temperature bath set at 25 °C using a charging/discharging device (5 V, 10 A) manufactured by Aska Electronics Co., Ltd., and Ra was 119 mΩ.

<<Examples 4-2 to 4-5 and Comparative Examples 4-1 to 4-5>>

Nonaqueous lithium power storage elements were prepared in the same manner as in Example 4-1 except that the positive electrode precursors 4-2 to 4-10 were used. The evaluation results are shown in Table 10 below. By adding carbon nanotubes in this manner and imparting the positive electrode coating liquid with appropriate viscosity characteristics, both bulk density and internal resistance could be achieved.

Table 10

| | Positive electrode precursor | Negative electrode | Electrolyte | CNT Addition amount (wt%) | Solid content ratio (%) | Presence/absence of monotonic decrease in viscosity | X/Y | Positive electrode precursor bulk density (g/cc) | Internal resistance Ra (mΩ) |
|---|---|---|---|---|---|---|---|---|---|
| Ex 4-1 | Positive electrode precursor 4-1 | Negative electrode 4-1 | Electrolyte 4-1 | 0.03 | 36.0 | Absent | 3.49 | 0.617 | 119 |
| Ex 4-2 | Positive electrode precursor 4-2 | Negative electrode 4-1 | Electrolyte 4-1 | 0.03 | 36.0 | Absent | 1.29 | 0.609 | 113 |
| Ex 4-3 | Positive electrode precursor 4-3 | Negative electrode 4-1 | Electrolyte 4-1 | 0.03 | 36.0 | Present | 4.56 | 0.623 | 114 |
| Ex 4-4 | Positive electrode precursor 4-4 | Negative electrode 4-1 | Electrolyte 4-1 | 0.03 | 40.0 | Present | 1.85 | 0.623 | 101 |
| Ex 4-5 | Positive electrode precursor 4-5 | Negative electrode 4-1 | Electrolyte 4-1 | 0.03 | 45.0 | Present | 2.34 | 0.661 | 109 |
| Comp Ex 4-1 | Positive electrode precursor 4-6 | Negative electrode 4-1 | Electrolyte 4-1 | 0 | 36.0 | Absent | 3.65 | 0.592 | 289 |
| Comp Ex 4-2 | Positive electrode precursor 4-7 | Negative electrode 4-1 | Electrolyte 4-1 | 0.03 | 36.0 | Absent | 6.80 | 0.611 | 189 |
| Comp Ex 4-3 | Positive electrode precursor 4-8 | Negative electrode 4-1 | Electrolyte 4-1 | 0.03 | 30.0 | Absent | 4.62 | 0.432 | 146 |
| Comp Ex 4-4 | Positive electrode precursor 4-9 | Negative electrode 4-1 | Electrolyte 4-1 | 0.03 | 32.0 | Absent | 5.59 | 0.463 | 134 |
| Comp Ex 4-5 | Positive electrode precursor 4-10 | Negative electrode 4-1 | Electrolyte 4-1 | 0.03 | 33.3 | Absent | 4.58 | 0.491 | 139 |

## INDUSTRIAL APPLICABILITY

Using the nonaqueous lithium power storage element of the present disclosure, for example, a plurality of nonaqueous lithium power storage elements can be connected in series or in parallel to form a power storage module. The nonaqueous lithium power storage element and the power storage module of the present disclosure can suitably be applied to various energy storage systems including: power regeneration systems for automobile hybrid drive systems which requires high-load charge-discharge cycle characteristics; power load leveling systems in natural power generation such as solar power generation, wind power generation, or microgrids; uninterruptible power supply systems for factory production equipment; contactless power supply systems for leveling voltage fluctuations in microwave power transmission and electrolytic resonance, and storing energy; energy harvesting systems for utilizing power generated by vibration power generation; as power sources for vehicles such as electric vehicles, plug-in hybrid vehicles, electric motorcycles, in-wheel motor systems, and electric power steering systems; as well as rapid charging systems which charges with a large current in order to charge in a short time. The nonaqueous lithium power storage element of the present disclosure is preferable because the effects of the present disclosure are maximized when applied as, for example, a lithium-ion capacitor or a lithium-ion secondary battery.

## REFERENCE SIGNS LIST

1 negative electrode active material

2 bundled single-wall carbon nanotubes

3 crosslinking by bundled single-wall carbon nanotubes

4 positive electrode active material

## Claims

1. A nonaqueous alkali metal power storage element, comprising a positive electrode, a negative electrode, a separator, and a nonaqueous electrolyte containing alkali metal ions, wherein

    the positive electrode comprises a positive electrode current collector, and a positive electrode active material layer provided on one surface or both surfaces of the positive electrode current collector, and the positive electrode active material layer contains: a positive electrode active material comprising activated carbon as a main component; and carbon nanotubes, wherein the carbon nanotubes cover a surface of the positive electrode active material in a mesh-like pattern and crosslink the positive electrode active materials;
    the negative electrode comprises a negative electrode current collector and a negative electrode active material layer provided on one surface or both surfaces of the negative electrode current collector, and the negative electrode active material layer contains a negative electrode active material and carbon nanotubes, wherein the carbon nanotubes cover a surface of the negative electrode active material in a mesh-like pattern and crosslink the negative electrode active materials;
    and
    the carbon nanotubes are single-wall carbon nanotubes having an average fiber diameter of 5 nm or more and 20 nm or less and having a bundle structure in which single-wall carbon nanotubes are bundled;
    wherein the term "mesh-like" means that a plurality of the bundled single-wall carbon nanotubes intersect each other in various directions on the surface of the active material to form a mesh-like structure in which a portion is covered with the carbon nanotubes and a portion where the active material is exposed.

2. The nonaqueous alkali metal power storage element according to claim 1, wherein when a content of carbon nanotubes contained in the positive electrode active material layer is defined as A (wt%) and a content of carbon nanotubes contained in the negative electrode active material layer is defined as B (wt%):

$$0.010 \leq A \leq 0.200,$$

$$0.003 \leq B \leq 0.120,$$

and

$$A > B.$$

**3.** The nonaqueous alkali metal power storage element according to claim 1 or 2, wherein an amount of elemental copper contained in the positive electrode active material layer is 1 ppm or more and 500 ppm or less.

**4.** The nonaqueous alkali metal power storage element according to any one of claims 1 to 3, wherein the nonaqueous electrolyte contains a phosphate ester amide represented by the following general formula (1):

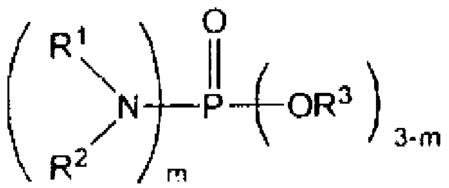

(1)

where m represents an integer of 1 or 2, $R^1$ and $R^2$ are each independently a $C_{1-6}$ branched or straight chain alkyl group or a branched or straight chain hydrocarbon group having an unsaturated bond under the proviso that $R^1$ and $R^2$ may each independently have a substituent selected from the group consisting of an alkylthio group and a saturated heterocyclic group and $R^1$ and $R^2$ may combine with each other to form a 5- to 8-membered ring structure, and $R^3$ represents a $C_{1-6}$ branched or straight chain alkyl group or a $C_{1-6}$ branched or straight chain fluorine-containing alkyl group.

**5.** A power storage module containing the nonaqueous alkali metal power storage element according to any one of claims 1 to 4.

**6.** Use of the power storage module according to claim 5 in a system selected from the group consisting of a power regeneration assist system, power load leveling system, uninterruptible power supply system, contactless power supply system, energy harvesting system, natural energy storage system, electric power steering system, emergency power system, in-wheel motor system, idling stop system, electric vehicle, plug-in hybrid vehicle, electric motorcycle, quick-charging system, and smart grid system.

**7.** Use of a positive electrode coating liquid in the production of the nonaqueous alkali power storage element according to any one of claims 1 to 4, said positive electrode coating liquid containing an activated carbon, an alkali metal compound, and single-wall carbon nanotubes, wherein

an amount of solid components relative to a total weight of the positive electrode coating liquid is 35.0 wt% or more and 50.0 wt% or less, and
either or both of the following (a) and (b) are satisfied:

(a) viscosity decreases monotonically with increasing shear rate in the range of shear rate from 10 $s^{-1}$ to 1000 $s^{-1}$; and
(b) the ratio X/Y of the maximum viscosity value X (mPa·s) to the minimum viscosity value Y (mPa·s) at a shear rate in the range of 100 $s^{-1}$ to 1000 $s^{-1}$ is 1.0 or more and 4.0 or less.

**8.** The use according to claim 7, wherein an amount of single-wall carbon nanotubes contained in the positive electrode coating liquid solution is, relative to the total weight of solid components contained in the positive electrode coating liquid, is 0.010 wt% or more and 0.200 wt% or less.

**Patentansprüche**

**1.** Nichtwässriger Alkalimetallionen-Akkumulator, umfassend eine positive Elektrode, eine negative Elektrode, einen Separator und eine nichtwässrige Elektrolytlösung, die Alkalimetallionen enthält, wobei

die positive Elektrode einen Stromabnehmer der positiven Elektrode und eine Schicht aus aktivem Material der

positiven Elektrode, die sich auf einer oder auf beiden Flächen des Stromabnehmers der positiven Elektrode befindet, umfasst und das aktive Material der positiven Elektrode Folgendes enthält: ein aktives Material der positiven Elektrode, das Aktivkohle als Hauptkomponente umfasst; und Kohlenstoff-Nanoröhrchen, wobei die Kohlenstoff-Nanoröhrchen eine Fläche des aktiven Materials der positiven Elektrode in einem netzartigen Muster bedecken und die aktiven Materialien der positiven Elektrode miteinander vernetzen;

die negative Elektrode einen Stromabnehmer der negativen Elektrode und eine Schicht aus aktivem Material der negativen Elektrode, die sich auf einer oder auf beiden Flächen des Stromabnehmers der negativen Elektrode befindet, umfasst und die Schicht aus aktivem Material der negativen Elektrode ein aktives Material der negativen Elektrode und Kohlenstoff-Nanoröhrchen enthält, wobei die Kohlenstoff-Nanoröhrchen eine Fläche des aktiven Materials der negativen Elektrode in einem netzartigen Muster bedecken und die aktiven Materialien der negativen Elektrode miteinander vernetzen;

und

die Kohlenstoff-Nanoröhrchen einwandige Kohlenstoff-Nanoröhrchen mit einem mittleren Faserdurchmesser von 5 nm oder mehr und 20 nm oder weniger sind und eine Bündelstruktur aufweisen, in der einwandige Kohlenstoff-Nanoröhrchen gebündelt sind;

wobei der Ausdruck "netzartig" bedeutet, dass eine Vielzahl der gebündelten einwandigen Kohlenstoff-Nanoröhrchen einander in verschiedenen Richtungen auf der Oberfläche des aktiven Materials schneiden, wobei eine netzartige Struktur entsteht, in der ein Teil mit den Kohlenstoff-Nanoröhrchen bedeckt ist und bei einem Teil das aktive Material exponiert ist.

2. Nichtwässriger Alkalimetallionen-Akkumulator gemäß Anspruch 1, wobei dann, wenn der Gehalt der Kohlenstoff-Nanoröhrchen in der Schicht aus aktivem Material der positiven Elektrode als A (Gew.-%) definiert ist und der Gehalt der Kohlenstoff-Nanoröhrchen in der Schicht aus aktivem Material der negativen Elektrode als B (Gew.-%) definiert ist, gilt:

$$0{,}010 \leq A \leq 0{,}200,$$

$$0{,}003 \leq B \leq 0{,}120$$

und

$$A > B.$$

3. Nichtwässriger Alkalimetallionen-Akkumulator gemäß Anspruch 1 oder 2, wobei die Menge an elementarem Kupfer, die in der Schicht aus aktivem Material der positiven Elektrode enthalten ist, 1 ppm oder mehr und 500 ppm oder weniger beträgt.

4. Nichtwässriger Alkalimetallionen-Akkumulator gemäß einem der Ansprüche 1 bis 3, wobei der nichtwässrige Elektrolyt ein Phosphorsäureesteramid enthält, das durch die folgende allgemeine Formel (1) dargestellt wird:

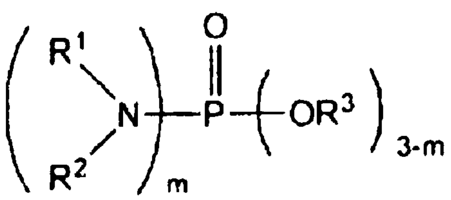

(1)

wobei m für eine ganze Zahl 1 oder 2 steht, $R^1$ und $R^2$ jeweils unabhängig eine verzweigte oder geradkettige $C_{1-6}$-Alkylgruppe oder eine verzweigte oder geradkettige Kohlenwasserstoffgruppe mit einer ungesättigten Bindung sind, mit der Maßgabe, dass $R^1$ und $R^2$ jeweils unabhängig einen Substituenten aufweisen können, der aus der Gruppe ausgewählt ist, die aus einer Alkylthiogruppe und einer gesättigten heterocyclischen Gruppe besteht, und $R^1$ und $R^2$ zusammen eine fünf- bis achtgliedrige Ringstruktur bilden können, und $R^3$ für eine verzweigte oder geradkettige $C_{1-6}$-Alkylgruppe oder eine verzweigte oder geradkettige fluorhaltige $C_{1-6}$-Alkylgruppe steht.

5. Akkumulatormodul, das den nichtwässrigen Alkalimetallionen-Akkumulator gemäß einem der Ansprüche 1 bis 4 enthält.

6. Verwendung des Akkumulatormoduls gemäß Anspruch 5 in einem System, das aus der Gruppe ausgewählt ist, die aus einem Energierekuperationshilfssystem, einem Stromlade-Nivellierungssystem, einem ununterbrechbaren Stromversorgungssystem, einem kontaktlosen Stromversorgungssystem, einem Energieerntesystem, einem natürlichen Stromspeichersystem, einem Stromsteuerungssystem, einem Notstromsystem, einem In-Wheel-Motorsystem, einem Leerlaufstoppsystem, einem Elektrofahrzeug, einem Plug-In-Hybridfahrzeug, einem Elektromotorrad, einem Schnellladesystem und einem intelligenten Stromnetz besteht.

7. Verwendung einer Beschichtungsflüssigkeit für die positive Elektrode in der Herstellung des nichtwässrigen Alkalimetallionen-Akkumulators gemäß einem der Ansprüche 1 bis 4, wobei die Beschichtungsflüssigkeit für die positive Elektrode eine Aktivkohle, eine Alkalimetallverbindung und einwandige Kohlenstoff-Nanoröhrchen enthält, wobei

   die Menge an festen Komponenten relativ zum Gesamtgewicht der Beschichtungsflüssigkeit für die positive Elektrode 35,0 Gew.-% oder mehr und 50,0 Gew.-% oder weniger beträgt und
   die folgenden Bedingungen (a) und/oder (b) erfüllt sind:

      (a) die Viskosität nimmt mit zunehmender Scherrate im Scherratenbereich von 10 $s^{-1}$ bis 1000 $s^{-1}$ monoton ab; und
      (b) das Verhältnis X/Y des maximalen Viskositätswerts X (mPa·s) zum minimalen Viskositätswert Y (mPa·s) bei einer Scherrate im Bereich von 100 $s^{-1}$ bis 1000 $s^{-1}$ 1,0 oder mehr und 4,0 oder weniger beträgt.

8. Verwendung gemäß Anspruch 7, wobei die Menge an einwandigen Kohlenstoff-Nanoröhrchen, die in der flüssigen Beschichtungslösung für die positive Elektrode enthalten sind, relativ zum Gesamtgewicht der festen Komponenten, die in der Beschichtungsflüssigkeit für die positive Elektrode enthalten sind, 0,010 Gew.-% oder mehr und 0,200 Gew.-% oder weniger beträgt.

## Revendications

1. Élément de stockage d'énergie en métal alcalin non aqueux, comprenant une électrode positive, une électrode négative, un séparateur, et un électrolyte non aqueux contenant des ions de métal alcalin, dans lequel
   l'électrode positive comprend un collecteur de courant d'électrode positive, et une couche de matériau actif d'électrode positive prévue sur une surface ou les deux surfaces du collecteur de courant d'électrode positive, et
   la couche de matériau actif d'électrode positive contient :

   un matériau actif d'électrode positive comprenant du charbon actif en tant que composant principal ; et des nanotubes de carbone, dans lequel les nanotubes de carbone recouvrent une surface du matériau actif d'électrode positive selon un motif sous forme de maillage et interconnectent les matériaux actifs d'électrode positive ;
   l'électrode négative comprend un collecteur de courant d'électrode négative et une couche de matériau actif d'électrode négative prévue sur une surface ou les deux surfaces du collecteur de courant d'électrode négative, et
   la couche de matériau actif d'électrode négative contient un matériau actif d'électrode négative et des nanotubes de carbone, dans lequel les nanotubes de carbone recouvrent une surface du matériau actif d'électrode négative selon un motif sous forme de maillage et interconnectent les matériaux actifs d'électrode négative ;
   et
   les nanotubes de carbone sont des nanotubes de carbone à paroi unique présentant un diamètre de fibre moyen de 5 nm ou plus et 20 nm ou moins et présentant une structure de faisceau dans laquelle des nanotubes de carbone à paroi unique sont groupés en faisceau ;
   dans lequel le terme « sous forme de maillage » signifie qu'une pluralité des nanotubes de carbone à paroi unique groupés en faisceau s'intersectent les uns les autres dans diverses directions sur la surface du matériau actif pour former une structure sous forme de maillage dans laquelle une partie est recouverte par les nanotubes de carbone et une partie où le matériau actif est exposé.

2. Élément de stockage d'énergie en métal alcalin non aqueux selon la revendication 1, dans lequel lorsqu'une teneur en nanotubes de carbone contenue dans la couche de matériau actif d'électrode positive est définie comme A (% en poids) et une teneur en nanotubes de carbone contenue dans la couche de matériau actif d'électrode négative est définie comme B (% en poids) :

$$0,010 \leq A \leq 0,200,$$

$$0,003 \leq B \leq 0,120,$$

et

$$A > B.$$

**3.** Élément de stockage d'énergie en métal alcalin non aqueux selon la revendication 1 ou la revendication 2, dans lequel une quantité de cuivre élémentaire contenue dans la couche de matériau actif d'électrode positive est de 1 ppm ou plus et 500 ppm ou moins.

**4.** Élément de stockage d'énergie en métal alcalin non aqueux selon l'une quelconque des revendications 1 à 3, dans lequel l'électrolyte non aqueux contient un ester-amide de phosphate représenté par la formule générale suivante (1) :

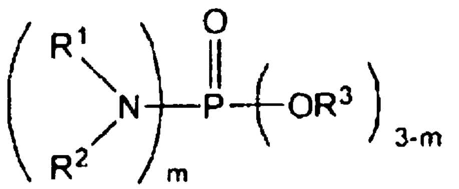

(1)

où m représente un nombre entier de 1 ou 2, $R^1$ et $R^2$ sont chacun indépendamment un groupe alkyle ramifié ou à chaîne droite en $C_{1-6}$ ou un groupe hydrocarboné ramifié ou à chaîne droite présentant une liaison insaturée à condition que $R^1$ et $R^2$ puissent chacun indépendamment présenter un substituant sélectionné parmi le groupe consistant en un groupe alkylthio et un groupe hétérocyclique saturé et $R^1$ et $R^2$ peuvent se combiner l'un avec l'autre pour former une structure cyclique à 5 à 8 chaînons, et $R^3$ représente un groupe alkyle ramifié ou à chaîne droite en $C_{1-6}$ ou un groupe alkyle ramifié ou à chaîne droite en $C_{1-6}$ contenant du fluor.

**5.** Module de stockage d'énergie contenant l'élément de stockage d'énergie en métal alcalin non aqueux selon l'une quelconque des revendications 1 à 4.

**6.** Utilisation du module de stockage d'énergie selon la revendication 5 dans un système sélectionné parmi le groupe consistant en un système d'assistance à la régénération de puissance, un système de nivellement de charge de puissance, un système d'alimentation sans interruption, un système d'alimentation sans contact, un système de récupération d'énergie, un système de stockage d'énergie naturelle, un système de direction assistée électrique, un système d'alimentation d'urgence, un système de moteur dans la roue, un système d'arrêt au ralenti, un véhicule électrique, un véhicule hybride rechargeable, une motocyclette électrique, un système de charge rapide, et un système de réseau intelligent.

**7.** Utilisation d'un liquide de revêtement d'électrode positive dans la production de l'élément de stockage d'énergie en métal alcalin non aqueux selon l'une quelconque des revendications 1 à 4, ledit liquide de revêtement d'électrode positive contenant un charbon actif, un composé de métal alcalin, et des nanotubes de carbone à paroi unique, dans lequel

une quantité de composants solides par rapport à un poids total du liquide de revêtement d'électrode positive est de 35,0 % en poids ou plus et 50,0 % en poids ou moins, et
l'une ou les deux des conditions suivantes (a) et (b) sont satisfaites :

(a) la viscosité diminue de manière monotone lorsque le taux de cisaillement augmente dans la plage de taux de cisaillement de $10s^{-1}$ à $1000s^{-1}$ ; et
(b) le rapport X/Y de la valeur maximale de viscosité X (mPa·s) sur la valeur minimale de viscosité Y (mPa·s) à un taux de cisaillement dans la plage de $100s^{-1}$ à $1000s^{-1}$ est de 1,0 ou plus et 4,0 ou moins.

**8.** Utilisation selon la revendication 7, dans laquelle une quantité de nanotubes de carbone à paroi unique contenue dans la solution de liquide de revêtement d'électrode positive est, par rapport au poids total des composants solides

contenus dans le liquide de revêtement d'électrode positive, de 0,010 % en poids ou plus et 0,200 % en poids ou moins.

FIG. 1

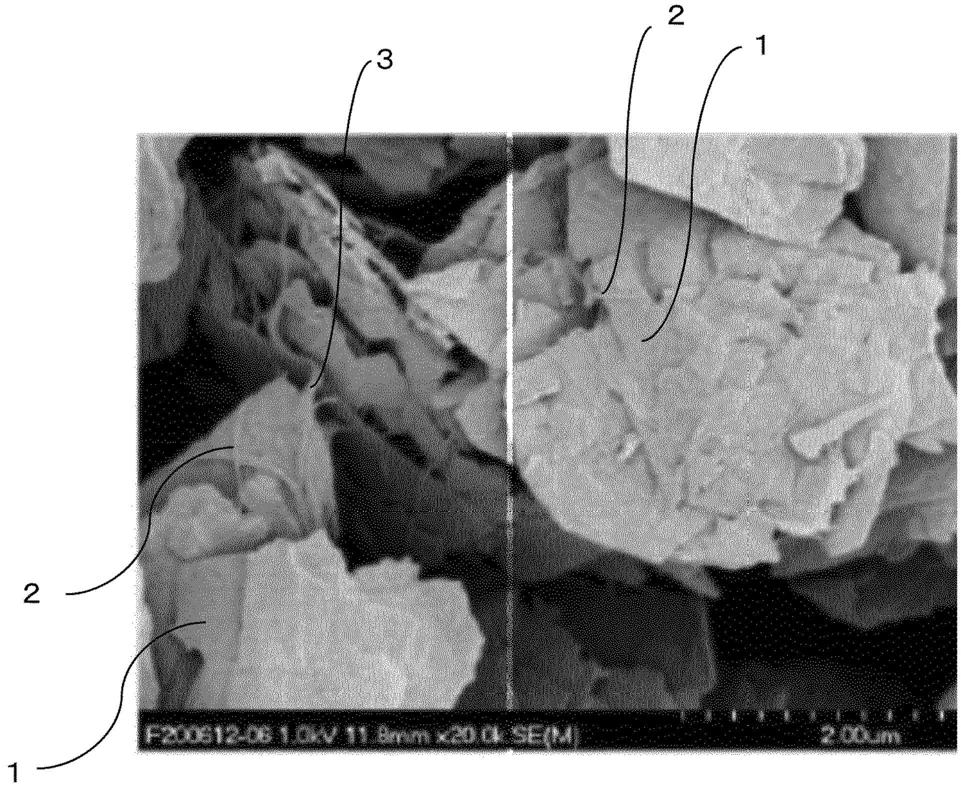
3
2
1
2
1
F200612-08 1.0kV 11.8mm x20.0k SE(M)
2.00um

FIG. 2

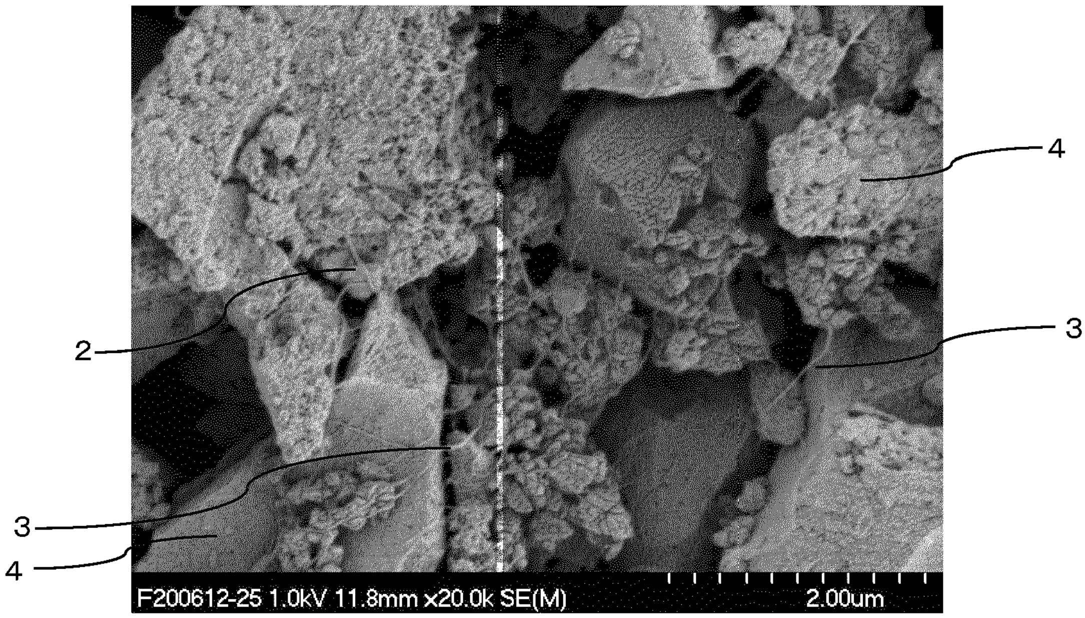
4
2
3
3
4
F200612-25 1.0kV 11.8mm x20.0k SE(M)
2.00um

FIG. 3

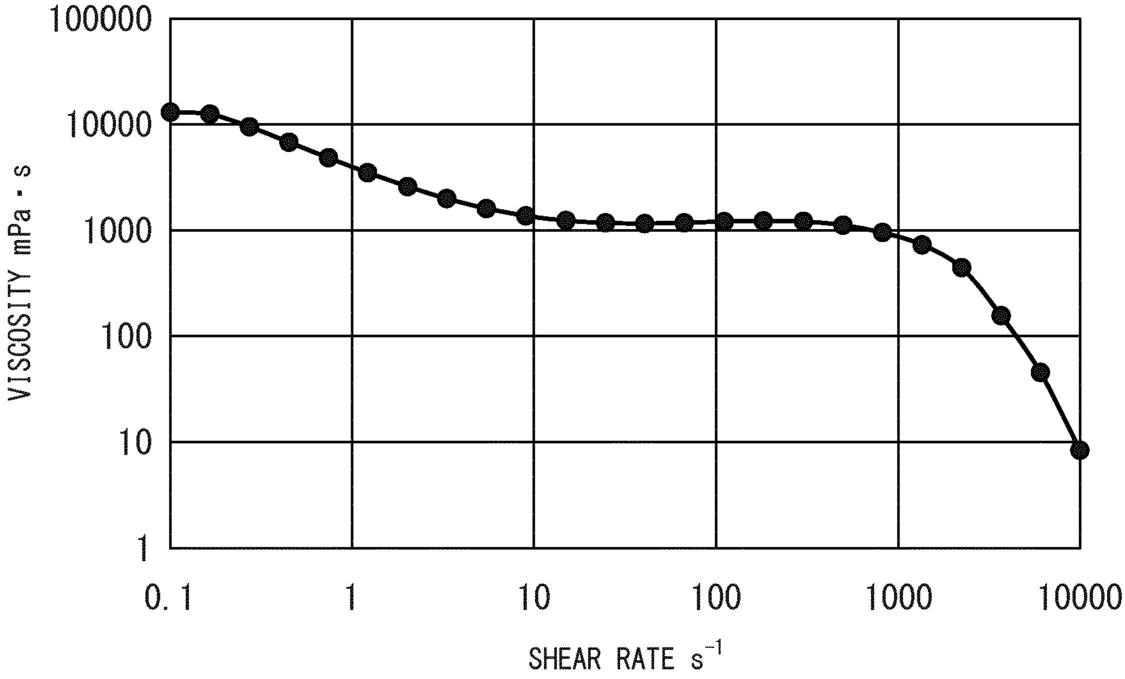
100000
10000
1000
100
10
1
VISCOSITY mPa・s
0. 1
1
10
100
1000
10000
SHEAR RATE s⁻¹

FIG. 4

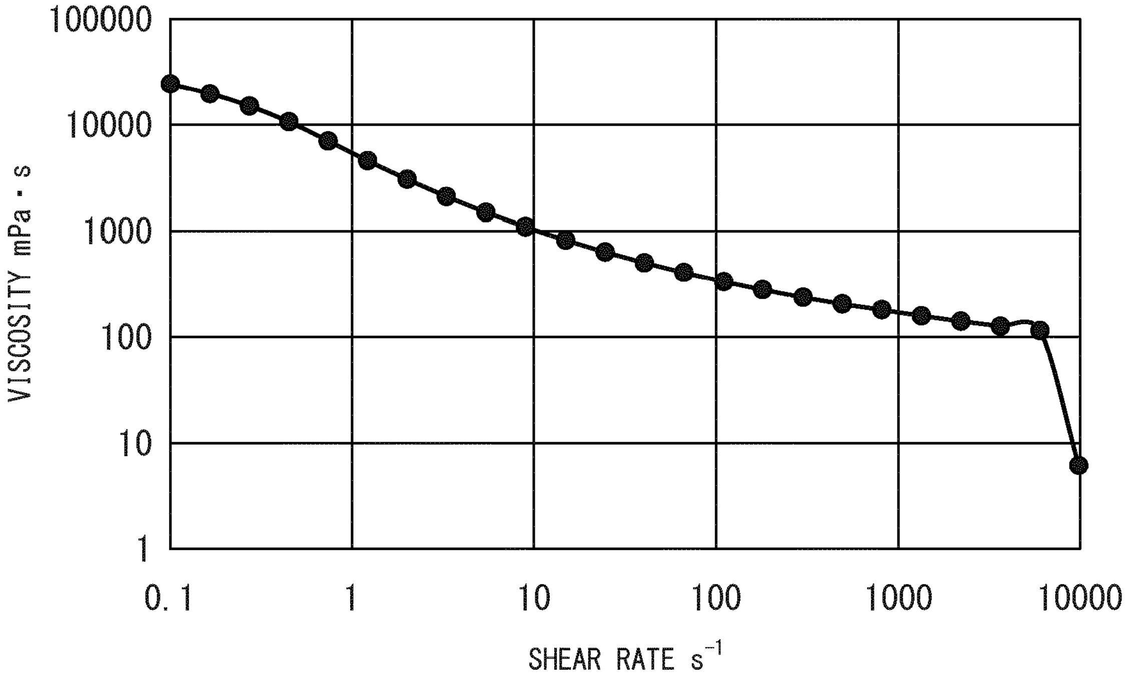
100000
10000
1000
100
10
1
VISCOSITY mPa・s
0. 1
1
10
100
1000
10000
SHEAR RATE s⁻¹

FIG. 5

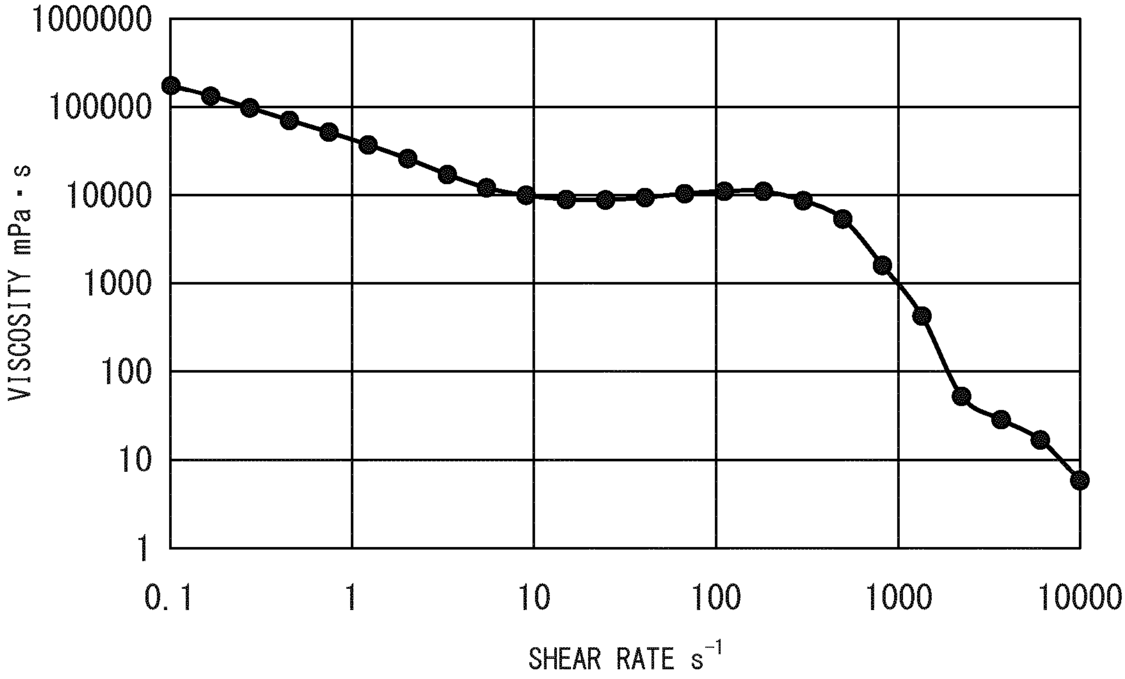
1000000
100000
10000
1000
100
10
1
VISCOSITY mPa・s
0. 1
1
10
100
1000
10000
SHEAR RATE s⁻¹

FIG. 6

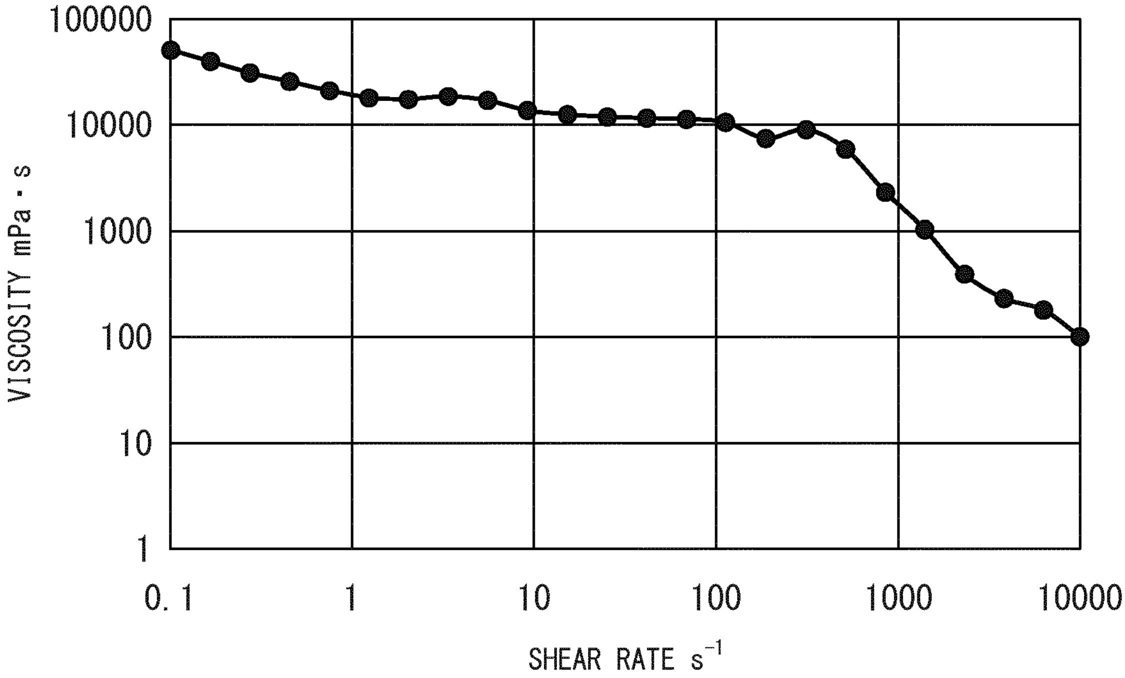
100000
10000
1000
100
10
1
VISCOSITY mPa・s
0. 1
1
10
100
1000
10000
SHEAR RATE s⁻¹

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015156293 A
- WO 2018147080 A
- WO 2017126687 A
- WO 2013187073 A
- WO 201373526 A
- WO 2017038406 A
- WO 2019156090 A
- WO 2021080006 A
- WO 2020129872 A


### Non-patent literature cited in the description


- **E.P. BARRETT** ; **L.G. JOYNER** ; **P. HALENDA**. The Determination of Pore Volume and Area Distributions in Porous Substances. I. Computations from Nitrogen Isotherms. *J. Am. Chem. Soc.*, 1951, vol. 73 (1), 373-380
- **B.C. LIPPENS** ; **J.H. DE BOER**. Studies on Pore Systems in Catalysts. *J. Catalysis*, 1965, vol. 4, 319-323
- **R.S. MIKHAIL** ; **S. BRUNAUER** ; **E.E. BODOR**. Investigations of a Complete Pore Structure Analysis. *J. Colloid Interface Sci.*, 1968, vol. 26, 45-53